(19) Europäisches Patentamt
European Patent Office
Office européen des brevets

(11) EP 3 604 358 A1

(12) EUROPEAN PATENT APPLICATION
published in accordance with Art. 153(4) EPC

(43) Date of publication:
**05.02.2020 Bulletin 2020/06**

(21) Application number: **17903057.2**

(22) Date of filing: **27.06.2017**

(51) Int Cl.:
***C08F 20/00*** *(2006.01)* ***C08F 290/06*** *(2006.01)*
***G01N 19/00*** *(2006.01)*

(86) International application number:
**PCT/JP2017/023605**

(87) International publication number:
**WO 2018/179463 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2017 JP 2017072422**

(71) Applicant: **Osaka Organic Chemical Industry Ltd.**
**Osaka-shi, Osaka 541-0052 (JP)**

(72) Inventors:
- **KOUDA, Mitsuhiro**
**Kashiwara-shi**
**Osaka 582-0020 (JP)**
- **KITANOHARA, Mitsuko**
**Kashiwara-shi**
**Osaka 582-0020 (JP)**
- **TOMIMORI, Yuya**
**Kashiwara-shi**
**Osaka 582-0020 (JP)**
- **MIYAZAWA, Yu**
**Kashiwara-shi**
**Osaka 582-0020 (JP)**

(74) Representative: **Uexküll & Stolberg**
**Partnerschaft von**
**Patent- und Rechtsanwälten mbB**
**Beselerstraße 4**
**22607 Hamburg (DE)**

# (54) (METH)ACRYLIC RESIN AND METHOD FOR CONTROLLING STRAIN THEREOF

(57) The purpose of the present invention is to provide a method for manufacturing a polymer having a desired strain. Provided is a method for manufacturing a polymer having a desired strain, said method comprising: a step for polymerizing one or more kinds of starting monomers by irradiating with ultraviolet rays having such an illuminance as to generate the desired strain; and, if required, a step for measuring the strain of the polymers thus formed and selecting a polymer having the desired strain. In one embodiment, provided is a method for determining the illuminance of ultraviolet rays for manufacturing a polymer having a desired strain.

EP 3 604 358 A1

## Description

[Technical Field]

The present invention relates to an improved manufacturing method of resin (e.g., (meth)acrylic resin). More specifically, the present invention relates to a manufacturing method of resin (e.g., (meth)acrylic resin) with controlled strain by controlling illuminance of exposed light. The present invention relates to obtaining a resin with a low strain by exposure to light with low illuminance.

The present invention also relates to materials with an adjusted strain, such as (meth)acrylic dielectric materials. The present invention also relates to materials, such as (meth)acrylic dielectric materials, that are expected to be used, for example, in an actuator, sensor used in an industrial robot or the like, power generating element, speaker, microphone, noise canceller, transducer, artificial muscle, small pump, medical instrument, or the like.

[Background Art]

(Meth)acrylic resins are used in various materials due to their high transparency/shock resistance, and ease of thermoplastic molding and coloring.

An acryl rubber using an acrylic ester-based polymer with a weight average molecular weight of 700 thousand to 2 million as the primary component has been proposed as an acryl rubber that can be used in dielectric materials or the like (see for example Patent Literature 1). A high voltage can be applied to the acryl rubber. The acryl rubber is considered to have an advantage in that a large amount of displacement can be attained by applying a high voltage. However, the acryl rubber needs a high voltage to be applied to attain a large amount of displacement, so that there is a risk of electrical breakdown.

Patent Literature 2 provides an ultraviolet curable silicone rubber by irradiating low illuminance and low energy radiation, especially ultraviolet rays generated from a UV-LED light source.

Patent Literature 3 discloses a photocurable ink composition exhibiting low PII (low primary irritation index), low viscosity, and excellent photocurability even with low illuminance ultraviolet irradiation.

[Citation List]

[Patent Literature]

[PTL 1] Japanese Laid-Open Publication No. 2008-239670
[PTL 2] Japanese Laid-Open Publication No. 2007-131812
[PTL 3] Japanese Laid-Open Publication No. 2010-209198

[Summary of Invention]

[Solution to Problem]

As a result of diligent study, the inventors have found that a strain can be controlled by controlling the illuminance of exposed ultraviolet rays, and have found that a polymer with a desired strain can be manufactured. The inventors have found that a polymer (e.g., elastomer) with a lower strain can be obtained with less illuminance of exposed light.

The inventors have found a method for determining the illuminance of ultraviolet rays for producing a polymer with a given strain.

To obtain a flexible and highly stretchable acryl elastomer, it is necessary that the elastomer is an ultra-high molecular weight compound. While there are various polymerization methods for obtaining an ultra-high molecular weight compound such as bulk polymerization, emulsion polymerization, and solution polymerization, the manufacturing method of the invention provides a highly stretchable acryl polymer (e.g., elastomer) with a low strain (low hysteresis) and a low Young's modulus.

The present invention also provides a (meth)acrylic dielectric material exhibiting a large amount of displacement when a low voltage is applied instead of applying a high voltage as in conventional acryl rubbers, a (meth) acrylic polymer that can be suitably used in the (meth)acrylic dielectric material and a manufacturing method thereof, and an actuator using the (meth)acrylic dielectric material.

The present invention also provides the following items.

(Item 1) A method of manufacturing a polymer with a desired strain, comprising:

irradiating an ultraviolet ray with an illuminance that results in the desired strain onto, and polymerizing, one or more starting material monomers; and
optionally measuring a strain of generated polymers and selecting a polymer with the desired strain.

(Item 2) The method of item 1, wherein the starting material monomer is a (meth)acryl monomer.
(Item 3) The method of item 1, wherein the starting material monomer is a urethane (meth)acryl monomer.
(Item 4) The method of item 2, wherein the illuminance is 10 $mW/cm^2$ or less.
(Item 5) The method of item 3, wherein the illuminance is 140 $mW/cm^2$ or less.
(Item 6) A method for determining an illuminance of an ultraviolet ray for manufacturing a polymer with a given strain, comprising:

1) providing a starting material monomer, which is a raw material of the polymer;
2) irradiating an ultraviolet ray with a specific illuminance onto, and polymerizing, the starting material monomer to generate the polymer;
3) measuring a strain of the generated polymer;
4) optionally repeating steps 1) to 3); and
5) calculating an illuminance resulting in the desired strain based on a measurement value obtained in 3) and 4).

(Item 7) The method of item 6, comprising measuring a loss tangent (tanδ) of the polymer.
(Item 8) The method of item 7, wherein an illuminance of the irradiated ultraviolet ray is determined by:

i) irradiating an ultraviolet ray with a certain illuminance onto the starting material and polymerizing the starting material to generate a polymer;
ii) measuring a loss tangent (tanδ) of the generated polymer;
iii) determining whether the measured loss tangent (tanδ) is within a desired range; and
if the loss tangent is not within the desired range, repeating steps i) to iii) with an ultraviolet ray having another illuminance.

(Item 9) The method of any one of items 1 to 4, wherein an illuminance of an ultraviolet ray is determined by a relational expression representing a relationship between strains and illuminances, or by the method of any one of items 6 to 8.
(Item 10) A (meth)acrylic polymer prepared by irradiating an ultraviolet ray to polymerize a monomer component comprising a (meth)acrylic monomer represented by formula (I) :

[Chemical Formula 8]

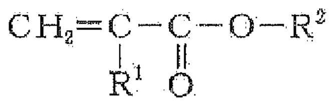

(I)

wherein

$R^1$ is a hydrogen atom or a methyl group, and
$R^2$ is an optionally substituted alkyl group with 1 to 10 carbons or an optionally substituted polyether group with 2 to 20 carbons.

(Item 11) The (meth)acrylic polymer of the preceding item, wherein
$R^1$ is a hydrogen atom or a methyl group, and
$R^2$ represents an alkyl group with 1 to 10 carbons optionally substituted with a hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons, or $-[-(CH_2)_n-O-]_m-R^8$, wherein n is an integer from 1 to 4, m is an integer from 1 to 20, and $R^8$ represents an alkyl group with 1 to 12 carbons, a glycidyl group, an aryl group with 6 to 12 carbons optionally substituted with an alky group with 1 to 10 carbons (the alkyl group with 1 to 10 carbons is optionally substituted with an aryl group with 6 to 12 carbons) and/or an aryl group with 6 to 12 carbons, a monoalkylamino carbonyl group with 1 to 12 carbons of alkyl, a dialkylamino

carbonyl group with 1 to 12 carbons of alkyl, or a residue of a divalent carboxylic acid with 2 to 10 carbons.

(Item 12) The (meth)acrylic polymer of any one of the preceding items, wherein $R^2$ is an alkyl group with 1 to 10 carbons having an alkoxy substituent with 1 to 10 carbons, or a polyether group with 2 to 16 carbons having an alkoxy substituent with 1 to 10 carbons.

(Item 13) The (meth)acrylic polymer of any one of the preceding items, wherein $R^2$ is an alkoxyalkyl group with 1 to 10 carbons.

(Item 14) The (meth)acrylic polymer of any one of the preceding items, wherein $R^2$ is $-[-(CH_2)_n-O-]_m-R^8$, and $R^8$ is an alkyl group with 1 to 12 carbons.

(Item 14-1) The (meth)acrylic polymer of any one of the preceding items, wherein $R^1$ is a hydrogen atom.

(Item 14-2) The (meth)acrylic polymer of any one of the preceding items, wherein $R^1$ is a methyl group.

(Item 14-3) The (meth)acrylic polymer of any one of the preceding items, wherein $R^2$ is an alkyl group with 1 to 10 carbons optionally substituted with a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons.

(Item 14-3) The (meth)acrylic polymer of any one of the preceding items, wherein $R^2$ is an alkyl group with 1 to 10 carbons.

(Item 14-4) The (meth)acrylic polymer of any one of the preceding items, wherein $R^2$ is an alkyl group with 1 to 10 carbons substituted with a hydroxyl group.

(Item 14-5) The (meth)acrylic polymer of any one of the preceding items, wherein $R^2$ is an alkyl group with 1 to 10 carbons substituted with a hydroxyl group and an allyloxy group.

(Item 14-6) The (meth)acrylic polymer of any one of the preceding items, wherein $R^2$ is an alkyl group with 1 to 10 carbons substituted with a halogen atom (F, Cl, Br, I).

(Item 14-7) The (meth)acrylic polymer of any one of the preceding items, wherein $R^2$ is an alkyl group with 1 to 10 carbons substituted with an arylthio group with 6 to 12 carbons.

(Item 14-8) The (meth)acrylic polymer of any one of the preceding items, wherein $R^2$ is an alkyl group with 1 to 10 carbons substituted with aryl with 6 to 12 carbons.

(Item 14-9) The (meth)acrylic polymer of any one of the preceding items, wherein $R^2$ is $-[-(CH_2)_n-O-]_m-R^8$.

(Item 14-10) The (meth)acrylic polymer of any one of the preceding items, wherein n is 1.

(Item 14-11) The (meth)acrylic polymer of any one of the preceding items, wherein n is 2.

(Item 14-12) The (meth)acrylic polymer of any one of the preceding items, wherein n is 3.

(Item 14-13) The (meth) acrylic polymer of any one of the preceding items, wherein n is 4.

(Item 14-14) The (meth) acrylic polymer of any one of the preceding items, wherein m is 1.

(Item 14-15) The (meth) acrylic polymer of any one of the preceding items, wherein m is 2.

(Item 14-16) The (meth) acrylic polymer of any one of the preceding items, wherein m is 3.

(Item 14-17) The (meth) acrylic polymer of any one of the preceding items, wherein m is 4.

(Item 14-18) The (meth) acrylic polymer of any one of the preceding items, wherein $R^8$ is an alkyl group with 1 to 12 carbons.

(Item 14-19) The (meth) acrylic polymer of any one of the preceding items, wherein $R^8$ is a glycidyl group.

(Item 14-20) The (meth) acrylic polymer of any one of the preceding items, wherein $R^8$ is an aryl group with 6 to 12 carbons optionally substituted with an alky group with 1 to 10 carbons (the alkyl group is optionally substituted with an aryl group with 6 to 12 carbons) and/or an aryl group with 6 to 12 carbons.

(Item 14-21) The (meth)acrylic polymer of any one of the preceding items, wherein $R^8$ is an aryl group with 6 to 12 carbons.

(Item 14-22) The (meth)acrylic polymer of any one of the preceding items, wherein $R^8$ is an aryl group with 6 to 12 carbons substituted with an alky group with 1 to 10 carbons.

(Item 14-23) The (meth)acrylic polymer of any one of the preceding items, wherein $R^8$ is an aryl group with 6 to 12 carbons substituted with an alky group with 1 to 10 carbons (the alkyl group is substituted with an aryl group with 6 to 12 carbons).

(Item 14-24) The (meth)acrylic polymer of any one of the preceding items, wherein $R^8$ is a monoalkylamino carbonyl group with 1 to 12 carbons of alkyl, or a dialkylamino carbonyl group with 1 to 12 carbons of alkyl.

(Item 14-25) The (meth)acrylic polymer of any one of the preceding items, wherein $R^8$ is a monoalkylamino carbonyl group with 1 to 12 carbons of alkyl.

(Item 14-26) The (meth) acrylic polymer of any one of the preceding items, wherein $R^8$ is an aryl group with 6 to 12 carbons substituted with an aryl group with 6 to 12 carbons.

(Item 14-27) The (meth)acrylic polymer of any one of the preceding items, wherein $R^2$ is a residue of a divalent carboxylic acid with 2 to 10 carbons.

(Item 15) The (meth) acrylic polymer of any one of the preceding items, wherein the illuminance of the ultraviolet ray is 10 $mW/cm^2$ or less when the (meth) acrylic monomer is alkyl acrylate.

(Item 16) The (meth)acrylic polymer of any one of the preceding items, wherein a loss tangent (tanδ) is 0.15 or less.
(Item 17) The (meth)acrylic polymer of any one of the preceding items, wherein a weight average molecular weight is 2 million or greater.
(Item 18) The (meth) acrylic polymer of any one of the preceding items, wherein a Young's modulus is 0.5 Mpa or less.
(Item 19) The (meth)acrylic polymer of any one of the preceding items, wherein the polymer is an elastomer.
(Item 20) A (meth)acrylic polymer prepared by irradiating an ultraviolet ray to polymerize a monomer component comprising a cyclic ether group-containing (meth)acrylic monomer represented by formula (II):

[Chemical Formula 9]

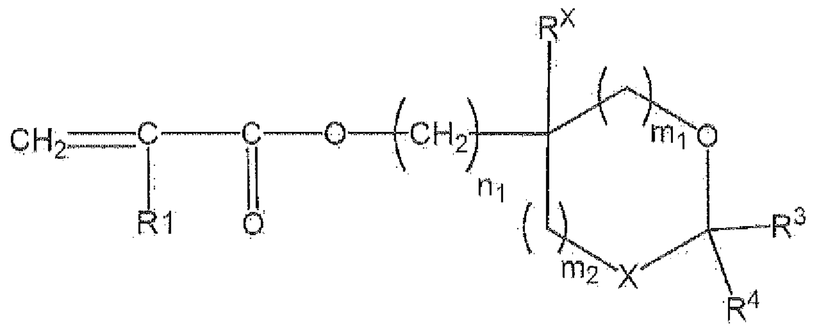

(II)

wherein

$R^1$ is a hydrogen atom or a methyl group,
$R^3$ and $R^4$ are each independently a hydrogen atom or an optionally substituted alkyl group with 1 to 4 carbons, or $R^3$ and $R^4$ form an optionally substituted carbon ring with 3 to 10 carbons together with a carbon atom to which $R^3$ and $R^4$ bind,
$R^X$ is hydrogen or an optionally substituted alkyl group with 1 to 10 carbons,
X is a carbon atom, an oxygen atom, or non-existent,
$n_1$ represents an integer from 1 to 4,
$m_1$ represents an integer from 0 to 1, and
$m_2$ represents an integer from 0 to 1.

(Item 21) The (meth)acrylic polymer of the preceding item, wherein $R^3$ and $R^4$ are each independently a hydrogen atom or an alkyl group with 1 to 4 carbons optionally substituted with alkoxy with 1 to 10 carbons, or $R^3$ and $R^4$ form a carbon ring with 3 to 10 carbons optionally substituted with alkoxy with 1 to 10 carbons together with a carbon atom to which $R^3$ and $R^4$ bind.
(Item 22) The (meth)acrylic polymer of any one of the preceding items, wherein $R^x$ is hydrogen or an alkyl group with 1 to 10 carbons optionally substituted with alkoxy with 1 to 10 carbons.
(Item 22-1) The (meth)acrylic polymer of any one of the preceding items, wherein $R^1$ is a hydrogen atom.
(Item 22-2) The (meth)acrylic polymer of any one of the preceding items, wherein $R^1$ is a methyl group.
(Item 22-3) The (meth)acrylic polymer of any one of the preceding items, wherein $R^3$ and $R^4$ are both hydrogen atoms.
(Item 22-4) The (meth) acrylic polymer of any one of the preceding items, wherein $R^3$ and $R^4$ are each independently an alkyl group with 1 to 4 carbons.
(Item 22-5) The (meth)acrylic polymer of any one of the preceding items, wherein $R^3$ and $R^4$ form a carbon ring with 3 to 10 carbons together with a carbon atom to which $R^3$ and $R^4$ bind.
(Item 22-6) The (meth)acrylic polymer of any one of the preceding items, wherein $R^x$ is hydrogen.
(Item 22-7) The (meth)acrylic polymer of any one of the preceding items, wherein $R^x$ is an alkyl group with 1 to 10 carbons.
(Item 22-8) The (meth) acrylic polymer of any one of the preceding items, wherein $m_1$ is 1, $m_2$ is 0, and X is a carbon atom.
(Item 22-9) The (meth)acrylic polymer of any one of the preceding items, wherein $m_1$ is 0, $m_2$ is 1, and X is a carbon atom.
(Item 22-10) The (meth) acrylic polymer of any one of the preceding items, wherein $m_1$ is 1, $m_2$ is 0, and X is an oxygen atom.
(Item 22-11) The (meth)acrylic polymer of any one of the preceding items, wherein $m_1$ is 1, $m_2$ is 1, and X is an

oxygen atom.

(Item 23) The (meth)acrylic polymer of any one of the preceding items, prepared by irradiating an ultraviolet ray to polymerize a monomer component comprising a cyclic ether group-containing (meth)acrylic monomer represented by formula (IIA):

[Chemical Formula 10]

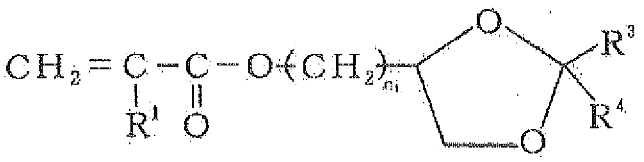

(IIA)

wherein

$R^1$ is a hydrogen atom or a methyl group, $R^3$ and $R^4$ are each independently a hydrogen atom or an alkyl group with 1 to 4 carbons, and $n_1$ represents an integer from 1 to 4.

(Item 24) The (meth)acrylic polymer of any one of the preceding items, wherein a loss tangent (tanδ) is 0.4 or less.

(Item 25) The (meth)acrylic polymer of any one of the preceding items, wherein a Young's modulus is 0.5 Mpa or less.

(Item 26) The (meth)acrylic polymer of any one of the preceding items, wherein the polymer is an elastomer.

(Item 27) A (meth)acrylic polymer prepared by irradiating an ultraviolet ray to polymerize a monomer component comprising a urethane (meth)acryl monomer obtained by reacting an optionally substituted polyol with a diisocyanate monomer having formula (III):

[Chemical Formula 11]

$$OCN\text{-}R^6\text{-}NCO \quad \text{(III)}$$

wherein $R^6$ represents an optionally substituted divalent aliphatic group, an optionally substituted divalent aromatic group, or an optionally substituted divalent alicyclic group, and then reacting a (meth)acrylate based monomer having a hydroxyl group having formula (IV)

[Chemical Formula 12]

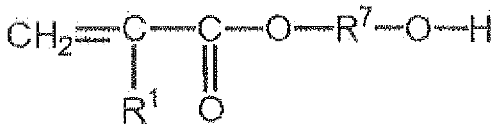

(IV)

wherein $R^1$ is a hydrogen atom or a methyl group, and $R^7$ is an optionally substituted alkylene group with 1 to 10 carbons.

(Item 27-1) The (meth)acrylic polymer of any one of the preceding items, wherein $R^6$ is a divalent aliphatic group with 3 to 12 carbons.

(Item 27-2) The (meth)acrylic polymer of any one of the preceding items, wherein $R^6$ is a divalent aromatic group with 6 to 18 carbons.

(Item 27-3) The (meth)acrylic polymer of any one of the preceding items, wherein $R^6$ is a divalent alicyclic group with 3 to 12 carbons.

(Item 27-4) The (meth)acrylic polymer of any one of the preceding items, wherein $R^1$ is a hydrogen atom.

(Item 27-5) The (meth)acrylic polymer of any one of the preceding items, wherein $R^1$ is a methyl group.

(Item 28) The (meth)acrylic polymer of any one of the preceding items, wherein the polyol is selected from the group consisting of a polyether polyol, a polyester polyol, and a polycarbonate polyol.

(Item 29) A (meth)acrylic polymer prepared by irradiating an ultraviolet ray to polymerize a monomer component comprising a urethane (meth)acryl monomer represented by formula (V):

[Chemical Formula 13]

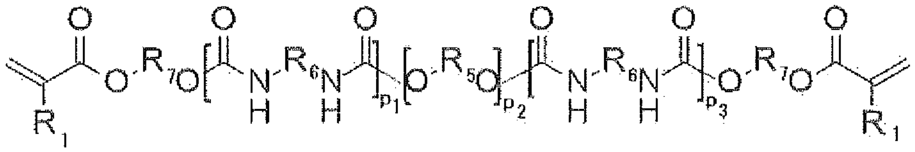

(V)

wherein $R^1$ is a hydrogen atom or a methyl group, $R^5$ is a residue generated by removing two hydroxyl groups from an optionally substituted polyol, $R^6$ represents an optionally substituted divalent aliphatic group, an optionally substituted divalent aromatic group, or an optionally substituted divalent alicyclic group, $R^7$ is an optionally substituted alkylene group with 1 to 10 carbons, and $p_1$, $p_2$, and $p_3$ are each independently an integer from 1 to 10.

(Item 29-1) The (meth)acrylic polymer of any one of the preceding items, wherein $p_1 = p_2 = p_3 = 1$ in formula (V), which is formula (V'):

[Chemical Formula 13A]

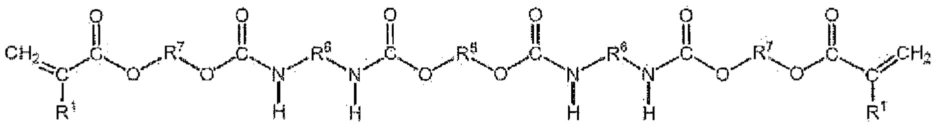

(V')

(Item 30) The (meth) acrylic polymer of any one of the preceding items, wherein $R^5$ is a residue generated by removing two hydroxyl groups from a polyol selected from the group consisting of a polyether polyol, a polyester polyol, and a polycarbonate polyol.

(Item 30-1) The (meth)acrylic polymer of any one of the preceding items, wherein $R^6$ is a divalent aliphatic group with 3 to 12 carbons.

(Item 30-2) The (meth) acrylic polymer of any one of the preceding items, wherein $R^6$ is a divalent aromatic group with 6 to 18 carbons.

(Item 30-3) The (meth)acrylic polymer of any one of the preceding items, wherein $R^6$ is a divalent alicyclic group with 3 to 12 carbons.

(Item 31) The (meth)acrylic polymer of any one of the preceding items, wherein the monomer component further comprises a (meth)acrylic monomer represented by formula (I):

[Chemical Formula 14]

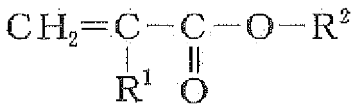

(I)

wherein

$R^1$ is a hydrogen atom or a methyl group, and
$R^2$ is an optionally substituted alkyl group with 1 to 10 carbons or an optionally substituted polyether group with 2 to 20 carbons.

(Item 32) The (meth)acrylic polymer of the preceding item, wherein
$R^1$ is a hydrogen atom or a methyl group, and
$R^2$ represents an alkyl group with 1 to 10 carbons optionally substituted with a hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons, or $-[-(CH_2)_n-O-]_m-R^8$, wherein n is an integer from 1 to 4, m is an integer from 1 to 20, and $R^8$ represents an alkyl group with 1 to 12 carbons, a glycidyl group, an aryl group with 6 to 12 carbons optionally substituted with an alky group with 1 to 10 carbons (the alkyl group with 1 to 10 carbons is optionally substituted with an aryl group with 6 to 12 carbons) and/or an aryl group with 6 to 12 carbons, a monoalkylamino carbonyl group with 1 to 12 carbons of alkyl, a dialkylamino carbonyl group with 1 to 12 carbons of alkyl, or a residue of a divalent carboxylic acid with 2 to 10 carbons.

(Item 33) The (meth)acrylic polymer of any one of the preceding items, wherein $R^2$ is an alkyl group with 1 to 10 carbons having an alkoxy substituent with 1 to 10 carbons, or a polyether group with 2 to 16 carbons having an alkoxy substituent with 1 to 10 carbons.

(Item 34) The (meth)acrylic polymer of any one of the preceding items, wherein $R^2$ is an alkoxyalkyl group with 1 to 10 carbons.

(Item 35) The (meth)acrylic polymer of any one of the preceding items, wherein $R^2$ is $-[-(CH_2)_n-O-]_m-R^8$, and $R^8$ is an alkyl group with 1 to 12 carbons.

(Item 35-1) The (meth)acrylic polymer of any one of the preceding items, wherein $R^1$ is a hydrogen atom.

(Item 35-2) The (meth) acrylic polymer of any one of the preceding items, wherein $R^1$ is a methyl group.

(Item 35-3) The (meth)acrylic polymer of any one of the preceding items, wherein $R^2$ is an alkyl group with 1 to 10 carbons optionally substituted with a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons.

(Item 35-3) The (meth)acrylic polymer of any one of the preceding items, wherein $R^2$ is an alkyl group with 1 to 10 carbons.

(Item 35-4) The (meth)acrylic polymer of any one of the preceding items, wherein $R^2$ is an alkyl group with 1 to 10 carbons substituted with a hydroxyl group.

(Item 35-5) The (meth)acrylic polymer of any one of the preceding items, wherein $R^2$ is an alkyl group with 1 to 10 carbons substituted with a hydroxyl group and an allyloxy group.

(Item 35-6) The (meth)acrylic polymer of any one of the preceding items, wherein $R^2$ is an alkyl group with 1 to 10 carbons substituted with a halogen atom (F, Cl, Br, I).

(Item 35-7) The (meth)acrylic polymer of any one of the preceding items, wherein $R^2$ is an alkyl group with 1 to 10 carbons substituted with an arylthio group with 6 to 12 carbons.

(Item 35-8) The (meth)acrylic polymer of any one of the preceding items, wherein $R^2$ is an alkyl group with 1 to 10 carbons substituted with aryl with 6 to 12 carbons.

(Item 35-9) The (meth)acrylic polymer of any one of the preceding items, wherein $R^2$ is $-[-(CH_2)_n-O-]_{m-}R^8$.

(Item 35-10) The (meth)acrylic polymer of any one of the preceding items, wherein n is 1.

(Item 35-11) The (meth)acrylic polymer of any one of the preceding items, wherein n is 2.

(Item 35-12) The (meth)acrylic polymer of any one of the preceding items, wherein n is 3.

(Item 35-13) The (meth)acrylic polymer of any one of the preceding items, wherein n is 4.

(Item 35-14) The (meth)acrylic polymer of any one of the preceding items, wherein m is 1.

(Item 35-15) The (meth)acrylic polymer of any one of the preceding items, wherein m is 2.

(Item 35-16) The (meth)acrylic polymer of any one of the preceding items, wherein m is 3.

(Item 35-17) The (meth)acrylic polymer of any one of the preceding items, wherein m is 4.

(Item 35-18) The (meth)acrylic polymer of any one of the preceding items, wherein $R^8$ is an alkyl group with 1 to 12 carbons.

(Item 35-19) The (meth)acrylic polymer of any one of the preceding items, wherein $R^8$ is a glycidyl group.

(Item 35-20) The (meth)acrylic polymer of any one of the preceding items, wherein $R^8$ is an aryl group with 6 to 12 carbons optionally substituted with an alky group with 1 to 10 carbons (the alkyl group is optionally substituted with an aryl group with 6 to 12 carbons) and/or an aryl group with 6 to 12 carbons.

(Item 35-21) The (meth)acrylic polymer of any one of the preceding items, wherein $R^8$ is an aryl group with 6 to 12 carbons.

(Item 35-22) The (meth)acrylic polymer of any one of the preceding items, wherein $R^8$ is an aryl group with 6 to 12 carbons substituted with an alky group with 1 to 10 carbons.

(Item 35-23) The (meth)acrylic polymer of any one of the preceding items, wherein $R^8$ is an aryl group with 6 to 12 carbons substituted with an alky group with 1 to 10 carbons (the alkyl group is substituted with an aryl group with 6 to 12 carbons).

(Item 35-24) The (meth)acrylic polymer of any one of the preceding items, wherein $R^8$ is a monoalkylamino carbonyl group with 1 to 12 carbons of alkyl, or a dialkylamino carbonyl group with 1 to 12 carbons of alkyl.

(Item 35-25) The (meth)acrylic polymer of any one of the preceding items, wherein $R^8$ is a monoalkylamino carbonyl group with 1 to 12 carbons of alkyl.

(Item 35-26) The (meth)acrylic polymer of any one of the preceding items, wherein $R^8$ is an aryl group with 6 to 12 carbons substituted with an aryl group with 6 to 12 carbons.

(Item 35-27) The (meth)acrylic polymer of any one of the preceding items, wherein $R^2$ is a residue of a divalent carboxylic acid with 2 to 10 carbons.

(Item 36) The (meth)acrylic polymer of any one of the preceding items, wherein a loss tangent (tan$\delta$) is 0.2 or less.

(Item 37) The (meth) acrylic polymer of any one of the preceding items, wherein a Young's modulus is 1.0 Mpa or less.

(Item 38) The (meth)acrylic polymer of any one of the preceding items, wherein the polymer is an elastomer.

(Item 39) The (meth)acrylic polymer of any one of the preceding items, wherein the polymer is a dielectric.
(Item 40) The (meth)acrylic polymer of any one of the preceding items, wherein relative permittivity of the polymer is 1 to 11.
(Item 41) The (meth) acrylic polymer of any one of the preceding items, wherein relative permittivity of the polymer is 3.5 to 10.3.
(Item 42) The (meth)acrylic polymer of any one of the preceding items, wherein relative permittivity of the polymer is 4.2 to 10.2.
(Item 43) The (meth) acrylic polymer of any one of the preceding items, wherein relative permittivity of the polymer is 4.3 to 8.2.
(Item 44) An electronic material, a medical material, a healthcare material, a life science material, or a robot material characterized by comprising the polymer of any one of the preceding items.
(Item 45) An actuator characterized by comprising the polymer of any one of the preceding items.

The present invention is intended so that one or more of the aforementioned features can be provided not only as the explicitly described combinations, but also as other combinations thereof. Additional embodiments and advantages of the invention are recognized by those skilled in the art by reading and understanding the following detailed description as needed.

[Advantageous Effects of Invention]

The present invention provides a technology of manufacturing a polymer having a desired strain, and a polymer (e.g., elastomer) having a desired strain.

The present invention provides a material exhibiting a large amount of displacement when a low voltage is applied such as a (meth)acrylic dielectric material, an elastomer that can be suitably used in said material such as a (meth)acrylic elastomer and a manufacturing method thereof, and an actuator using said material such as a (meth)acrylic dielectric material.

The present invention provides a dielectric material exhibiting a large amount of displacement when a low voltage is applied instead of applying a high voltage such as the acryl rubber described above, which can be used in applications such as an actuator, sensor used in an industrial robot or the like, power generating element, speaker, microphone, noise canceller, transducer, artificial muscle, small pump, medical instrument, or the like.

[Brief Description of Drawings]

[Figure 1] Figure 1 is a diagram for explaining the material properties of the invention.
[Figure 2] Figure 2 is a schematic plain view depicting an embodiment of the actuator of the invention.
[Figure 3] Figure 3 is a schematic cross-sectional view at the portion A-A of the actuator depicted in Figure 2.
[Figure 4] Figure 4 is a graph showing the rate of change in the amount of displacement of an actuator due to application of a voltage on the (meth)acrylic dielectric materials obtained in Example 5, Example 6, Example 7, and Comparative Example 1 and IAA (isoamyl acrylate), AIB (isobutyl acrylate), and PhSEA (phenylthioethyl acrylate).
[Figure 5] Figure 5 is a graph showing the responsiveness of Examples 5 to 7 and Comparative Example 1.

[Description of Embodiments]

The present invention is described hereinafter while showing the best mode of the invention. Throughout the entire specification, a singular expression should be understood as encompassing the concept thereof in plural form, unless specifically noted otherwise. Thus, singular articles (e.g., "a", "an", "the", and the like in the case of English) should also be understood as encompassing the concept thereof in plural form, unless specifically noted otherwise. Further, the terms used herein should be understood to be used in the meaning that is commonly used in the art, unless specifically noted otherwise. Thus, unless defined otherwise, all terminologies and scientific technical terms that are used herein have the same meaning as the general understanding of those skilled in the art to which the present invention pertains. In case of a contradiction, the present specification (including the definitions) takes precedence.

[1] Definitions of the terms

(1-1) "Strain"

As used herein, strain refers to a looped state in a graph showing the relationship between stress and elongation in a tensile test, such as Figure **1.** A low strain indicates that the loop in the graph shown in Figure 1 is small, and a material is not deformed. For example, a loss tangent (tanδ) would have a low value, such as 0.

(1-2) "ultraviolet ray"

An ultraviolet ray refers to an electromagnetic wave with a shorter wavelength than visible light but longer than X-rays. The upper limit of the short wavelength end of visible light is 400 nm. Ultraviolet rays can be defined as electromagnetic waves with an equal or less wavelength. The lower limit wavelength of ultraviolet rays is about 10 nm, and an electromagnetic wave with a longer wavelength is understood to be within the scope of ultraviolet rays. The wavelength of ultraviolet rays used in the present invention can be any wavelength. A suitable wavelength can be selected depending on the objective. For example, ultraviolet rays with any wavelength can be used, as long as an initial effect can be attained with respect to a monomer in the present invention. Typically, ultraviolet rays have a wavelength that can be irradiated with a light source used in the Examples. Specifically, a light source of about 150 nm to 400 nm is used, which is preferably 300 nm to 400 nm.

The preferred illuminance of ultraviolet rays used in the invention varies by the starting material. An ultraviolet ray irradiation apparatus is not particularly limited. Examples thereof include low pressure mercury lamps, medium pressure mercury lamps, high pressure mercury lamps, ultra-high pressure mercury lamps, metal halide lamps, black light lamps, electrodeless UV lamps, short-arc lamps, LEDs, and the like. While the light source of ultraviolet rays is not particularly limited, it is preferable to use the same light source when calculating a relational expression of illuminance in relation to strain for a starting material of a specific polymer, because different light sources can have different ultraviolet ray properties or the like, which can affect the relationship between illuminance and strain. However, the category of ultraviolet rays is the same, so that a relational expression calculated with another light source can also be used when using another light source. Since the relational expression is roughly appropriate, the solution thereof can be used as an illuminance that results in a specific strain for the purpose of the invention.

(1-3) "Loss tangent (tanδ)"

Loss tangent (tanδ) = loss modulus/storage modulus. This is an indicator of elasticity-viscosity. A lower value indicates elasticity, i.e., low strain. It was found that adjustment of illuminance upon curing can adjust the loss tangent of the resulting polymer in the present invention.

(1-4) "Young’s modulus"

Young’s modulus is a proportionality constant of strain and stress in the same axial direction in an elasticity range where Hooke’s law is valid. This is also known as longitudinal elastic modulus. A low Young’s modulus indicates that the slope of the graph shown in Figure **1** is low. It was found that adjustment illuminance upon curing can adjust the Young’s modulus of the resulting polymer in the present invention.

(1-5) "Percent elongation"

Percent elongation is represented by (length of elongated portion of material upon rupture of the material (mm))/(length before elongation (mm)) $\times$ 100 (%).

(1-6) "(Meth)acryl" and "(meth)acrylic"

As used herein, "(meth)acrylic" (or (meth)acryl based) as broadly defined refers to a group comprising "acryl" or "methacryl", which also encompasses "urethane (meth)acryl". "(Meth)acrylate based" means including "acrylate" or "methacrylate", which also encompasses "urethane (meth)acrylate". However, as used herein, "(meth)acryl", which is a term without "-ic" (or based), is used narrowly, referring to unsubstituted acryl or methacryl. In such a case, "urethane (meth)acryl" is excluded.

(1-7) "Polymer"

A polymer refers to a compound made by polymerizing a plurality of monomers. In such a case, the monomers are "starting material(s)", and the polymer is the product (final product).

(1-8) "Elastomer"

An elastomer is a collective term for materials with rubber-like elasticity near normal temperatures. Elastomers are generally comprised of polymers. Elastomers are characterized by low elasticity, high elongation, and high restorability.

(1-9) "Halogen atom"

Examples of halogen atoms include a fluorine atom, chlorine atom, bromine atom, iodine atom, and the like. The number of halogen atoms contained in an alkyl group varies depending on the number of carbons of the alkyl group or the like, so that the number cannot be generalized. Thus, the number is preferably adjusted as appropriate to the extent that the objective of the invention is not obstructed.

(1-10) "Alkyl"

As used herein, "alkyl" refers to a monovalent group resulting from losing a hydrogen atom from an aliphatic hydrocarbon (alkane) such as methane, ethane, and propane. Alkyl is generally represented as $C_nH_{2n+1}$-, wherein n is a positive integer. Alkyl can be straight or branched.

Examples of alkyl groups with 1 to 10 carbons include a methyl group, ethyl group, n-propyl group, isopropyl group, n-butyl group, isobutyl group, tert-butyl group, sec-butyl group, n-pentyl group, isoamyl group, n-hexyl group, isohexyl group, cyclohexyl group, n-octyl group, and the like, but the present invention is not limited thereto. As used herein, if the number of carbons is indicated, any combination within the defined numerical range can be selected.

Examples of alkyl group with 1 to 10 carbons having a hydroxyl group include a hydroxymethyl group, hydroxyethyl group, hydroxy-n-propyl group, hydroxyisopropyl group, hydroxy-n-butyl group, hydroxyisobutyl group, hydroxy-tert-butyl group, and the like, but the present invention is not limited thereto.

(1-11) "Halogenated alkyl"

Halogenated alkyl refers to an alkyl group having a halogen atom. Examples thereof include fluoroalkyl, chloroalkyl, bromoalkyl, iodoalkyl, and the like. Examples of an alkyl group with 1 to 10 carbons having a halogen atom include a trifluoromethyl group, trifluoroethyl group, trifluoro-n-propyl group, trifluoroisopropyl group, trifluoro-n-butyl group, trifluoroisobutyl group, trifluoro-tert-butyl group, and the like, but the present invention is not limited thereto.

(1-12) "Alkenyl"

Alkenyl refers to a straight or branched unsaturated hydrocarbon group comprising a double bond. Specific examples of "alkenyl group" include a vinyl group, 1-propenyl group, 2-propenyl group (allyl group), 2-methyl-2-propenyl group, 2-butenyl group, 1,3-butanedienyl group, 3-methyl-2-butenyl group, 2-pentenyl group, 2-hexenyl group, 1,3,5-hexanetrienyl group, 2-heptenyl group, 2-oxtenyl group, 2-nonenyl group, 2-decenyl group, and the like.

(1-13) "Alkynyl"

Alkynyl refers to a straight or branched unsaturated hydrocarbon group comprising a triple bond. Specific examples of "alkynyl" group include ethynyl group, prop-2-yn-1-yl group (propargyl group), and the like.

(1-14) "Allyl"

Allyl refers to a monovalent substituent represented by the structural formula $CH_2$=CH-$CH_2$-. Allyloxy group refers to a $CH_2$=CH-$CH_2$-O- group.

(1-15) "Aryl"

Aryl refers to a group resulting from one hydrogen atom bound to a ring of an aromatic hydrocarbon leaving.

A phenyl group ($C_6H_5$-) is derived from benzene, a tolyl group ($CH_3C_6H_4$-) is derived from toluene, a xylyl group ($(CH_3)_2C_6H_3$-) is derived from xylene, and a naphthyl group ($C_{10}H_8$-) is derived from naphthalene. Examples of the number of carbons include 6 to 12. Arylthio group refers to an aryl-S-group. Examples thereof include phenyl-S-groups and the like.

(1-16) "Cycloalkyl group"

As used herein, a "cycloalkyl group" refers to a monocyclic or polycyclic saturated hydrocarbon group, including those with a cross-linked structure. For example, "$C_{3-12}$ cycloalkyl group" refers to a cyclic alkyl group with 3 to 12 carbon atoms. Specific examples, for "$C_{6-12}$ cycloalkyl group", include a cyclohexyl group, cycloheptyl group, cyclooctyl group, adamantyl group, isobornyl group, and the like.

(1-17) "Cycloalkenyl group"

As used herein, a "cycloalkenyl group" refers to a monocyclic or polycyclic unsaturated hydrocarbon group comprising a double bond, including those with a cross-linked structure. Examples thereof include the aforementioned "cycloalkyl group" with one or more carbon-carbon bonds that are double bonds. Examples thereof include a 1-cyclohexenyl group, 2-cyclohexenyl group, 3-cyclohexenyl group, and the like.

(1-18) "Cycloalkynyl group"

As used herein, a "cycloalkynyl group" refers to a monocyclic or polycyclic unsaturated hydrocarbon group comprising a triple bond, including those with a cross-linked structure. Examples thereof include the aforementioned "cycloalkyl group" with one or more carbon-carbon bonds that are triple bonds. Examples thereof include cyclooctynyl groups and the like.

(1-19) "Heterocycloalkyl group"

As used herein, a "heterocycloalkyl group" refers to a monocyclic or polycyclic saturated hydrocarbon group comprising a heteroatom, including those with a cross-linked structure. Examples of the heteroatom include oxygen, nitrogen, sulfur, and the like. Examples thereof include a a pyrrolidine group, tetrahydrofuran group, tetrahydrothiophene group, piperidine group, tetrahydropyran group, tetrahydrothiopyran group, azepane group, oxepane group, thiepane group, morpholine group, dioxolane group, and dioxane group. For example, a "$C_{3-12}$ heterocycloalkyl group" refers to a cyclic alkyl group with 3 to 12 carbon atoms having one or more heteroatoms. Specific examples, for "$C_{6-12}$ heterocycloalkyl group", include a heterocyclohexyl group, heterocycloheptyl group, heterocyclooctyl group, and the like.

(1-20) "Heterocycloalkenyl group"

As used herein, a "heterocycloalkenyl group" refers to a monocyclic or polycyclic unsaturated hydrocarbon group comprising a double bond, comprising a heteroatom, including those with a cross-linked structure. Examples thereof include the aforementioned "heterocycloalkyl group" with one or more carbon-carbon bonds that are double bonds. Examples thereof include a 1-heterocyclohexenyl group, 2-heterocyclohexenyl group, 3-heterocyclohexenyl group, and the like.

(1-21) "Heterocycloalkynyl group"

As used herein, a "heterocycloalkynyl group" refers to a monocyclic or polycyclic unsaturated hydrocarbon group comprising a triple bond, comprising a heteroatom, including those with a cross-linked structure. Examples thereof include the aforementioned "heterocycloalkyl group" with one or more carbon-carbon bonds that are triple bonds. Examples thereof include a heterocyclooctynyl group and the like.

(1-22) "Glycidyl"

Glycidyl refers to a group in which epoxide is bound to a $-CH_2$ group, i.e.,

[Chemical Formula 15]

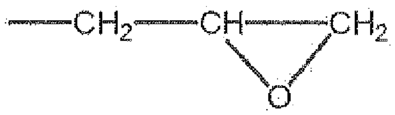

(1-23) "Hydroxyl group"

Hydroxyl group refers to an -OH group.

(1-24) "Carboxylic acid group"

Carboxylic acid group refers to a -COOH group.

(1-25) "Cyano group"

Cyano group refers to a -CN group.

(1-26) "Multivalent carboxylic acid (polycarboxylic acid)"

As used herein, multivalent carboxylic acid (polycarboxylic acid) refers to a carboxylic acid with two or more carboxylic acid groups (-COOH groups) within the same molecule. Examples of the multivalent carboxylic acid include oxalic acid, malonic acid, succinic acid, glutaric acid, adipic acid, pimelic acid, suberic acid, sebacic acid, phthalic acid, terephthalic acid, isophthalic acid, and the like, but the present invention is not limited thereto. "Divalent carboxylic acid (dicarboxylic acid)" refers to a carboxylic acid with two carboxylic acid groups (-COOH groups) within the same molecule. The number of carbons can be 2 to 10, including a carbonyl moiety of a carboxylic acid.

(1-27) "Alkoxyalkyl"

As used herein, "alkoxyalkyl" refers to alkyl having a substitution with an alkoxy group. As used herein, "alkoxy" refers to a monovalent group resulting from losing a hydrogen atom of a hydroxy group of alcohols, and is generally represented by $C_nH_{2n+1}O$-, wherein n is an integer that is 1 or greater.
Examples of an alkoxyalkyl group with 2 to 12 carbons include alkoxyalkyl groups having alkoxy groups with 1 to 6 carbons and an alkyl group with 1 to 6 carbons such as a methoxyethyl group, ethoxyethyl group, methoxybutyl group, and the like, but the present invention is not limited thereto.
Examples of an alkoxyalkyl group with 2 to 12 carbons having a hydroxyl group include alkoxyalkyl groups having hydroalkoxy groups with 1 to 6 carbons and an alkyl group with 1 to 6 carbons such as a hydroxymethoxyethyl group, hydroxyethoxyethyl group, hydroxymethoxybutyl group, and the like, but the present invention is not limited thereto.

(1-28) "Isocyanate group"

Isocyanate group refers to an -N=C=O group.

(1-29) "Monoalkylamino group"

Monoalkylamino group refers to a secondary amino group having a substitution with one alkyl group (-NH-alkyl group). Examples thereof include a methylamino group, ethylamino group, n-propylamino group, iso-propylamino group, n-butylamino group, iso-butylamino group, tert-butylamino group, and the like.

(1-30) "Dialkylamino group"

Dialkylamino group refers to a tertiary amino group having substitutions with two alkyl groups (-N-$(alkyl)_2$ group). The two alkyl groups may be the same or different. Examples thereof include a dimethylamino group, diethylamino group, di-n-propylamino group, diiso-propylamino group, di-n-butylamino group, diiso-butylamino group, ditert-butylamino group, and the like.

(1-31) "Monoarylamino group"

Monoarylamino group refers to a secondary amino group having a substitution with one aryl group (-NH-aryl group). Examples thereof include a phenylamino group and the like.

(1-32) "Diarylamino group"

Diarylamino group refers to a tertiary amino group having substitutions with two aryl groups ($-N-(aryl)_2$ group). The two aryl groups may be the same or different. Examples thereof include a diphenylamino group and the like.

(1-33) "Alkylsulfonyl group"

Alkylsulfonyl group refers to a sulfonyl group having a substitution with an alkyl group ($-SO_2$-alkyl group). Examples thereof include a methylsulfonyl group, ethylsulfonyl group, n-propylsulfonyl group, isopropylsulfonyl group, and the like.

(1-34) "Arylsulfonyl group"

Arylsulfonyl group refers to a sulfonyl group having a substitution with an aryl group ($-SO_2$-aryl group). Examples thereof include a phenylsulfonyl group and the like.

(1-35) "Alkylcarbonyl group"

Alkylcarbonyl group refers to a carbonyl group having a substitution an alkyl group (-C(O)-alkyl group). Examples thereof include a methylcarbonyl group, ethylcarbonyl group, n-propylcarbonyl group, iso-propylcarbonyl group, n-butylcarbonyl group, iso-butylcarbonyl group, tert-butylcarbonyl group, and the like.

(1-36) "Arylcarbonyl group"

Arylcarbonyl group refers to a carbonyl group having a substitution with an aryl group (-C(O)-aryl group). Examples thereof include a phenylcarbonyl group and the like.

(1-37) "Alkoxycabonyl group"

Alkoxycabonyl group refers to a carbonyl group having a substitution with an alkoxy group (-C(O)-O-alkyl group). Examples thereof include a methoxycarbonyl group, ethoxycarbonyl group, n-propylcarbonyl group, iso-propylcarbonyl group, and the like.

(1-38) "Monoalkylaminocarbonyl group"

Monoalkylaminocarbonyl group refers to a carbonyl group having a substitution with a secondary amino group having a substitution with an alkyl group (-C(O)-NH-alkyl group). Examples thereof include a methylaminocarbonyl group, ethylaminocarbonyl group, n-propylaminocarbonyl group, isopropylaminocarbonyl group, n-butylaminocarbonyl group, iso-butylaminocarbonyl group, tert-butylaminocarbonyl group, and the like.

(1-39) "Dialkylaminocarbonyl group"

Dialkylaminocarbonyl group refers to a carbonyl group having a substitution with a tertiary amino group having substitutions with two alkyl groups ($-C(O)-N-(alkyl)_2$ group). The two alkyl groups may be the same or different. Examples thereof include a dimethylaminocarbonyl group, a diethylaminocarbonyl group, di-n-propylaminocarbonyl group, diisopropylaminocarbonyl group, di-n-butylaminocarbonyl group, diiso-butylaminocarbonyl group, ditert-butylaminocarbonyl group, and the like.

(1-40) "Diisocyanate"

Diisocyanate is represented by formula (III)
[Chemical Formula 16]

OCN-$R^6$-NCO (III)

wherein $R^6$ represents an optionally substituted divalent aliphatic group, optionally substituted divalent aromatic group, or optionally substituted divalent alicyclic group.

Examples of a divalent aliphatic group include aliphatic groups with 3 to 12 carbons. Typical examples of a divalent aliphatic group include a hexamethylene group, trimethylhexamethylene group, tetramethylene group, pentamethylene group, heptamethylene group, octamethylene group, and other alkylene groups with 3 to 12 carbons.

Examples of a divalent aromatic group include divalent aromatic groups with 6 to 18 carbons. Typical examples of a divalent aromatic group include a methylphenylene group, diphenylmethylene group, xylylene group, tetramethylxylylene group, naphthylene group, phenylene group, diphenylene group, and other arylene groups with 6 to 18 carbons.

Examples of a divalent alicyclic group include alicyclic groups with 3 to 12 carbons. Typical examples of a divalent alicyclic group include a norbornene group, isophorone group, cyclohexyl group, methylcyclohexyl group, ethylcyclohexyl group, propylcyclohexyl group, and other cycloalkylene groups with 3 to 12 carbons.

Specific examples of diisocyanate include tolylene diisocyanate, diphenylmethane diisocyanate, hydrogenated diphenylmethane diisocyanate, modified diphenylmethane diisocyanate, xylylene diisocyanate, hydrogenated xylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl) cyclohexane, and other aromatic, aliphatic, or alicyclic diisocyanates, but the present invention is not limited thereto.

(1-41) "Polyol (multivalent alcohol)"

As used herein, polyol (multivalent alcohol) refers to alcohol with two or more hydroxyl groups within the same molecule. Examples thereof include glycol (e.g., ethylene glycol, propylene glycol, and tetramethylene glycol), glycerin (glycerol), pentaerythritol, and the like, as well as polyether polyol, polyester polyol, polycarbonate polyol, and the like.

(1-42) "Polyether polyol"

Examples of polyether polyol include polymers of a multivalent alcohol and alkylene oxide, ring-opened polymers, and the like, but the present invention is not limited thereto. Examples of a multivalent alcohol in a polymer of the multivalent alcohol and alkylene oxide include ethylene glycol, diethylene glycol, polyoxyethylene glycol, propylene glycol, dipropylene glycol, polypropylene glycol, polyoxypropylene glycol, glycerin, 1,1,1-trimethylolpropane, 1,2,5-hexanetriol, 1,3-butanediol, 1,4-butanediol, polyoxypropylene triol, 4,4'-dihydroxyphenyl propane, 4,4'-dihydroxyphenylmethane, pentaerythritol, and the like, but the present invention is not limited thereto. Examples of alkylene oxide include propylene oxide, ethylene oxide, butylene oxide, styrene oxide, and the like, but the present invention is not limited thereto. Examples of a ring-opened polymer include polytetramethylene glycol obtained by subjecting tetrahydrofuran or the like to ring-opening polymerization and the like, but the present invention is not limited thereto. "Polyether group" refers to a residue resulting from losing an OH group or a hydrogen atom of a CH group in polyether polyol. If the $R^2$ group in formula (I) is a polyether group, the polyether group binds to an oxygen atom via a carbon atom.

(1-43) "Polyester polyol"

Examples of polyester polyol include condensation polymers of a multivalent alcohol and multivalent carboxylic acid, ring-opened polymers, and the like, but the present invention is not limited thereto. Examples of a multivalent alcohol in a condensation polymer of the multivalent alcohol and multivalent carboxylic acid include ethylene glycol, propylene glycol, butanediol, pentanediol, hexanediol, cyclohexanedimethanol, glycerin, 1,1,1-trimethylolpropane, and the like, but the present invention is not limited thereto. Examples of multivalent carboxylic acid include glutaric acid, adipic acid, pimelic acid, suberic acid, sebacic acid, terephthalic acid, isophthalic acid, and the like, but the present invention is not limited thereto. Examples of a ring-opened polymer include ring-opened polymers of lactone such as propionlactone, valerolactone, and caprolactone and the like, but the present invention is not limited thereto.

(1-44) "Polycarbonate polyol"

Examples of polycarbonate polyol include polymers of a multivalent alcohol and carbonate, but the present invention is not limited thereto. Examples of a multivalent alcohol include ethylene glycol, propylene glycol, 1,3-propanediol, 1,4-butanediol, 1,5-pentanediol, 1,6-hexanediol, 1,8-octanediol, 1,9-nonanediol, neopentyl glycol, diethylene glycol, dipropylene glycol, 1,4-cyclohexanediol, 1,4-cyclohexanedimethanol, bisphenol A, and the like, but the present invention is not limited thereto. Examples of carbonate include dimethyl carbonate, diphenyl carbonate, ethylene carbonate, and the like, but the present invention is not limited thereto.

(1-45) "Urethane group"

A urethane group is a -NHC(O)-O-R group or R-NHC(O)-O-group, wherein R can be selected from any substituent specified herein. Examples thereof include -NHC(O)-O-$CH_3$ group, -NHC(O)-O-$C_2H_5$ group, $CH_3$-NHC(O)-O- group, $C_2H_5$-NHC(O)-O- group, and the like.

(1-46) "Silicone group"

A silicone group is an ($R^c$)-[-O-Si($R^a$)($R^b$)]$_x$- group, wherein $R^a$, $R^b$, and $R^c$ can be selected from any substituent specified herein, x is any integer such as 1, 2, 3, or 4. Examples thereof include polydimethylsiloxyl group, trialkoxysilyl group (e.g., trimethoxysilyl group and triethoxysilyl group), and the like.

(1-47) "Substituent group"

As used herein, a substituent group in "optionally substituted" can be appropriately selected depending on the substituted group. As used herein, substitution refers to substitution of one or more hydrogen atoms in an organic compound or a substituent with another atom or atom groups, unless specifically noted otherwise. Examples of a substituent group herein include, but are not limited to, a silicone group, hydroxyl group, allyloxy group, arylthio group, halogen atom, halogenated alkyl group, isocyanate group, carboxylic acid group, cyano group, aryl group, alkoxy group, glycidyl group, alkyl group, cycloalkyl group, heterocycloalkyl group, alkenyl group, cycloalkenyl group, heterocycloalkenyl group, alkynyl group, cycloalkynyl group, heterocycloalkynyl group, -$NO_2$ group (nitro group), -$NH_2$ group (amino group), monoalkylamino group, dialkylamino group, monoarylamino group, diarylamino group, urethane group, alkylsulfonyl group, arylsulfonyl group, -C(=O)H group, alkylcarbonyl group, arylcarbonyl group, alkoxycarbonyl group, monoalkylaminocarbonyl group, and dialkylaminocarbonyl group. These substituent groups can be further substituted by a substituent group.

(1-48) "Dielectric"

As used herein, a material resulting in dielectric polarization when an electric field is applied is referred to as a "dielectric". Resistivity of a material is widely distributed, from $10^{-8}$ $\Omega \cdot m$ metal to $10^{-16}$ $\Omega \cdot m$ insulator. Insulators are dielectric because application of an electric field results in dielectric polarization. In other words, dielectric is a name of an insulator from the viewpoint of dielectric polarization.

(1-49) "Permittivity"

As used herein, the amount $\varepsilon$ given by

$$D = \varepsilon E$$

when applying macroscopic electric field E inside a material if the electric flux density (also known as electric displacement) D can be determined is referred to as the "permittivity" of the material. $\varepsilon$ is a material constant, and the ratio thereof to vacuum permittivity $\varepsilon_0$, i.e., $\varepsilon/\varepsilon_0 = \varepsilon_r$, is referred to as the relative permittivity.

[2] Description of preferred embodiments

(2-1) Relationship between illuminance and strain

It was found that strain can be controlled by controlling illuminance of exposed light when polymerizing and manufacturing a polymer by ultraviolet ray irradiation in the present invention. It was found that a polymer (e.g., elastomer) with a small strain is obtained with lower illuminance of exposed light. It was found that lower illuminance of exposed light results in greater molecular weight and lower loss tangent (tan$\delta$).

(2-2) Relationship between illuminance and strain

The relationship between illuminance and strain is confirmed from polymerization by irradiating an ultraviolet ray. It was found that the specific relationship between illuminance and strain varies by the starting material, but if a

relational expression for the material is found, the relational expression can be utilized thereafter.

Illuminance of ultraviolet rays for producing a polymer with a give strain is determined by:

1) providing a starting material monomer;
2) irradiating an ultraviolet ray with a specific illuminance onto, and polymerizing, the starting material monomer;
3) measuring a strain of the generated polymer;
4) optionally repeating steps 1) to 3); and
5) calculating an illuminance resulting in the desired strain based on a measurement value obtained in 3) and 4).

For

1) providing a starting material polymer, if a polymer of interest is determined as a polymer with a given strain, a monomer corresponding thereto can be appropriately selected. If the polymer is for example an acryl polymer, an acryl monomer corresponding thereto can be selected.
2) irradiating an ultraviolet ray with a specific illuminance onto, and polymerizing, the starting material monomer is materialized by irradiating an ultraviolet ray onto the monomer at a certain illuminance. Such ultraviolet ray irradiation can be set up and performed in any manner by those skilled in the art.
3) measuring a strain of the generated polymer can be performed using any approach that is known in the art. For example, the size of strain can be determined by measuring the Young's modulus, loss tangent (tan$\delta$), or the like described herein. A specific value can also be calculated.

The method of the invention 4) optionally repeats steps 1) to 3). The steps can be repeated a number of times that is required or sufficient to derive a relational expression. When repeating, illuminance can be appropriately varied.

Lastly, 5) an illuminance resulting in the desired strain can be calculated based on a measurement value obtained in 3) and 4). Such calculation can be appropriately performed using statistical or mathematical processing of two values.

Illuminance of ultraviolet rays to be illuminated can initially be illuminance that is commonly used for the starting material monomer. The strain of the generated polymer can be measured at this time. A new measurement value can then be obtained by irradiating an ultraviolet ray with difference illuminance. A plurality of measurement values is obtained by repeating this step, so that the relationship between illuminance of ultraviolet rays and strain can be calculated. A polymer with a desired strain can be manufactured by selecting illuminance resulting in a strain of interest. As an example of such an approach, a polymer with a desired strain can be manufactured by selecting illuminance resulting in a residual strain of interest or less.

For example, the following procedures can be performed to materialize such a procedure.

1. Establish a relational expression for illuminance and strain such as those described above.
2. Calculate the illuminance corresponding to a desired strain based on the relational expression.
3. Select an ultraviolet ray with said illuminance or lower.
4. Cure a monomer using an ultraviolet ray that has been selected for the moment.
5. Measure the strain of the cured polymers and check whether the polymers have the desired strain.
6. Select a polymer with the desired strain. If the polymers do not have the desired strain, repeat again from step 1.

(2-2-1) For (meth)acrylate

For (meth)acrylate in formula (I), illuminance is preferably 10 mW/cm$^2$ or less, more preferably 1 mW/cm$^2$ or less, or 0.5 mW/cm$^2$ or less in order to obtain a polymer with a low strain (tan$\delta$ of 0.15 or less). The lower limit value of illuminance can be any value, as long as it is illuminance capable of polymerization, but is preferably 0.001 mW/cm$^2$ or greater or 0.01 mW/cm$^2$ or greater.

For (meth)acrylate of formula (II), illuminance is preferably 0.56 mW/cm$^2$ or less, 0.5 mW/cm$^2$ or less, 0.4 mW/cm$^2$ or less, 0.3 mW/cm$^2$ or less, 0.2 mW/cm$^2$ or less, or 0.1 mW/cm$^2$ or less in order to obtain a polymer with a low strain (tan$\delta$ of 0.4 or less). Polymerization is also possible at 0.03 mW/cm$^2$. The lower limit value of illuminance can be any value, as long as it is illuminance capable of polymerization, but is preferably 0.001 mW/cm$^2$ or greater or 0.01 mW/cm$^2$ or greater.

(2-2-2) For urethane acrylate

For urethane acrylate, illuminance is preferably 140 mW/cm$^2$ or less, 130 mW/cm$^2$ or less, 120 mW/cm$^2$ or less, 110 mW/cm$^2$ or less, 100 mW/cm$^2$ or less, 90 mW/cm$^2$ or less, 80 mW/cm$^2$ or less, 70 mW/cm$^2$ or less, 60 mW/cm$^2$

or less, 50 mW/$cm^2$ or less, 40 mW/$cm^2$ or less, 30 mW/$cm^2$ or less, 20 mW/$cm^2$ or less, or 10 mW/$cm^2$ or less in order to obtain a polymer with a low strain (tan$\delta$ of 0.2 or less). Polymerization is also possible at 0.56 mW/$cm^2$. The lower limit value of illuminance can be any value, as long as it is illuminance capable of polymerization, but is preferably 0.001 mW/$cm^2$ or greater or 0.01 mW/$cm^2$ or greater.

(2-2-3) For other materials

A polymer with a desired strain can also be produced for other materials by deriving a relational expression representing the relationship between strain and illuminance.

(3) Polymer and production method thereof

(3-1) (Meth)acrylic resin

(Meth)acrylic resin can be produced by irradiating an ultraviolet ray with required illuminance onto a (meth)acrylic monomer in the presence of a polymerization initiator.

In one aspect, one feature of the (meth)acrylic polymer of the invention is that the (meth)acrylic polymer is prepared by irradiating an ultraviolet ray to polymerize a monomer component comprising a (meth) acrylic monomer represented by formula (I):

[Chemical Formula 17]

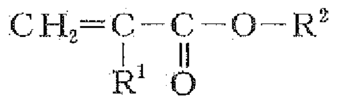

(I)

wherein

- $R^1$ is a hydrogen atom or a methyl group, and
- $R^2$ is an optionally substituted alkyl group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbon atoms, or an optionally substituted polyether group with 2 to 20, 2 to 19, 2 to 18, 2 to 17, 2 to 16, 2 to 15, 2 to 14, 2 to 13, 2 to 12, 2 to 11, 2 to 10, 2 to 9, 2 to 8, 2 to 7, 2 to 6, 2 to 5, 2 to 4, 2 to 3, 3 to 20, 3 to 19, 3 to 18, 3 to 17, 3 to 16, 3 to 15, 3 to 14, 3 to 13, 3 to 12, 3 to 11, 3 to 10, 3 to 9, 3 to 8, 3 to 7, 3 to 6, 3 to 5, 3 to 4, 4 to 20, 4 to 19, 4 to 18, 4 to 17, 4 to 16, 4 to 15, 4 to 14, 4 to 13, 4 to 12, 4 to 11, 4 to 10, 4 to 9, 4 to 8, 4 to 7, 4 to 6, 4 to 5, 5 to 20, 5 to 19, 5 to 18, 5 to 17, 5 to 16, 5 to 15, 5 to 14, 5 to 13, 5 to 12, 5 to 11, 5 to 10, 5 to 9, 5 to 8, 5 to 7, 5 to 6, 6 to 20, 6 to 19, 6 to 18, 6 to 17, 6 to 16, 6 to 15, 6 to 14, 6 to 13, 6 to 12, 6 to 11, 6 to 10, 6 to 9, 6 to 8, 6 to 7, 7 to 20, 7 to 19, 7 to 18, 7 to 17, 7 to 16, 7 to 15, 7 to 14, 7 to 13, 7 to 12, 7 to 11, 7 to 10, 7 to 9, 7 to 8, 8 to 20, 8 to 19, 8 to 18, 8 to 17, 8 to 16, 8 to 15, 8 to 14, 8 to 13, 8 to 12, 8 to 11, 8 to 10, 8 to 9, 9 to 20, 9 to 19, 9 to 18, 9 to 17, 9 to 16, 9 to 15, 9 to 14, 9 to 13, 9 to 12, 9 to 11, 9 to 10, 10 to 20, 10 to 19, 10 to 18, 10 to 17, 10 to 16, 10 to 15, 10 to 14, 10 to 13, 10 to 12, 10 to 11, 11 to 20, 11 to 19, 11 to 18, 11 to 17, 11 to 16, 11 to 15, 11 to 14, 11 to 13, 11 to 12, 12 to 20, 12 to 19, 12 to 18, 12 to 17, 12 to 16, 12 to 15, 12 to 14, 12 to 13, 13 to 20, 13 to 19, 13 to 18, 13 to 17, 13 to 16, 13 to 15, 13 to 14, 14 to 20, 14 to 19, 14 to 18, 14 to 17, 14 to 16, 14 to 15, 15 to 20, 15 to 19, 15 to 18, 15 to 17, 15 to 16, 16 to 20, 16 to 19, 16 to 18, 16 to 17, 17 to 20, 17 to 19, 17 to 18, 18 to 20, 18 to 19, 19 to 20, 1, 2, 3, 4, 5, 6, 7, 8, 9, 10, 11, 12, 13,14, 15, 16, 17, 18, 19, or 20 carbons.

In formula (I), $R^1$ is a hydrogen atom or a methyl group, and $R^2$ represents an alkyl group with 1 to 10, 1 to 9, 1 to 8, 1 to 7, 1 to 6, 1 to 5, 1 to 4, 1 to 3, 1 to 2, or 1, 2, 3, 4, 5, 6, 7, 8, 9, or 10 carbons optionally substituted with a hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons, or $-[-(CH_2)_n-O-]_m-R^8$, wherein n is an integer from 1 to 20, 1 to 19, 1 to 18, 1 to 17, 1 to 16, 1 to 15, 1 to 14, 1 to 13, 1 to 12, 1 to 11, 1 to 10, 1 to 9, 1 to 8, 1 to 7, 1 to 6, 1 to 5, 1 to 4, 1 to 3, 1 to 2, or 1, 2, 3, 4, 5, 6, 7, 8, 9, 10, 11, 12, 13, 14, 15, 16, 17, 18, 19, or 20, preferably 1 to 10, and more preferably 1 to 4, m is an integer from 1 to 20, 1 to 19, 1 to 18, 1 to 17, 1 to 16, 1 to 15, 1 to 14, 1 to 13, 1 to 12, 1 to 11, 1 to 10, 1 to 9, 1 to 8, 1 to 7, 1 to 6, 1 to 5, 1 to 4, 1 to 3, 1 to 2 or 1, 2, 3, 4, 5, 6, 7, 8, 9, 10, 11, 12, 13, 14, 15, 16, 17, 18, 19,

or 20, preferably 1 to 10 and more preferably 1 to 4, and $R^8$ represents an alkyl group with 1 to 12, 1 to 11, 1 to 10, 1 to 9, 1 to 8, 1 to 7, 1 to 6, 1 to 5, 1 to 4, 1 to 3, 1 to 2, 2 to 12, 2 to 11, 2 to 10, 2 to 9, 2 to 8, 2 to 7, 2 to 6, 2 to 5, 2 to 4, 2 to 3, 3 to 12, 3 to 11, 3 to 10, 3 to 9, 3 to 8, 3 to 7, 3 to 6, 3 to 5, 3 to 4, 4 to 12, 4 to 11, 4 to 10, 4 to 9, 4 to 8, 4 to 7, 4 to 6, 4 to 5, 5 to 12, 5 to 11, 5 to 10, 5 to 9, 5 to 8, 5 to 7, 5 to 6, 6 to 12, 6 to 11, 6 to 10, 6 to 9, 6 to 8, 6 to 7, 7 to 12, 7 to 11, 7 to 10, 7 to 9, 7 to 8, 8 to 12, 8 to 11, 8 to 10, 8 to 9, 9 to 12, 9 to 11, 9 to 10, 10 to 12, 10 to 11, 11 to 12, 1, 2, 3, 4, 5, 6, 7, 8, 9, 10, 11, or 12 carbons, a glycidyl group, an aryl group with 6 to 12 carbons optionally substituted with an alky group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons (the alkyl group is optionally substituted with an aryl group with 6 to 12 carbons) and/or an aryl group with 6 to 12 carbons, a monoalkylamino carbonyl group with 1 to 12, 1 to 11, 1 to 10, 1 to 9, 1 to 8, 1 to 7, 1 to 6, 1 to 5, 1 to 4, 1 to 3, 1 to 2, 2 to 12, 2 to 11, 2 to 10, 2 to 9, 2 to 8, 2 to 7, 2 to 6, 2 to 5, 2 to 4, 2 to 3, 3 to 12, 3 to 11, 3 to 10, 3 to 9, 3 to 8, 3 to 7, 3 to 6, 3 to 5, 3 to 4, 4 to 12, 4 to 11, 4 to 10, 4 to 9, 4 to 8, 4 to 7, 4 to 6, 4 to 5, 5 to 12, 5 to 11, 5 to 10, 5 to 9, 5 to 8, 5 to 7, 5 to 6, 6 to 12, 6 to 11, 6 to 10, 6 to 9, 6 to 8, 6 to 7, 7 to 12, 7 to 11, 7 to 10, 7 to 9, 7 to 8, 8 to 12, 8 to 11, 8 to 10, 8 to 9, 9 to 12, 9 to 11, 9 to 10, 10 to 12, 10 to 11, 11 to 12, 1, 2, 3, 4, 5, 6, 7, 8, 9, 10, 11, or 12 carbons of alkyl, a dialkylamino carbonyl group with 1 to 12, 1 to 11, 1 to 10, 1 to 9, 1 to 8, 1 to 7, 1 to 6, 1 to 5, 1 to 4, 1 to 3, 1 to 2, 2 to 12, 2 to 11, 2 to 10, 2 to 9, 2 to 8, 2 to 7, 2 to 6, 2 to 5, 2 to 4, 2 to 3, 3 to 12, 3 to 11, 3 to 10, 3 to 9, 3 to 8, 3 to 7, 3 to 6, 3 to 5, 3 to 4, 4 to 12, 4 to 11, 4 to 10, 4 to 9, 4 to 8, 4 to 7, 4 to 6, 4 to 5, 5 to 12, 5 to 11, 5 to 10, 5 to 9, 5 to 8, 5 to 7, 5 to 6, 6 to 12, 6 to 11, 6 to 10, 6 to 9, 6 to 8, 6 to 7, 7 to 12, 7 to 11, 7 to 10, 7 to 9, 7 to 8, 8 to 12, 8 to 11, 8 to 10, 8 to 9, 9 to 12, 9 to 11, 9 to 10, 10 to 12, 10 to 11, 11 to 12, 1, 2, 3, 4, 5, 6, 7, 8, 9, 10, 11, or 12 carbons of alkyl, or a residue of a divalent carboxylic acid with 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 2, 3, 4, 5, 6, 7, 8, 9, or 10 carbons.

In formula (I), $R^2$ can be an alkyl group with 1 to 10 carbons having an alkoxy substituent with 1 to 10 carbons, or a polyether group with 2 to 16 carbons having an alkoxy substituent with 1 to 10 carbons.

In formula (I), $R^2$ can be an alkoxyalkyl group with 1 to 10 carbons.

In formula (I), $R^2$ can be $-[-(CH_2)_n-O-]_m-R^8$, and $R^8$ can be an alkyl group with 1 to 12 carbons.

In formula (I), $R^1$ can be a hydrogen atom. In formula (I), $R^1$ can be a methyl group.

In formula (I), $R^2$ can be an alkyl group with 1 to 10 carbons optionally substituted with a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons.

In formula (I), $R^2$ can be an alkyl group with 1 to 10 carbons. In formula (I), $R^2$ can be an alkyl group with 1 to 10 carbons substituted with a hydrogen atom, silicone group, or hydroxyl group. In formula (I), $R^2$ can be an alkyl group with 1 to 10 carbons substituted with a hydroxyl group and an allyloxy group. In formula (I), $R^2$ can be an alkyl group with 1 to 10 carbons substituted with a halogen atom (F, Cl, Br, I). In formula (I), $R^2$ can be an alkyl group with 1 to 10 carbons substituted with an arylthio group with 6 to 12 carbons. In formula (I), $R^2$ can be an alkyl group with 1 to 10 carbons substituted with aryl with 6 to 12 carbons.

In formula (I), $R^2$ can be $-[-(CH_2)_n-O-]_m-R^8$, wherein n can be 1, 2, 3, or 4, and m can be 1, 2, 3, or 4.

In formula (I), $R^8$ can be an alkyl group with 1 to 12 carbons. In formula (I), $R^8$ can be a glycidyl group. In formula (I), $R^8$ can be an aryl group with 6 to 12 carbons optionally substituted with an alky group with 1 to 10 carbons (the alkyl group is optionally substituted with an aryl group with 6 to 12 carbons) and/or an aryl group with 6 to 12 carbons. In formula (I), $R^8$ can be an aryl group with 6 to 12 carbons. In formula (I), $R^8$ can be an aryl group with 6 to 12 carbons substituted with an alky group with 1 to 10 carbons. In formula (I), $R^8$ can be an aryl group with 6 to 12 carbons substituted with an alky group with 1 to 10 carbons (the alkyl group is substituted with an aryl group with 6 to 12 carbons). In formula (I), $R^8$ can be aryl group with 6 to 12 carbons substituted with an aryl group with 6 to 12 carbons. In formula (I), $R^8$ can be a monoalkylamino carbonyl group with 1 to 12 carbons of alkyl. In formula (I), $R^8$ can be a dialkylamino carbonyl group with 1 to 12 carbons of alkyl. In formula (I), $R^8$ can be a residue of a divalent carboxylic acid with 2 to 10 carbons.

In formula (I), $R^2$ can be an alkyl group with 1 to 10 carbons optionally having a hydroxyl group or a halogen atom, or an alkoxyalkyl group with 2 to 12 carbons optionally having a hydroxyl group.

If the (meth) acrylic monomer in formula (I) is alkyl acrylate, illuminance of an ultraviolet ray can be $10mW/cm^2$ or less, 9 $mW/cm^2$ or less, 8 $mW/cm^2$ or less, 7 $mW/cm^2$ or less, 6 $mW/cm^2$ or less, 5 $mW/cm^2$ or less, 4 $mW/cm^2$ or less, 3 $mW/cm^2$ or less, 2 $mW/cm^2$ or less, 1 $mW/cm^2$ or less, 0.9 $mW/cm^2$ or less, 0.8 $mW/cm^2$ or less, 0.7 $mW/cm^2$ or less, 0.6 $mW/cm^2$ or less, 0.5 $mW/cm^2$ or less, 0.4 $mW/cm^2$ or less, 0.3 $mW/cm^2$ or less, 0.2 $mW/cm^2$ or less, or 0.1 $mW/cm^2$ or less.

The loss tangent ($\tan\delta$) of the (meth)acrylic polymer of formula (I) of the invention can be 0.15 or less, 0.14 or less, 0.13 or less, 0.12 or less, 0.11 or less, 0.1 or less, 0.09 or less, 0.08 or less, 0.07 or less, 0.06 or less, 0.05 or less, 0.04 or less, 0.03 or less, 0.02 or less, or 0.01 or less.

The weight average molecular weight of the (meth)acrylic polymer of formula (I) of the invention can be 2 million

or greater, 2.1 million or greater, 2.2 million or greater, 2.3 million or greater, 2.4 million or greater, 2.5 million or greater, 2.6 million or greater, 2.7 million or greater, 2.8 million or greater, 2.9 million or greater, or 3 million or greater. The weight average molecular weight is measured by GPC.

The Young's modulus of the (meth)acrylic polymer of formula (I) of the invention can be 0.5MPa or less, 0.4MPa or less, 0.3MPa or less, 0.2MPa or less, or 0.1MPa or less.

The size of strain can be measured to determine the relationship with the illuminance of ultraviolet rays.

In another aspect, the (meth)acrylic polymer of the invention is prepared from polymerization of a monomer component comprising a (meth)acrylic monomer represented by formula (I):

[Chemical Formula 18]

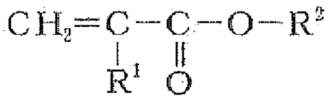

(I)

wherein $R^1$ is a hydrogen atom or a methyl group, and $R^2$ represents an alkyl group with 1 to 10 carbons optionally having a hydroxyl group or a halogen atom, or an alkoxyalkyl group with 2 to 12 carbons optionally having a hydroxyl group, characterized by having a weight average molecular weight of 1 million or greater.

$R^1$ is a hydrogen atom or a methyl group in a (meth)acrylic monomer represented by formula (I). Among $R^1$, a hydrogen atom is preferred from the viewpoint of obtaining a (meth)acrylic polymer having a large amount of displacement at a low applied voltage.

$R^2$ is an alkyl group with 1 to 10 carbons optionally having a hydrogen atom, a silicone group, a hydroxyl group, or a halogen atom, or an alkoxyalkyl group with 2 to 12 carbons optionally having a hydroxyl group in a (meth)acrylic monomer represented by formula (I). In this regard, preferred examples of the upper limit of the number of carbons of the alkyl group can be 10, 9, 8, 7, 6, 5, 4, 3, 2, or the like, and the lower limit can be 1, 2, 3, 4, 5, or the like. A range of any combination thereof can be employed. In this regard, preferred examples of the upper limit of the number of carbons of the alkoxyalkyl group can be 12, 11, 10, 9, 8, 7, 6, 5, 4, 3, 2, or the like, and the lower limit can be 2, 3, 4, 5, 6, or the like. A range of any combination thereof can be employed.

Examples of halogen atoms include a fluorine atom, chlorine atom, bromine atom, iodine atom, and the like. Among these halogen atoms, a fluorine atom is preferred from the viewpoint of obtaining a (meth)acrylic polymer having a large amount of displacement at a low applied voltage. The number of halogen atoms contained in an alkyl group cannot be generalized because the number varies depending on the number of carbons of the alkyl group or the like. Therefore, the number is preferably adjusted appropriately to the extent that the objective of the invention is not obstructed.

$R^2$ is preferably an alkyl group with 1 to 4 carbons optionally having a hydroxyl group or a halogen atom, and an alkoxyalkyl group with 1 to 4 carbons optionally having a hydroxyl group, more preferably an alkyl group with 1 or 2 carbons optionally having a hydroxyl group or a halogen atom, and an alkoxyalkyl group with 1 or 2 carbons optionally having a hydroxyl group, and still more preferably an ethyl group and a methoxy group from the viewpoint of obtaining a (meth)acrylic polymer having a large amount of displacement at a low applied voltage.

The (meth)acrylic monomers represented by formula (I) is preferably a (meth)acrylic monomer of formula (I) wherein $R^1$ is a hydrogen atom or a methyl group and $R^2$ is an alkyl group with 1 to 10 carbons such as methyl (meth)acrylate, ethyl (meth)acrylate, n-propyl (meth)acrylate, isopropyl (meth)acrylate, n-butyl(meth) acrylate, isobutyl (meth)acrylate, tert-butyl (meth)acrylate, sec-butyl (meth)acrylate, n-pentyl (meth)acrylate, isoamyl (meth)acrylate, n-hexyl (meth)acrylate, methylpentyl (meth)acrylate, n-octyl (meth)acrylate, nonanol (meth)acrylate, and cyclohexyl (meth) acrylate, a (meth) acrylic monomer of formula (I) wherein $R^1$ is a hydrogen atom or a methyl group and $R^2$ is an alkyl group with 1 to 10 carbons having a hydroxyl group such as hydroxypropyl (meth)acrylate and hydroxybutyl (meth)acrylate, a (meth)acrylic monomer of formula (I) wherein $R^1$ is a hydrogen atom or a methyl group and $R^2$ is an alkyl group with 1 to 10 carbons having a halogen atom such as 2,2,2-trifluoroethyl acrylate, a (meth)acrylic monomer of formula (I) wherein $R^1$ is a hydrogen atom or a methyl group and $R^2$ is an alkoxyalkyl group with 2 to 12 carbons such as methoxyethyl (meth)acrylate, ethoxyethyl (meth)acrylate, methoxybutyl (meth)acrylate, and phenoxyethyl acrylate, and a (meth)acrylic monomer of formula (I) wherein $R^1$ is a hydrogen atom or a methyl group and $R^2$ is an alkoxyalkyl group with 2 to 12 carbons having a hydroxyl group such as diethylene glycol mono(meth)acrylate, more preferably ethyl (meth)acrylate and methoxyethyl (meth)acrylate, and still more preferably ethyl acrylate and methoxyethyl acrylate, from the viewpoint of obtaining a (meth)acrylic polymer having a large amount of displacement at a low applied voltage. These (meth)acrylic monomers can each be used alone, or two or more can be used in combination.

The (meth) acrylic polymer of formula (I) of the invention can be characterized by having a weight average molecular weight of 1 million or greater. If the weight average molecular weight is 1 million or greater, the (meth)acrylic polymer of formula (I) of the invention can attain an excellent effect of having excellent extensibility and exhibiting a

large amount of displacement when a low voltage is applied.

The weight average molecular weight of a (meth)acrylic polymer can be 1 million or greater, preferably 1.5 million or greater, and more preferably 2 million or greater from the viewpoint of obtaining a (meth)acrylic polymer with excellent extensibility and a large amount of displacement at a low applied voltage. The weight average molecular weight can also be 12 million or less, preferably 10 million or less, more preferably 8 million or less, still more preferably 6 million or less, and even still more preferably 4 million or less from the viewpoint of moldability and processability.

When the monomer component comprises a crosslinkable monomer, the resulting (meth)acrylic polymer swells due to an organic solvent, but does not dissolve into the organic solvent. In such a case, the weight average molecular weight found in the same manner as above from using a monomer component free of crosslinkable monomers as said monomer component and using a (meth)acrylic polymer obtained by polymerizing the monomer component is used as the weight average molecular weight of the (meth)acrylic polymer.

In another aspect, one of the features of the (meth)acrylic polymer of the invention is that the polymer is prepared by irradiating an ultraviolet ray to polymerize a monomer component comprising a cyclic ether group-containing (meth)acrylic monomer represented by formula (II) :

[Chemical Formula 19]

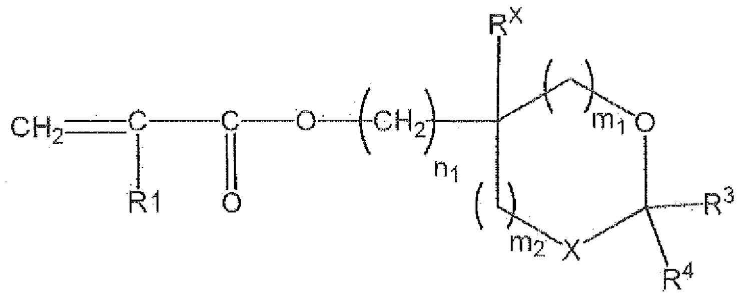

(II)

wherein

$R^1$ is a hydrogen atom or a methyl group,

$R^3$ and $R^4$ are each independently a hydrogen atom or an optionally substituted alkyl group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons, or $R^3$ and $R^4$ form an optionally substituted carbon ring with 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 3, 4, 5, 6, 7, 8, 9, or 10 carbons together with a carbon atom to which $R^3$ and $R^4$ bind,

$R^x$ is hydrogen or an optionally substituted alkyl group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons,

X is a carbon atom, an oxygen atom, or non-existent,

$n_1$ represents an integer from 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, or 1, 2, 3, 4, 5, 6, 7, 8, 9, or 10,

$m_1$ represents an integer from 0 to 1, and

$m_2$ represents an integer from 0 to 1.

In formula (II), $R^3$ and $R^4$ can be each independently a hydrogen atom or an alkyl group with 1 to 4 carbons optionally substituted with alkoxy with 1 to 10 carbons, or $R^3$ and $R^4$ can form a carbon ring with 3 to 10 carbons optionally substituted with alkoxy with 1 to 10 carbons together with a carbon atom to which $R^3$ and $R^4$ bind.

In formula (II), $R^x$ can be hydrogen or an alkyl group with 1 to 10 carbons optionally substituted with alkoxy with 1 to 10 carbons.

In formula (II), $R^3$, $R^4$, and $R^x$ can comprise a group substituted with alkoxy with 1 to 10 carbons.

In formula (II), $R^1$ can be a hydrogen atom. In formula (II), $R^1$ can be a methyl group.

In formula (II), $R^3$ and $R^4$ can be both hydrogen atoms. In formula (II), $R^3$ and $R^4$ can be each independently

an alkyl group with 1 to 4 carbons. In formula (II), $R^3$ and $R^4$ can form a carbon ring with 3 to 10 carbons together with a carbon atom to which $R^3$ and $R^4$ bind.

In formula (II), $R^x$ can be hydrogen. In formula (II), $R^x$ can be an alkyl group with 1 to 10 carbons.

In formula (II), $m_1$ can be 1, $m_2$ can be 0, and X can be a carbon atom. In formula (II), $m_1$ can be 0, $m_2$ can be 1, and X can be a carbon atom. In formula (II), $m_1$ can be 1, $m_2$ can be 0, and X can be an oxygen atom. In formula (II), $m_1$ can be 1, $m_2$ can be 1, and X can be an oxygen atom.

In another aspect, one of the features of the (meth)acrylic polymer of the invention is that the polymer is prepared by irradiating an ultraviolet ray to polymerize a monomer component comprising a cyclic ether group-containing (meth)acrylic monomer represented by formula (IIA) :

[Chemical Formula 20]

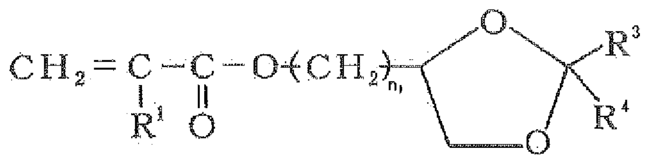

(IIA)

wherein
$R^1$ is a hydrogen atom or a methyl group, $R^3$ and $R^4$ are each independently a hydrogen atom or an alkyl group with 1 to 4 carbons, and $n_1$ represents an integer from 1 to 4.

The loss tangent (tanδ) of the (meth)acrylic polymer of formula (II) of the invention can be 0.4 or less, 0.3 or less, 0.2 or less, or 0.1 or less.

The Young's modulus of the (meth)acrylic polymer of formula (II) of the invention is preferably 0.05 Mpa or less, more preferably 0.04 MPa or less, 0.03 MPa or less, 0.02 Mpa or less, and 0.01 Mpa or less.

Preferred illuminance of the (meth)acrylic polymer of formula (II) of the invention is preferably 0.56 $mW/cm^2$ or less, more preferably 0.5 $mW/cm^2$ or less, 0.4 $mW/cm^2$ or less, 0.3 $mW/cm^2$ or less, 0.2 $mW/cm^2$ or less, or 0.1 $mW/cm^2$ or less.

$R^1$ is a hydrogen atom or a methyl group in the cyclic ether group-containing (meth)acrylic monomer represented by formula (II). Among $R^1$, a hydrogen atom is preferred from the viewpoint of obtaining a (meth)acrylic polymer having a large amount of displacement at a low applied voltage. $R^2$ and $R^3$ are each independently a hydrogen atom or an alkyl group with 1 to 4 carbons. $R^2$ and $R^3$ are preferably an alkyl group with 1 to 4 carbons, more preferably an alkyl group with 1 or 2 carbons from the viewpoint of obtaining a (meth)acrylic polymer having a large amount of displacement at a low applied voltage at. n is an integer from 1 to 4 representing the number of moles of methylene group added. n is preferably 1 or 2, more preferably 1 from the viewpoint of obtaining a (meth)acrylic polymer having a large amount of displacement at a low applied voltage at.

Examples of cyclic ether group-containing (meth)acrylic monomer represented by formula (II) include (2,2-dimethyl-1,3-dioxolane-4-yl)methyl (meth)acrylate, (2-methyl-2-ethyl-1,3-dioxolane-4-yl)methyl (meth)acrylate, (2,2-diethyl-1,3-dioxolane-4-yl)methyl (meth)acrylate, and the like, but the present invention is not limited thereto. These cyclic ether group-containing (meth)acrylic monomers can each be used alone, or two or more can be used in combination. Among these cyclic ether group-containing (meth)acrylic monomers, (2-methyl-2-ethyl-1,3-dioxolane-4-yl)methyl (meth)acrylate is preferable, and (2-methyl-2-ethyl-1,3-dioxolane-4-yl)methyl acrylate is more preferable from the viewpoint of obtaining a (meth)acrylic polymer having a large amount of displacement at a low applied voltage.

The cyclic ether group-containing (meth)acrylic monomer represented by formula (II) is readily available commercially. Examples thereof include (2-methyl-2-ethyl-1,3-dioxolane-4-yl)methyl acrylate [Osaka Organic Chemical Industry Ltd., product name: MEDOL-10], but the present invention is not limited thereto.

A monomer component can be comprised of only a (meth)acrylic monomer represented by formula (I) or formula (II), but a monomer that is copolymerizable with a (meth)acrylic monomer represented by formula (I) or formula (II) can be contained as needed.

Examples of a monomer that is copolymerizable with a (meth)acrylic monomer represented by formula (I) or formula (II) include carboxyl group containing monomers, carboxylic acid alkyl ester-based monomers other than (meth)acrylic monomers represented by formula (I) or formula (II), amide group containing monomers, aryl group containing monomers, styrene based monomers, nitrogen atom containing monomers, aliphatic vinyl ester based monomers, betaine monomers, and the like, but the present invention is not limited thereto. These monomers can each be used alone, or two or more can be used in combination.

Examples of carboxyl group containing monomers include (meth)acrylic acid, maleic acid, fumaric acid, citraconic acid, mesaconic acid, itaconic acid, crotonic acid, and the like, but the present invention is not limited thereto. These monomers can each be used alone, or two or more can be used in combination.

Examples of carboxylic acid alkyl ester-based monomers other than (meth)acrylic monomers represented by formula (I) or formula (II) include alkyl acrylate with 11 to 20 carbons of an alkyl group such as dodecyl (meth)acrylate and stearyl (meth)acrylate, itaconic acid alkyl ester with 1 to 4 carbons of an alkyl group such as methyl itaconate and ethyl itaconate, and the like, but the present invention is not limited thereto. These monomers can each be used alone, or two or more can be used in combination. In this regard, preferred examples of the upper limit of number of carbons of the alkyl group can be 20, 19, 18, 17, 16, 15, 14, 13, 12, 11, 10, 9, 8, 7, 6, 5, 4, 3, 2, or the like, and the lower limit can be 1, 2, 3, 4, 5, 6, 7, 8, 9, 10, 11, 12, or the like. A range of any combination thereof can be employed.

Examples of amide group containing monomers include alkyl(meth)acrylamide with 1 to 8 carbons of an alkyl group such as N-methyl (meth)acrylamide, N-ethyl (meth)acrylamide, N-propyl (meth)acrylamide, N-isopropyl (meth)acrylamide, N-tert-butyl (meth)acrylamide, N-octyl (meth)acrylamide, N, N-dimethyl (meth)acrylamide, and N,N-diethyl (meth)acrylamide, but the present invention is not limited thereto. These monomers can each be used alone, or two or more can be used in combination.

Examples of aryl group containing monomers include aryl (meth) acrylate with 6 to 12 carbons of an aryl group such as benzyl (meth)acrylate, but the present invention is not limited thereto. These monomers can each be used alone, or two or more can be used in combination.

Examples of styrene based monomers include styrene, α-methylstyrene, and the like, but the present invention is not limited thereto. These monomers can each be used alone, or two or more can be used in combination.

Examples of nitrogen atom containing monomers include N-vinylpyrrolidone, N-vinylcaprolactam, and the like, but the present invention is not limited thereto. These monomers can each be used alone, or two or more can be used in combination.

Examples of aliphatic vinyl ester based monomers include vinyl acetate, vinyl propionate, and the like, but the present invention is not limited thereto. These monomers can each be used alone, or two or more can be used in combination.

Examples of betaine monomers include sulfobetaine monomers such as N-acryloyloxymethyl-N,N-dimethylammonium methyl-α-sulfobetaine, N-methacryloyloxymethyl-N,N-dimethylammonium methyl-α-sulfobetaine, N-acryloyloxymethyl-N,N-dimethylammonium ethyl-α-sulfobetaine, N-methacryloyloxymethyl-N,N-dimethylammonium ethyl-α-sulfobetaine, N-acryloyloxymethyl-N,N-dimethylammonium propyl-α-sulfobetaine, N-methacryloyloxymethyl-N,N-dimethylammonium propyl-α-sulfobetaine, N-acryloyloxymethyl-N,N-dimethylammonium butyl-α-sulfobetaine, N-methacryloyloxymethyl-N,N-dimethylammonium butyl-α-sulfobetaine, N-acryloyloxyethyl-N,N-dimethylammonium methyl-α-sulfobetaine, N-methacryloyloxyethyl-N,N-dimethylammonium methyl-α-sulfobetaine, N-acryloyloxyethyl -N,N-dimethylammonium ethyl-α-sulfobetaine, N-methacryloyloxyethyl-N,N-dimethylammonium ethyl-α-sulfobetaine, N-acryloyloxyethyl-N,N-dimethylammonium propyl-α-sulfobetaine, N-methacryloyloxyethyl-N,N-dimethylammonium propyl-α-sulfobetaine, N-acryloyloxyethyl-N,N-dimethylammonium butyl-α-sulfobetaine, N-methacryloyloxyethyl-N,N-dimethylammonium butyl-α-sulfobetaine, N-acryloyloxypropyl-N,N-dimethylammonium methyl-α-sulfobetaine, N-methacryloyloxypropyl-N,N-dimethylammonium methyl-α-sulfobetaine, N-acryloyloxypropyl-N,N-dimethylammonium ethyl-α-sulfobetaine, N-methacryloyloxypropyl-N,N-dimethylammonium ethyl-α-sulfobetaine, N-acryloyloxypropyl-N,N-dimethylammonium propyl-α-sulfobetaine, N-methacryloyloxypropyl-N,N-dimethylammonium propyl-α-sulfobetaine, N-acryloyloxypropyl-N,N-dimethylammonium butyl-α-sulfobetaine, N-methacryloyloxypropyl-N,N-dimethylammonium butyl-α-sulfobetaine, N-acryloyloxybutyl-N,N-dimethylammonium methyl-α-sulfobetaine, N-methacryloyloxybutyl-N,N-dimethylammonium methyl-α-sulfobetaine, N-acryloyloxybutyl-N,N-dimethylammonium ethyl-α-sulfobetaine, N-methacryloyloxybutyl-N,N-dimethylammonium ethyl-α-sulfobetaine, N-acryloyloxybutyl-N,N-dimethylammonium propyl-α-sulfobetaine, N-methacryloyloxybutyl-N,N-dimethylammonium propyl-α-sulfobetaine, N-acryloyloxybutyl-N,N-dimethylammonium butyl-α-sulfobetaine, N-methacryloyloxybutyl-N,N-dimethylammonium butyl-α-sulfobetaine, and other N-(meth)acryloyloxy alkyl-N,N-dimethylammonium alkyl-α-sulfobetaine, but the present invention is not limited thereto. These sulfobetaine monomers can each be used alone, or two or more can be used in combination.

The content of a (meth) acrylic monomer represented by formula (I) or formula (II) in a monomer component is preferably 90% by mass or greater, more preferably 93% by mass or greater, and still more preferably 95% by mass or greater, and the content of monomer that is copolymerizable with the (meth)acrylic monomer represented by formula (I) or formula (II) in the monomer component is preferably 10% by mass or less, more preferably 7% by mass or less, and still more preferably 5% by mass or less, from the viewpoint of obtaining a (meth)acrylic polymer having a large amount of displacement at a low applied voltage. Further, the content of (meth)acrylic monomer represented by formula (I) in a monomer component is preferably 99% by mass or less, more preferably 98% by mass or less, and still more preferably 97% by mass or less, and the content of monomer that is copolymerizable with the (meth)acrylic monomer represented by formula (I) in the monomer component is preferably 1% by mass or greater, more preferably 2% by mass or greater, and still more preferably 3% by mass or greater, from the viewpoint of sufficiently expressing an effect from using the (meth)acrylic monomer represented by formula (I) or formula (II).

A monomer component may comprise a crosslinkable monomer at a suitable amount to the extent that the objective of the invention is not obstructed.

Examples of a crosslinkable monomer include polyfunctional monomers such as (meth)acrylamide compounds with two or more, preferably 2 (meth)acryloyl groups such as alkylene bis(meth)acrylamide with 1 to 4 carbons such as methylene bisacrylamide and methylene bismethacrylamide; (meth)acrylate compounds with 2 or more, preferably 2 or 3 (meth)acryloyl groups such as ethylene di(meth)acrylate, ethylene glycol di(meth)acrylate, diethylene glycol di(meth)acrylate, propylene glycol di(meth)acrylate, triethylene glycol di(meth)acrylate, 1,4-butanediol di(meth)acrylate, 1,6-hexanediol di(meth)acrylate, 1,9-nonanediol di(meth)acrylate, 2-n-butyl-2-ethyl-1,3-propanediol di(meth)acrylate, triethylene glycol di(meth)acrylate, tripropylene glycol di(meth)acrylate, tetraethylene glycol di(meth)acrylate, trimethylolpropane tri(meth)acrylate, and pentaerythritol tri(meth)acrylate; amine compounds with 2 or more, preferably 2 or 3 carbon-carbon double bonds such as diallylamine and triallylamine; aromatic compounds with two or more, preferably 2 or 3 carbon-carbon double bonds such as divinylbenzene and diallylbenzene, but the present invention is not limited thereto. These crosslinkable monomers can each be used alone, or two or more can be used in combination.

(3-2) Method for producing urethane (meth)acrylate resin

In still another aspect, the present invention provides a urethane (meth)acrylate resin. A urethane (meth)acrylate resin can be produced by irradiating an ultraviolet ray with a required illuminance onto a urethane acrylate monomer in the presence of a polymerization initiator.

A urethane (meth)acrylate monomer can be produced by reacting a hydroxyl group containing acrylic monomer with diisocyanate. At this time, other components such as another acrylic monomer, polyol (e.g., polyether polyol, polyester polyol, polycarbonate polyol or the like) or the like can be contained.

In one embodiment, a urethane (meth)acrylate resin of the invention can be produced by irradiating an ultraviolet ray to polymerize a monomer component comprising a urethane (meth)acryl monomer obtained by reacting an optionally substituted polyol with a diisocyanate monomer having formula (III):

[Chemical Formula 21]

$$OCN\text{-}R^6\text{-}NCO \qquad (III)$$

wherein $R^6$ represents an optionally substituted divalent aliphatic group, an optionally substituted divalent aromatic group, or an optionally substituted divalent alicyclic group, and then reacting a (meth)acrylate based monomer having a hydroxyl group having formula (IV)

[Chemical Formula 22]

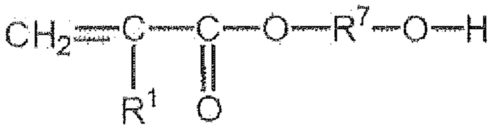

(IV)

wherein $R^1$ is a hydrogen atom or a methyl group, and $R^7$ is an optionally substituted alkylene group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons.

In formula (III), $R^6$ can be a divalent aliphatic group with 3 to 12 carbons. In formula (III), $R^6$ can be a divalent aromatic group with 6 to 18 carbons. In formula (III), $R^6$ can be a divalent alicyclic group with 3 to 12 carbons.

In formula (III), $R^1$ can be a hydrogen atom. In formula (III), $R^1$ can be a methyl group.

The polyol can be selected from the group consisting of a polyether polyol, a polyester polyol, and a polycarbonate polyol.

In another embodiment, a urethane (meth)acryl monomer can be represented by formula (V):

[Chemical Formula 23]

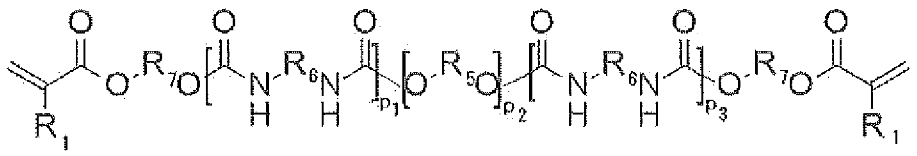

(V)

wherein $R^1$ is a hydrogen atom or a methyl group, $R^5$ is a residue generated by removing two hydroxyl groups from an optionally substituted polyol, $R^6$ represents an optionally substituted divalent aliphatic group, an optionally substituted divalent aromatic group, or an optionally substituted divalent alicyclic group, $R^7$ is an optionally substituted alkylene group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons, and $p_1$, $p_2$, and $p_3$ are each independently an integer from 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, or 1, 2, 3, 4, 5, 6, 7, 8, 9, or 10. The molecular weight can be about 10 thousand to 50 thousand.

$p_1 = p_2 = p_3 = 1$ in formula (V), which can be formula (V'):

[Chemical Formula 23A]

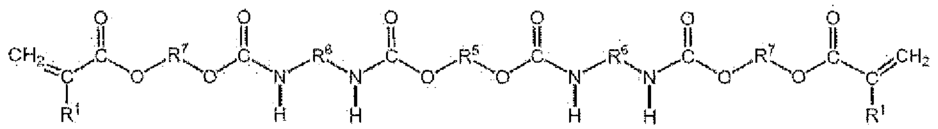

(V')

In formula (V), $R^6$ can be a divalent aliphatic group with 3 to 12 carbons. In formula (V), $R^6$ can be a divalent aromatic group with 6 to 18 carbons. In formula (V), $R^6$ can be a divalent alicyclic group with 3 to 12 carbons.

$R^5$ is a residue generated by removing two hydroxyl groups from a polyol selected from the group consisting of a polyether polyol, a polyester polyol, and a polycarbonate polyol.

The urethane (meth)acryl monomer component can comprise another monomer that is polymerizable by ultraviolet rays as needed. Another monomer can be copolymerizable or not with a urethane (meth)acryl monomer.

Examples of monomers that can be mixed with the urethane (meth)acryl monomer include a carboxyl group containing monomer, carboxylic acid alkyl ester-based monomer (e.g., (meth)acrylic monomers represented by formula (I) or formula (II)), amide group containing monomer, aryl group containing monomer, styrene based monomer, nitrogen atom containing monomer, aliphatic vinyl ester based monomer, betaine monomer, and the like, but the present invention is not limited thereto. These monomers can each be used alone, or two or more can be used in combination. These monomers can be the same as the monomer exemplified as a monomer that is copolymerizable with formula (I) or formula (II).

The urethane(meth)acryl monomer component can further comprise a (meth)acrylic monomer represented by formula (I) :

[Chemical Formula 24]

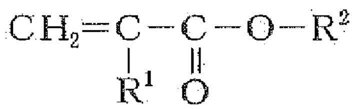

(I)

wherein

$R^1$ is a hydrogen atom or a methyl group, and
$R^2$ is an optionally substituted alkyl group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons or an optionally substituted polyether group with 2 to 20, 2 to 19, 2 to 18, 2 to 17, 2 to 16, 2 to 15, 2 to 14, 2 to 13, 2 to 12, 2 to 11, 2 to 10, 2 to 9, 2 to 8, 2 to 7, 2 to 6, 2 to 5, 2 to 4, 2 to 3, 3 to 20, 3 to 19, 3 to 18, 3 to 17, 3 to 16, 3 to 15, 3 to 14, 3 to 13, 3 to 12, 3 to 11, 3 to 10, 3 to 9, 3 to 8, 3 to 7, 3 to 6, 3 to 5, 3 to 4, 4 to 20, 4 to 19, 4 to 18, 4 to 17, 4 to 16, 4 to 15, 4 to 14, 4 to 13, 4 to 12, 4 to 11, 4 to 10, 4 to 9, 4 to 8, 4 to 7, 4 to 6, 4 to 5, 5 to 20, 5 to 19, 5 to 18, 5 to 17, 5 to 16, 5 to 15, 5 to 14, 5 to 13, 5 to 12, 5 to 11, 5 to 10, 5 to 9, 5 to 8, 5 to 7, 5 to 6, 6 to 20, 6 to 19, 6 to 18, 6 to 17, 6 to 16, 6 to 15, 6 to 14, 6 to 13, 6 to 12, 6 to 11, 6 to 10, 6 to 9, 6 to 8, 6 to 7, 7 to 20, 7 to 19, 7 to 18, 7 to 17, 7 to 16, 7 to 15, 7 to 14, 7 to

13, 7 to 12, 7 to 11, 7 to 10, 7 to 9, 7 to 8, 8 to 20, 8 to 19, 8 to 18, 8 to 17, 8 to 16, 8 to 15, 8 to 14, 8 to 13, 8 to 12, 8 to 11, 8 to 10, 8 to 9, 9 to 20, 9 to 19, 9 to 18, 9 to 17, 9 to 16, 9 to 15, 9 to 14, 9 to 13, 9 to 12, 9 to 11, 9 to 10, 10 to 20, 10 to 19, 10 to 18, 10 to 17, 10 to 16, 10 to 15, 10 to 14, 10 to 13, 10 to 12, 10 to 11, 11 to 20, 11 to 19, 11 to 18, 11 to 17, 11 to 16, 11 to 15, 11 to 14, 11 to 13, 11 to 12, 12 to 20, 12 to 19, 12 to 18, 12 to 17, 12 to 16, 12 to 15, 12 to 14, 12 to 13, 13 to 20, 13 to 19, 13 to 18, 13 to 17, 13 to 16, 13 to 15, 13 to 14, 14 to 20, 14 to 19, 14 to 18, 14 to 17, 14 to 16, 14 to 15, 15 to 20, 15 to 19, 15 to 18, 15 to 17, 15 to 16, 16 to 20, 16 to 19, 16 to 18, 16 to 17, 17 to 20, 17 to 19, 17 to 18, 18 to 20, 18 to 19, 19 to 20, 1, 2, 3, 4, 5, 6, 7, 8, 9, 10, 11, 12, 13, 14, 15, 16, 17, 18, 19, or 20 carbons. This (meth)acrylic monomer can be the same as the monomer of formula (I) in the (meth)acrylic resin described above.

In a compound of formula (I) as a (meth)acrylic monomer contained in the urethane (meth)acryl monomer component, $R^1$ is a hydrogen atom or a methyl group, and
$R^2$ represents an alkyl group with 1 to 10, 1 to 9, 1 to 8, 1 to 7, 1 to 6, 1 to 5, 1 to 4, 1 to 3, 1 to 2, or 1, 2, 3, 4, 5, 6, 7, 8, 9, or 10 carbons optionally substituted with a hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons, or $-[-(CH_2)_n-O-]_m-R^8$, wherein n is an integer from 1 to 20, 1 to 19, 1 to 18, 1 to 17, 1 to 16, 1 to 15, 1 to 14, 1 to 13, 1 to 12, 1 to 11, 1 to 10, 1 to 9, 1 to 8, 1 to 7, 1 to 6, 1 to 5, 1 to 4, 1 to 3, 1 to 2 or 1, 2, 3, 4, 5, 6, 7, 8, 9, 10, 11, 12, 13, 14, 15, 16, 17, 18, 19, or 20, preferably 1 to 10 and more preferably 1 to 4, m is an integer from 1 to 20, 1 to 19, 1 to 18, 1 to 17, 1 to 16, 1 to 15, 1 to 14, 1 to 13, 1 to 12, 1 to 11, 1 to 10, 1 to 9, 1 to 8, 1 to 7, 1 to 6, 1 to 5, 1 to 4, 1 to 3, 1 to 2, or 1, 2, 3, 4, 5, 6, 7, 8, 9, 10, 11, 12, 13, 14, 15, 16, 17, 18, 19, or 20, preferably 1 to 10 and more preferably 1 to 4, and $R^8$ represents an alkyl group with 1 to 12, 1 to 11, 1 to 10, 1 to 9, 1 to 8, 1 to 7, 1 to 6, 1 to 5, 1 to 4, 1 to 3, 1 to 2, 2 to 12, 2 to 11, 2 to 10, 2 to 9, 2 to 8, 2 to 7, 2 to 6, 2 to 5, 2 to 4, 2 to 3, 3 to 12, 3 to 11, 3 to 10, 3 to 9, 3 to 8, 3 to 7, 3 to 6, 3 to 5, 3 to 4, 4 to 12, 4 to 11, 4 to 10, 4 to 9, 4 to 8, 4 to 7, 4 to 6, 4 to 5, 5 to 12, 5 to 11, 5 to 10, 5 to 9, 5 to 8, 5 to 7, 5 to 6, 6 to 12, 6 to 11, 6 to 10, 6 to 9, 6 to 8, 6 to 7, 7 to 12, 7 to 11, 7 to 10, 7 to 9, 7 to 8, 8 to 12, 8 to 11, 8 to 10, 8 to 9, 9 to 12, 9 to 11, 9 to 10, 10 to 12, 10 to 11, 11 to 12, 1, 2, 3, 4, 5, 6, 7, 8, 9, 10, 11, or 12 carbons, a glycidyl group, an aryl group with 6 to 12 carbons optionally substituted with an alky group with 1 to 10, 1 to 9, 1 to 8, 1 to 7, 1 to 6, 1 to 5, 1 to 4, 1 to 3, 1 to 2, 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 1, 2, 3, 4, 5, 6, 7, 8, 9, or 10 carbons (the alkyl group is optionally substituted with an aryl group with 6 to 12 carbons) and/or an aryl group with 6 to 12 carbons, a monoalkylamino carbonyl group with 1 to 12, 1 to 11, 1 to 10, 1 to 9, 1 to 8, 1 to 7, 1 to 6, 1 to 5, 1 to 4, 1 to 3, 1 to 2, 2 to 12, 2 to 11, 2 to 10, 2 to 9, 2 to 8, 2 to 7, 2 to 6, 2 to 5, 2 to 4, 2 to 3, 3 to 12, 3 to 11, 3 to 10, 3 to 9, 3 to 8, 3 to 7, 3 to 6, 3 to 5, 3 to 4, 4 to 12, 4 to 11, 4 to 10, 4 to 9, 4 to 8, 4 to 7, 4 to 6, 4 to 5, 5 to 12, 5 to 11, 5 to 10, 5 to 9, 5 to 8, 5 to 7, 5 to 6, 6 to 12, 6 to 11, 6 to 10, 6 to 9, 6 to 8, 6 to 7, 7 to 12, 7 to 11, 7 to 10, 7 to 9, 7 to 8, 8 to 12, 8 to 11, 8 to 10, 8 to 9, 9 to 12, 9 to 11, 9 to 10, 10 to 12, 10 to 11, 11 to 12, 1, 2, 3, 4, 5, 6, 7, 8, 9, 10, 11, or 12 carbons of alkyl, a dialkylamino carbonyl group with 1 to 12, 1 to 11, 1 to 10, 1 to 9, 1 to 8, 1 to 7, 1 to 6, 1 to 5, 1 to 4, 1 to 3, 1 to 2, 2 to 12, 2 to 11, 2 to 10, 2 to 9, 2 to 8, 2 to 7, 2 to 6, 2 to 5, 2 to 4, 2 to 3, 3 to 12, 3 to 11, 3 to 10, 3 to 9, 3 to 8, 3 to 7, 3 to 6, 3 to 5, 3 to 4, 4 to 12, 4 to 11, 4 to 10, 4 to 9, 4 to 8, 4 to 7, 4 to 6, 4 to 5, 5 to 12, 5 to 11, 5 to 10, 5 to 9, 5 to 8, 5 to 7, 5 to 6, 6 to 12, 6 to 11, 6 to 10, 6 to 9, 6 to 8, 6 to 7, 7 to 12, 7 to 11, 7 to 10, 7 to 9, 7 to 8, 8 to 12, 8 to 11, 8 to 10, 8 to 9, 9 to 12, 9 to 11, 9 to 10, 10 to 12, 10 to 11, 11 to 12, 1, 2, 3, 4, 5, 6, 7, 8, 9, 10, 11, or 12 carbons of alkyl, or a residue of a divalent carboxylic acid with 2 to 10, 2 to 9, 2 to 8, 2 to 7, 2 to 6, 2 to 5, 2 to 4, 2 to 3, 3 to 10, 3 to 9, 3 to 8, 3 to 7, 3 to 6, 3 to 5, 3 to 4, 4 to 10, 4 to 9, 4 to 8, 4 to 7, 4 to 6, 4 to 5, 5 to 10, 5 to 9, 5 to 8, 5 to 7, 5 to 6, 6 to 10, 6 to 9, 6 to 8, 6 to 7, 7 to 10, 7 to 9, 7 to 8, 8 to 10, 8 to 9, 9 to 10, 2, 3, 4, 5, 6, 7, 8, 9, or 10 carbons.

In a compound of formula (I) as a (meth)acrylic monomer contained in the urethane (meth)acryl monomer component, $R^2$ can be an alkyl group with 1 to 10 carbons having an alkoxy substituent with 1 to 10 carbons, or a polyether group with 2 to 16 carbons having an alkoxy substituent with 1 to 10 carbons.

In a compound of formula (I) as a (meth)acrylic monomer contained in the urethane (meth)acryl monomer component, $R^2$ can be an alkoxyalkyl group with 1 to 10 carbons.

In a compound of formula (I) as a (meth)acrylic monomer contained in the urethane (meth)acryl monomer component, $R^2$ can be $-[-(CH_2)_n-O-]_m-R^8$, and $R^8$ can be an alkyl group with 1 to 12 carbons.

In a compound of formula (I) as a (meth)acrylic monomer contained in the urethane (meth)acryl monomer component, $R^1$ can be a hydrogen atom. In a compound of formula (I) as a (meth)acrylic monomer contained in the urethane (meth)acryl monomer component, $R^1$ can be a methyl group.

In a compound of formula (I) as a (meth)acrylic monomer contained in the urethane (meth)acryl monomer component, $R^2$ can be an alkyl group with 1 to 10 carbons optionally substituted with hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons.

In a compound of formula (I) as a (meth)acrylic monomer contained in the urethane (meth)acryl monomer

component, $R^2$ can be an alkyl group with 1 to 10 carbons.

In a compound of formula (I) as a (meth)acrylic monomer contained in the urethane (meth)acryl monomer component, $R^2$ can be an alkyl group with 1 to 10 carbons substituted with a hydroxyl group.

In a compound of formula (I) as a (meth)acrylic monomer contained in the urethane (meth)acryl monomer component, $R^2$ can be an alkyl group with 1 to 10 carbons substituted with a hydroxyl group and an allyloxy group.

In a compound of formula (I) as a (meth)acrylic monomer contained in the urethane (meth)acryl monomer component, $R^2$ can be an alkyl group with 1 to 10 carbons substituted with a halogen atom (F, Cl, Br, I).

In a compound of formula (I) as a (meth)acrylic monomer contained in the urethane (meth)acryl monomer component, $R^2$ can be an alkyl group with 1 to 10 carbons substituted with an arylthio group with 6 to 12 carbons.

In a compound of formula (I) as a (meth)acrylic monomer contained in the urethane (meth)acryl monomer component, $R^2$ can be an alkyl group with 1 to 10 carbons substituted with aryl with 6 to 12 carbons.

In a compound of formula (I) as a (meth)acrylic monomer contained in the urethane (meth)acryl monomer component, $R^2$ can be $-[-(CH_2)_n-O-]_m-R^8$.

In a compound of formula (I) as a (meth)acrylic monomer contained in the urethane (meth)acryl monomer component, n can be 1, 2, 3, or 4.

In a compound of formula (I) as a (meth)acrylic monomer contained in the urethane (meth)acryl monomer component, m can be 1, 2, 3, or 4.

In a compound of formula (I) as a (meth)acrylic monomer contained in the urethane (meth)acryl monomer component, $R^8$ can be an alkyl group with 1 to 12 carbons, a glycidyl group, an aryl group with 6 to 12 carbons optionally substituted with an alky group with 1 to 10 carbons (the alkyl group with 1 to 10 carbons is optionally substituted with an aryl group with 6 to 12 carbons) and/or an aryl group with 6 to 12 carbons, a monoalkylamino carbonyl group with 1 to 12 carbons of alkyl, a dialkylamino carbonyl group with 1 to 12 carbons of alkyl, or a residue of a divalent carboxylic acid with 2 to 10 carbons.

In a (meth)acrylic monomer contained in the urethane (meth)acryl monomer component, $R^2$ can represent an alkyl group with 1 to 10 carbons optionally having a hydroxyl group or a halogen atom, or an alkoxyalkyl group with 2 to 12 carbons optionally having a hydroxyl group.

The (meth)acrylic polymer can have a loss tangent ($\tan\delta$) of 0.2 or less.

The Young's modulus of the (meth)acrylic polymer can be 1.0 Mpa or less.

Since it is difficult to dissolve the urethane (meth)acryl polymer of the invention in a solvent, it is difficult to measure the molecular weight of the urethane (meth)acryl polymer.

The specific monomers used in the invention include the following:

[Table 1-1]

| | **Structure** |
|---|---|
| EA<br>**(Ethyl acrylate)** | 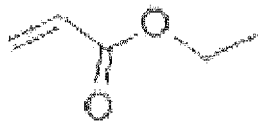 |
| **Nonanol**<br>**(Nonyl acrylate)** | $CH_2=CHC(O)O-(CH_2)_8CH_3$ |
| 1AA<br>**(Isoamyl acrylate)** | 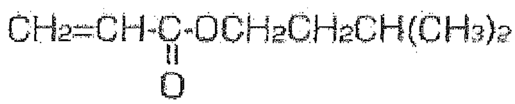 |
| AIB<br>**(Isobutyl acrylate)** | 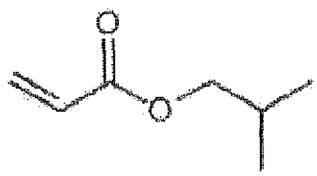 |
| HEA<br>**(2-hydroxyethyl acrylate)** | 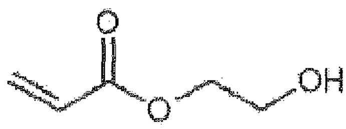 |

(continued)

| | Structure |
|---|---|
| HPA **(Hydroxypropyl acrylate)** | 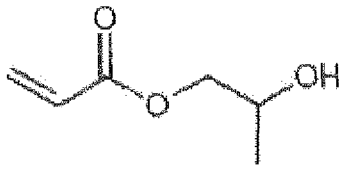 |
| 4 HBA **(4-hydroxybutyl acrylate)** | 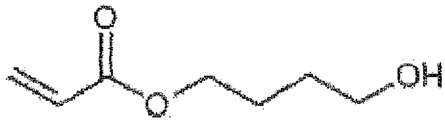 |

[Table 1-2]

| | |
|---|---|
| 6 HHA **(6-hydroxyhexyl acrylate)** | 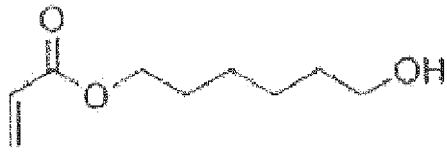 |
| 4 HBAGE **(4-hydroxybutyl acrylate glycidyl ether)** | 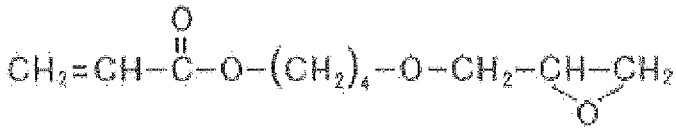 |
| ALHA **(3-allyloxy-1-hydroxypropyl-2-acrylate)** | 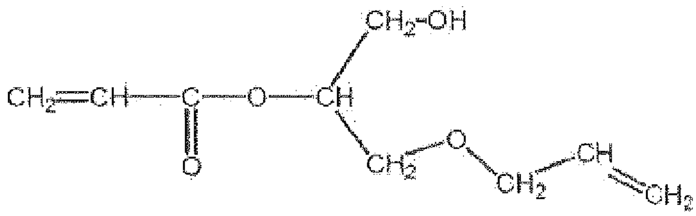 **including the following isomer** 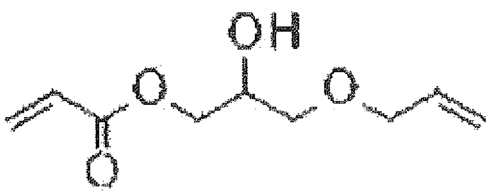 |
| 2 MTA **(Methoxyethyl acrylate)** | 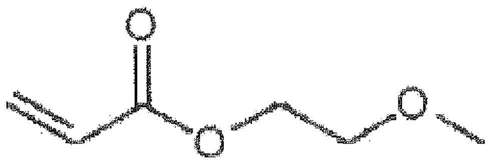 |
| MTG **(Methoxytriethylene glycol acrylate)** | 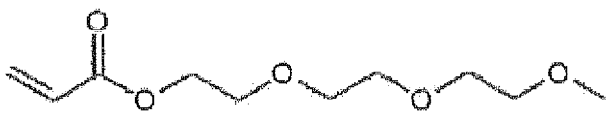 |

[Table 1-3]

| | |
|---|---|
| OXE10<br>**((3-ethyloxetene-3-yl)methyl acrylate)** | 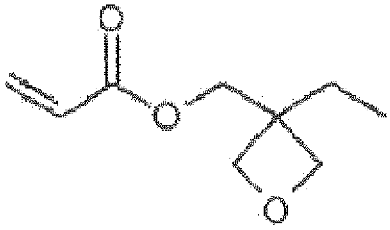 |
| THFA<br>**(Tetrahydrofurfuryl acrylate)** | 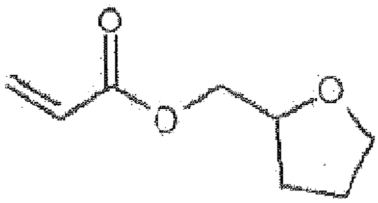 |
| MEDOL10<br>**((2-methyl-2-ethyl-1,3-dioxolane-4-yl) methyl acrylate)** | 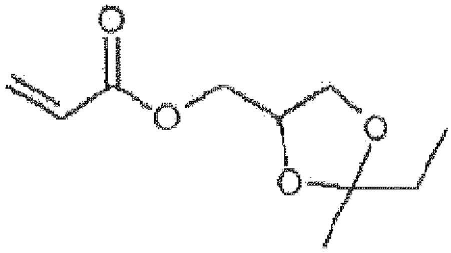 |
| CHDOL-10<br>**(4-acryloyloxymethyl-2' -cyclohexyl-1,3-dioxolane)** | 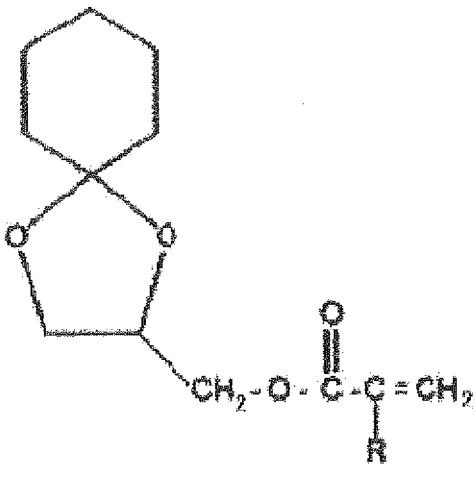<br>R = H |

[Table 1-4]

| | |
|---|---|
| V#200<br>**(Cyclic trimethylolpropane formal acrylate)** | 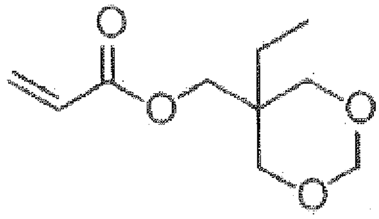 |
| V#3F<br>**(2,2,2-trifluoroethyl acrylate)** | 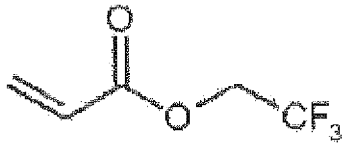 |
| V#8F<br>**(1H,1H,5H-octafluoropentyl acrylate)** | 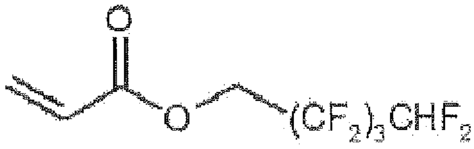 |
| V#192<br>**(Phenoxyethyl acrylate)** | 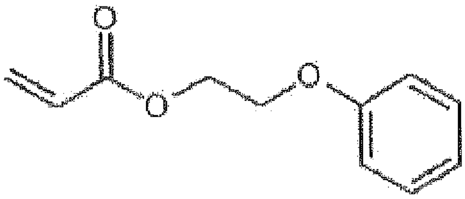 |
| M113<br>**(Nonylphenoxypoly ethylene glycol acrylate)** | 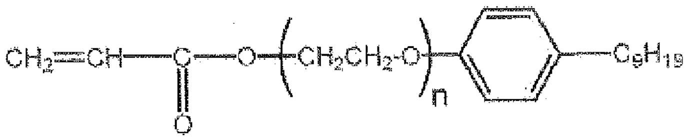<br>(n = 4) |

[Table 1-5]

| | |
|---|---|
| Ph SEA<br>**(Phenylthioethyl acrylate)** | 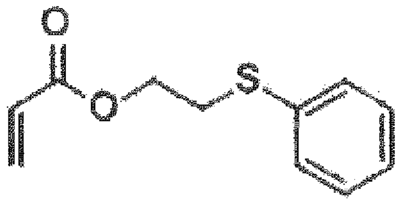 |
| BZA<br>**(Benzyl acrylate)** | 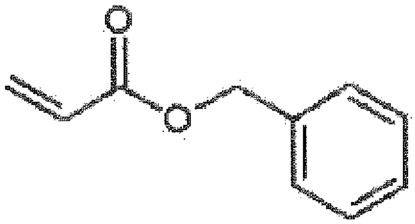 |

(continued)

| | |
|---|---|
| V#315<br>**(Paracumyl phenoxyethylene glycol acrylate)** | 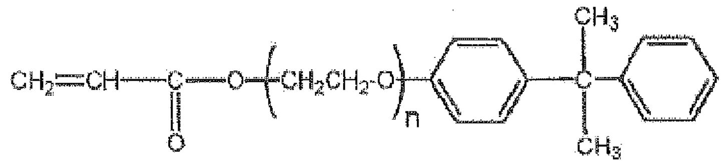<br>(n=1) |
| FA301<br>**(Biphenyloxy ethyl acrylate)** | 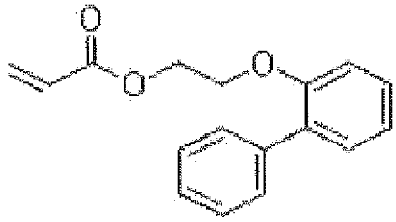 |
| SA<br>**(Mono(2-acryloyloxyethyl] succinate)** | 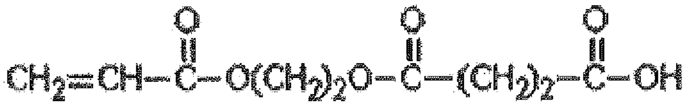 |
| V#174<br>**(Methoxy diethylene glycol acrylate)** | 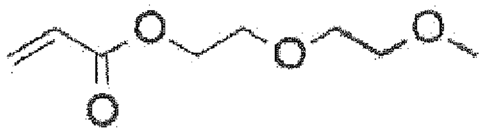 |

[Table 1-6]

| | |
|---|---|
| HABE1<br>**(2-((butylamino) carbonyl)oxy)ethyl acrylate)** | 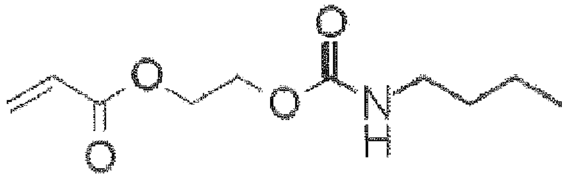 |

A polymerization initiator can be used when polymerizing a monomer component. Examples of polymerization initiators include photoinitiators, thermal initiators, and the like. Among these polymerization initiators, photoinitiators are preferred from the viewpoint of avoiding the creation of thermal history on (meth)acrylic polymers.

Examples of photoinitiators include photoradical initiators such as 2,4,6-trimethylbenzoyldiphenylphosphine oxide, 2,2'-bis(o-chlorophenyl)-4,4',5,5'-tetraphenyl-1,1'-biimidazole, 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-ditert-butyldiphenyliodonium tetrafluoroborate, 4-diethylaminophenylbenzenediazonium hexafluorophosphate, benzoin, 2-hydroxy-2-methyl-1-phenylpropan-2-one, benzophenone, thioxanthone 2,4,6-trimethylbenzoyldiphenylacylphosphine oxide, triphenylbutyl borate tetraethylammonium, diphenyl-4-phenylthiophenylsulfonium hexafluorophosphate, 2,2-dimethoxy-1,2-diphenylethane-1-one, phenylglyoxylic acid methyl ester, 2-methyl-1-[4-(methylthio)phenyl]-2-morpholinopropan-1-one, bis(2,4,6-trimethylbenzoyl)-phenylphosphine oxide, 1,2-octanedione, 1-[4-(phenylthio)-2-(o-benzoyloxime)], and bis(η5-2,4-cyclopentadiene-1-yl)bis[2,6-difluoro-3-(1H-pyrrole-1-yl)phenyltitanium), photocationic ring-opening polymerization initiators such as 2,4,6-tris(trichloromethyl)-1,3,5-triazine, 2,4-bis(trichloromethyl)-6-(p-methoxyphenylvinyl)-1,3,5-triazine, diphenyliodonium tetrafluoroborate, 4,4'-ditert-butyldiphenyliodonium tetrafluoroborate, 4-diethylaminophenylbenzenediazonium hexafluorophosphate, and diphenyl-4-phenylthiophenylsulfonium hexafluorophosphate, and the like, but the present invention is not limited thereto. These photoinitiators can each be used alone, or two or more can be used in combination.

While the amount of polymerization initiator cannot be generalized because the amount varies depending on the type of polymerization initiator, the amount is generally preferred to be about 0.01 to 20 parts by mass per 100 parts by mass of the monomer component.

When a monomer component is subjected to bulk polymerization, a chain transfer agent can be used to adjust the molecular weight of the resulting polymer. Examples of chain transfer agents include compounds having a thiol group such as lauryl mercaptan, dodecyl mercaptan, and thioglycerol; inorganic salts such as sodium hypophosphite and sodium hydrogen sulfite; and the like, but the present invention is not limited thereto. These chain transfer agents can each be used alone, or two or more can be used in combination. While the amount of chain transfer agent cannot be generalized because the amount varies depending on the type of chain transfer agent, the amount is generally preferred to be about 0.01 to 10 parts by mass per 100 parts by mass of the monomer component.

When polymerizing a monomer component, the atmosphere is not particularly limited. The atmosphere can be ambient air or inert gas such as nitrogen gas or argon gas.

When polymerizing a monomer component, the temperature is not particularly limited. Generally, the temperature is preferably about 5 to 10°C. While the time required for polymerizing a monomer component can be any period of time since the time cannot be generalized due to the time varying depending on the polymerization conditions, the time is generally about 1 to 20 hours.

A polymerization reaction can be ended at any time when the amount of residual monomer component is 20% by mass or less. The amount of residual monomer can be measured using, for example, gel permeation chromatography.

The (meth)acrylic polymer of the invention can be obtained by polymerizing a monomer component in the above manner.

While the thickness of a film consisting of the (meth)acrylic polymer is not particularly limited, the thickness is preferably about 10 μm to 2 mm from the viewpoint of obtaining a (meth)acrylic polymer having excellent extensibility and a large amount of displacement at a low applied voltage.

Although a film consisting of the (meth)acrylic polymer can be used as is, depending on the application, the film is preferably uniaxially oriented or biaxially oriented and more preferably biaxially oriented from the viewpoint of imparting toughness. The draw ratio of the film is preferably 1.2-fold or greater, more preferably 1.5-fold or greater, and still more preferably 2-fold or greater from the viewpoint of imparting toughness. While dependent on the thickness of the film, the draw ratio is preferably 8-fold or less, more preferably 6-fold or less, and still more preferably 5-fold or less, from the viewpoint of preventing rupture upon orientation. A film, when oriented, can be heated as needed.

The (meth)acrylic polymer can be a dielectric. The permittivity can be appropriately selected in accordance with the usage. For example, the relative permittivity of the (meth)acrylic polymer of the invention at normal temperature is in the range of 1 to 11, such as 1.0 or greater, 1.1 or greater, 1.2 or greater, 1.3 or greater, 1.4 or greater, 1.5 or greater, 1.6 or greater, 1.7 or greater, 1.8 or greater, 1.9 or greater, 2.0 or greater, 2.1 or greater, 2.2 or greater, 2.3 or greater, 2.4 or greater, 2.5 or greater, 2.6 or greater, 2.7 or greater, 2.8 or greater, 2.9 or greater, 3.0 or greater, 3.1 or greater, 3.2 or greater, 3.3 or greater, 3.4 or greater, 3.5 or greater, 3.6 or greater, 3.7 or greater, 3.8 or greater, 3.9 or greater, 4.0 or greater, 4.1 or greater, 4.2 or greater, 4.3 or greater, 4.4 or greater, 4.5 or greater, 4.6 or greater, 4.7 or greater, 4.8 or greater, 4.9 or greater, 5.0 or greater, 5.1 or greater, 5.2 or greater, 5.3 or greater, 5.4 or greater, 5.5 or greater, 5.6 or greater, 5.7 or greater, 5.8 or greater, 5.9 or greater, 6.0 or greater, 6.1 or greater, 6.2 or greater, 6.3 or greater, 6.4 or greater, 6.5 or greater, 6.6 or greater, 6.7 or greater, 6.8 or greater, 6.9 or greater, 7.0 or greater, 7.1 or greater, 7.2 or greater, 7.3 or greater, 7.4 or greater, 7.5 or greater, 7.6 or greater, 7.7 or greater, 7.8 or greater, 7.9 or greater, 8.0 or greater, 8.1 or greater, 8.2 or greater, 8.3 or greater, 8.4 or greater, 8.5 or greater, 8.6 or greater, 8.7 or greater, 8.8 or greater, 8.9 or greater, 9.0 or greater, 9.1 or greater, 9.2 or greater, 9.3 or greater, 9.4 or greater, 9.5 or greater, 9.6 or greater, 9.7 or greater, 9.8 or greater, 9.9 or greater, 10.0 or greater, 10.1 or greater, 10.2 or greater, 10.3 or greater, 10.4 or greater, 10.5 or greater, 10.6 or greater, 10.7 or greater, 10.8 or greater, or 10.9 or greater, and 11.0 or less, 10.9 or less, 10.8 or less, 10.7 or less, 10.6 or less, 10.5 or less, 10.4 or less, 10.3 or less, 10.2 or less, 10.1 or less, 10.0 or less, 9.9 or less, 9.8 or less, 9.7 or less, 9.6 or less, 9.5 or less, 9.4 or less, 9.3 or less, 9.2 or less, 9.1 or less, 9.0 or less, 8.9 or less, 8.8 or less, 8.7 or less, 8.6 or less, 8.5 or less, 8.4 or less, 8.3 or less, 8.2 or less, 8.1 or less, 8.0 or less, 7.9 or less, 7.8 or less, 7.7 or less, 7.6 or less, 7.5 or less, 7.4 or less, 7.3 or less, 7.2 or less, 7.1 or less, 7.0 or less, 6.9 or less, 6.8 or less, 6.7 or less, 6.6 or less, 6.5 or less, 6.4 or less, 6.3 or less, 6.2 or less, 6.1 or less, 6.0 or less, 5.9 or less, 5.8 or less, 5.7 or less, 5.6 or less, 5.5 or less, 5.4 or less, 5.3 or less, 5.2 or less, 5.1 or less, 5.0 or less, 4.9 or less, 4.8 or less, 4.7 or less, 4.6 or less, 4.5 or less, 4.4 or less, 4.3 or less, 4.2 or less, 4.1 or less, 4.0 or less, 3.9 or less, 3.8 or less, 3.7 or less, 3.6 or less, 3.5 or less, 3.4 or less, 3.3 or less, 3.2 or less, 3.1 or less, 3.0 or less, 2.9 or less, 2.8 or less, 2.7 or less, 2.6 or less, 2.5 or less, 2.4 or less, 2.3 or less, 2.2 or less, 2.1 or less, 2.0 or less, 1.9 or less, 1.8 or less, 1.7 or less, 1.6 or less, 1.5 or less, 1.4 or less, 1.3 or less, 1.2 or less, or 1.1 or less. Any combination of these numerical values can be selected. For example, the relative permittivity is in the range of 3 to 10 or 4 to 9 and preferably 4.2 to 8.2 or 4 to 5.

The (meth)acrylic dielectric material of the invention is characterized by comprising the (meth)acrylic polymer. The (meth)acrylic dielectric material of the invention comprises the (meth)acrylic polymer, so that the material attains

an excellent effect of exhibiting a large amount of displacement even when a low voltage is applied.

The (meth)acrylic dielectric material of the invention can comprise an appropriate amount of other polymers to adjust the viscosity thereof.

Examples of other polymers include acryl resin, polyacrylonitrile, poly(meth)acrylamide, polyamide, polyvinyl chloride, polyurethane, polyester, carboxymethyl cellulose, and the like, but the present invention is not limited thereto. These other polymers can each be used alone, or two or more can be used in combination.

The (meth)acrylic dielectric material of the invention can comprise an additive to the extent that the objective of the invention is not obstructed. Examples of additives include colorants, ultraviolet ray blocking agent, antioxidants, and the like, but the present invention is not limited thereto.

Since the (meth)acrylic dielectric material of the invention exhibits a large amount of displacement even when a low voltage is applied, the material is expected to be used in, for example, an actuator, sensor used in an industrial robot or the like, power generating element, speaker, microphone, noise canceller, transducer, artificial muscle, small pump, medical instrument, or the like. Since the (meth)acrylic dielectric material of the invention exhibits a large amount of displacement even when a low voltage is applied, the material can be suitably used particularly in actuators.

One of the features of the actuator of the invention is in using the (meth)acrylic dielectric material. The actuator of the invention manifests an excellent effect of exhibiting a large amount of displacement even when a low voltage is applied because the (meth)acrylic dielectric material is used.

Actuators use a material that is displaced by application of a voltage. Thus, the actuator of the invention does not necessarily need to have a property of low strain (low hysteresis) depending on the usage. When a polymer with a desired strain is required, the material can be produced as a material adjusted to have a desired strain in accordance with the method of the invention.

The actuator of the invention is described hereinafter based on the drawings, but the present invention is not limited to only the illustrated embodiments.

Figure **2** is a schematic plain view depicting an embodiment of the actuator of the invention. Figure **3** is a schematic cross-sectional view at the portion A-A of the actuator depicted in Figure **2.**

As depicted in Figures **2** and **3**, an actuator **1** is comprised of a film **2** consisting of a (meth)acrylic dielectric material and a pair of electrodes **3a**, **3b.** The film **2** and the electrodes **3a**, **3b** can be pasted together with a conductive paste (not shown). Examples of conductive paste include conductive paste comprising a conductive filler such as carbon or silver and the like.

The film **2** is uniaxially oriented or biaxially oriented and preferably biaxially oriented. The draw ratio of the film **2** is not particularly limited, but the draw ratio of the film is preferably 1.2-fold or greater, more preferably 1.5-fold or greater, and still more preferably 2-fold or greater from the viewpoint of imparting toughness. While dependent on the thickness of the film, the draw ratio is preferably 8-fold or less, more preferably 6-fold or less, and still more preferably 5-fold or less, from the viewpoint of preventing rupture upon orientation.

The thickness of the film **2** is preferably 1 to 100 μm, more preferably 1 to 80 μm, and still more preferably 1 to 50 μm, and yet still more preferably 1 to 30 μm from the viewpoint of configuring the actuator **1** to exhibit a large amount of displacement even when a low voltage is applied.

As depicted in Figure **3,** the electrodes **3a**, **3b** are disposed on both surfaces of the film **2** so as to face each other. The electrodes **3a**, **3b** are comprised of an electrode material. Examples of electrode materials include metals or metal oxides such as indium tin oxide (ITO), antimony tin oxide (ATO), fluorine-doped tin oxide (FTO), fluorine tin oxide (FTO), aluminum zinc oxide (AZO), gallium zinc oxide (GZO), tin oxide (NESA), indium zinc oxide (IZO), silver oxide, vanadium oxide, molybdenum oxide, gold, silver, platinum, copper, indium, and chromium, silicon-based materials such as polycrystalline silicon and amorphous silicon, and carbon materials such as carbon black, carbon nanotube, graphene, carbon nanohorn, graphite, and glassy carbon, and the like, but the present invention is not limited thereto. These electrode materials can each be used alone, or two or more can be used in combination.

The shape, size, and thickness of the electrodes **3a**, **3b** are not particularly limited and can be determined to have any value in accordance with the application of the actuator 1. Examples of the shape of the electrodes **3a**, **3b** include circle, oval, triangle, square, rectangle, and the like, but the present invention is not limited thereto. Examples of the size of the electrodes **3a**, **3b** include a circular shape with a diameter of 1 to 20 mm and the like. While the thickness of the electrodes **3a**, **3b** is not particularly limited, the thickness is generally about 50 to 500 μm.

A terminal **4a** is provided on the outer circumferential surface of the electrode **3a** in the diametric direction. A terminal **4b** is provided on the outer circumferential surface of the electrode **3b** in the diametric direction. The terminals **4a**, **4b** are connected to a power source **6** via conducting wires **5a**, **5b**, respectively.

When a voltage is applied to the electrodes **3a**, **3b** with the power source **6**, electrostatic attraction is generated between the electrodes **3a**, **3b** and compresses the film **2.** Thus, the thickness of the film **2** decreases, and the film **2** is elongated in the width direction. The electrodes **3a**, **3b** are elongated at this time in the width direction with the film **2.**

By installing a marker **7** on the electrode **3a**, the amount of displacement of the actuator **1** when a voltage is applied to the electrodes **3a**, **3b** can be measured with a displacement gauge **8.**

Since the actuator of the invention uses a (meth)acrylic dielectric material as described above, a large amount of displacement is exhibited even when a low voltage is applied.

[Monomer synthesis method]

The starting monomer used in the present invention can be a commercially available monomer or prepared in accordance with a method that is well known to those skilled in the art.

[Photopolymerization method]

The polymer of the invention is obtained by photopolymerization of a starting monomer component including the starting monomer thereof.

A desired molded product is obtained by forming a mold corresponding to a desired shape, introducing a starting material monomer component into the mold, irradiating an ultraviolet ray with an illuminance that results in a desired strain to form a polymer, and retrieving the generated polymer from the mold. This method can be used when a starting material monomer component has low viscosity.

When the starting monomer component has a high viscosity, a desired film product can be obtained by applying the starting monomer component on a flat surface and irradiating an ultraviolet light with an illuminance that results in a desired strain to form a polymer. For example, a film consisting of a (meth)acrylic polymer can be obtained by allowing a monomer component to flow and stretch on a substrate and irradiating an ultraviolet ray on coating of a formed film of the monomer component or the like to polymerize the monomer component.

[Determination of polymer with a desired strain]

A desired polymer can be selected in accordance with the loss tangent (tanδ), molecular weight, and residual strain of the resulting polymers. A desired polymer can also be selected by measuring Young's modulus.

(5) Application

The polymer of the invention or a polymer obtained by the manufacturing method of the invention can be a flexible polymer (e.g., elastomer) with a low Young's modulus.

A polymer manufactured by the present invention is a polymer (e.g., elastomer) having a desired strain, which can be used in an electronic material, a medical material, a healthcare material, a life science material, a robot material, or the like. The polymer of the invention can be used as a material of, for example, catheters, guide wires, medical containers, tubes, or the like.

A polymer with a desired strain can be molded into a film and used an electronic material as a wiring protection film.

A polymer with a desired strain can be molded into a desired shape and used as a medical material or healthcare material.

The polymer of the invention is used in synthetic resins, pellets, films, plates, fibers, foaming agents, tubes, rubber, elastomers, and the like, which can be applied in a wide range of fields, such as two-wheeled vehicles (bicycles, motorcycles, and the like), automobiles, airplanes, trains, ships, rockets, spacecrafts, transportation, leisure, furniture (e.g., tables, chairs, desks, shelves, and the like), bedding (e.g., beds, hammocks, and the like), clothes, protective clothing, sports equipment, bathtubs, kitchens, tableware, cooking utensils, containers and packaging materials (food containers, cosmetic containers, cargo containers, trash cans, and the like), architecture (buildings, roads, construction parts, and the like), agricultural films, industrial films, water and sewage systems, paint, cosmetics, electric machinery/equipment manufacturing industry and electronics industry (electric appliances, computer parts, printed circuit boards, insulators, conductors, wiring coating materials, power generating elements, speakers, microphones, noise cancellers, transducers, and the like), optical communication cables, medical materials and instruments (catheters, guidewires, artificial blood vessels, artificial muscles, artificial organs, dialysis membranes, endoscopes, and the like), small pumps, actuators, robot materials (sensors used in industrial robots or the like), energy generating devices and plants (photovoltaic and wind power generation), and the like.

The polymer of the invention can be used in automotive parts (vehicle body panels, bumper strips, rocker panels, side moldings, engine parts, power train parts, transmission parts, steering device parts, stabilizer parts, suspension/braking device parts, brake parts, shaft parts, pipes, tanks, wheels, seats, seat belts, and the like). The polymer of the invention can be used in automotive vibration proofing materials, automotive paint, automotive synthetic resin, and the like.

Reference literatures such as scientific literatures, patents, and patent applications cited herein are incorporated

herein by reference to the same extent that the entirety of each document is specifically described.

The present invention has been described above while presenting preferred embodiments to facilitate the understanding. While the present invention is described hereinafter based on Examples, the above descriptions and the following Examples are not provided to limit the present invention, but for the sole purpose of exemplification. Thus, the scope of the present invention is not limited to the embodiments and Examples specifically described herein and is limited only by the scope of claims.

[Examples]

While the present invention is described more specifically with the following Examples, such Examples should not limit the interpretation of the present invention. Examples obtained by appropriately combining the technical means disclosed in each Example are also within the scope of the present invention.

(Example 1: Measurement of illuminance of ultraviolet ray resulting in a given strain)

Illuminance of an ultraviolet ray for producing a polymer with a given strain is determined by the following procedure.

[Derivation of relationship between strain-illuminance]

1) Provision of starting material monomer

A suitable monomer is selected for each specific example for Example 2 and Examples thereafter. For example, for the (meth)acrylic polymer in Example 2, a monomer component comprising a polymerization initiator is provided by mixing 7.03 g of ethyl acrylate, 0.17 g of diethylene glycol dimethacrylate, and 0.0042 g of 2,4,6-trimethylbenzoyl diphenylphosphine oxide [BASF, product name: Irgacure TPO] as the polymerization initiator.

2) Irradiation of ultraviolet ray with specific illuminance onto the starting material monomer for polymerization

Once an appropriate monomer component is obtained for each Example, an ultraviolet ray is irradiated thereon. For example, for Example 2, the obtained monomer component is injected into a transparent glass mold with a release film (vertical: 100 mm, horizontal: 100 mm, depth: 0.3 mm), and then an ultraviolet ray is irradiated on the monomer component so that the amount of irradiated rays is 0.5 to 50 $mW/cm^2$ to subject the monomer component to bulk polymerization.

3) Measurement of strain of generated polymer

(Measurement of residual strain)

Residual strain of a polymer is measured as follows. The resulting polymer was punched out into a dumbbell shape No. 7 specified in JIS K6251 to obtain a test piece. The resulting test piece was mounted so that the distance between chucks on a tensile tester [A&D Company, Limited, model number: Tensilon RTG-1310] was 17 mm. A tensile load was applied at a tensile speed of 50 mm/min until the test piece stretched 100%. This was repeated three times in a cycle to calculate the residual strain from the resulting graph. If the graph in Figure 1 is used for explanation, residual strain is calculated by

[Numeral 1]

$$\text{Residual strain} = (1 - B/A) \times 100$$

wherein A is a value from subtracting the extension (%) when stress for extension is required from 100%. B is a value from subtracting the extension (%) when stress for extension is required from the extension (%) when stress is no longer needed upon contraction.

(Measurement of loss tangent (tanδ))

The tanδ was measured by using a rheometer (Anton Paar, model number: MCR302) under the temperature of 30°C, strain speed of 0.1 to 100 Hz, and size of 12 mm φ and thickness of 1 to 2 mm.

(Calculation of illuminance resulting in desired strain)

Illuminance resulting in desired strain is calculated by plotting measured values of illuminance of the ultraviolet rays used and the strain at the time. For example, for the (meth)acryl polymer of Example 2, illuminance of 0.5 mW/cm$^2$, 10 mW/cm$^2$, or 50 mW/cm$^2$ is irradiated, and each of the loss tangent (tan$\delta$) and residual strain is measured. Illuminance resulting in a desired strain is calculated. For the urethane acrylate polymer of Example 2, illuminance of 140 mW/cm$^2$, 720 mW/cm$^2$, or 1280 mW/cm$^2$ is irradiated, and each of loss tangent (tan$\delta$) and residual strain is measured. The relationship between illuminance and strain is calculated for each monomer.

In this regard, the following is an exemplary procedure for selecting illuminance of the residual strain of interest or less.

1. A monomer that is actually used is cured with ultraviolet rays at a plurality of levels of illuminance, and strain of each cured polymer is measured.
2. The relational expression of illuminance of ultraviolet rays and strain is established from the measurement values. Strain can be expressed by loss tangent, residual strain, or the like.
3. Illuminance corresponding to a desired strain is calculated based on the relational expression.
4. An ultraviolet ray at said illuminance is selected.
5. A monomer is cured using the ultraviolet ray selected for the moment..
6. The strain of the cured polymer is measured to confirm whether the polymer has the desired strain.
7. A polymer with the desired strain is selected.

[Measurement method]

(Measurement of molecular weight)

The molecular weight can be calculated when determining the illuminance of the invention. The weight average molecular weight of a polymer is calculated by studying the obtained polymer using gel permeation chromatography [Tosoh Corporation, model number: HLC-8320GPC, column: Tosoh Corporation, model number: TSKgel GMHHR, solvent: tetrahydrofuran, flow rate: 0.6 mL/min] in units of polystyrene and finding the distribution of the molecular weights.

(Example 2)

Acryl resin (1)

A monomer component comprising a polymerization initiator was obtained by mixing 7.03 g of ethyl acrylate, 0.17 g of diethylene glycol dimethacrylate, and 0.0042 g of 2,4,6-trimethylbenzoyl diphenylphosphine oxide [BASF, product name: Irgacure TPO] as the polymerization initiator.

A (meth)acrylic elastomer was obtained by injecting the resulting monomer component into a transparent glass mold with a release film (vertical: 100 mm, horizontal: 100 mm, depth: 0.3 mm), and then irradiating an ultraviolet ray on the monomer component so that the amount of irradiated rays was 0.5 to 50 mW/cm$^2$ to subject the monomer component to bulk polymerization. The following Table 1 shows the measurement results.

(Example 3)

Acryl resin (2)

A monomer component comprising a polymerization initiator was obtained by mixing 30.01 g of ethyl acrylate, 0.35 g of 2-hydroxyethyl acrylate, and 0.038 g of 2,4,6-trimethylbenzoyl diphenylphosphine oxide [BASF, product name: Irgacure TPO] as the polymerization initiator.

A (meth)acrylic elastomer was obtained by injecting the resulting monomer component into a transparent glass mold with a release film (vertical: 100 mm, horizontal: 100 mm, depth: 2 mm), and then irradiating an ultraviolet ray on the monomer component so that the amount of irradiated rays was 0.5 to 50 mW/cm$^2$ to subject the monomer component to bulk polymerization. The following Table 2 shows the measurement results.

(Example 4A)

Urethane acrylate resin (1)

A monomer component was obtained by mixing 60.02 g of polyether polyol ADEKA polyether CM-294 [ADEKA], 30.67 g of 2-methoxyethyl acrylate, 0.02 g of Neostann U-100 [Nitto Kasei Co., Ltd], and 0.0358 g of dibutylhydroxytoluene.
The resulting monomer component was heated to a temperature of 60°C. 6.90 g of isophorone diisocyanate was added and the mixture was incubated at 60°C for 30 minutes. The temperature was then raised to 70°C and the mixture was incubated for 3.5 hours. 4.64 g of 2-hydroxyethyl acrylate was then added and the mixture was incubated for 1.5 hours. The mixture was cooled to room temperature to obtain 90.14 g of urethane acrylate solution.
A urethane acrylate solution comprising a polymerization initiator was obtained by mixing 6.22 g of the resulting urethane acrylate solution and 0.0624 g of 2,4,6-trimethylbenzoyl diphenylphosphine oxide [BASF, product name: Irgacure TPO] in a planetary centrifugal mixer. A polyurethane acrylate elastomer was obtained by applying the resulting urethane acrylate solution onto a release film with an applicator at room temperature until the thickness would be about 600 μm, and irradiating an ultraviolet ray so that the amount of irradiated rays was 140 to 1280 mW/cm$^2$ to subject the urethane acrylate solution to bulk polymerization.. The following Table 2 shows the measurement results.

(Results of measurement)

[Table 2]

| Measurement method | Main component | Acryl resin (1) | | | | | | | | |
|---|---|---|---|---|---|---|---|---|---|---|
| Rheometer | Light source | Black light | Short-arc | Electrodeless | LED | | | | | |
| | Illuminance (mW/cm2) | 0.5 | 10 | 50 | 0.5 | 1 | 10 | 20 | 30 | 50 |
| | tan δ | 0.0653 | 0.0577 | 0.237 | 0.0681 | 0.0987 | 0.0979 | 0.2964 | 0.378 | 0.335 |
| GPC | Molecular weight | 2,820,628 | 2,278,252 | 1,267,114 | 2,294,529 | 2,904,906 | 1,883,528 | 1,315,003 | 1,620,000 | 517,641 |
| Tensile tester | Residual strain | 0.00 | 0.00 | 15.00 | 0.00 | 0.00 | 0.00 | 12.4 | 14.8 | Unmeasurable |

| Measurement method | Main component | Urethane acrylate resin (1) | | | Acryl resin (2) | |
|---|---|---|---|---|---|---|
| Rheometer | Light source | Electrodeless | | | Black light | Electrodeless |
| | Illuminance (mW/cm2) | 140 | 720 | 1280 | 0.5 | 50 |
| | tan δ | 0.117 | 0.195 | 0.124 | 0.131 | 0.286 |
| GPC | Molecular weight | Insoluble | Insoluble | Insoluble | 2,033,234 | 591,158 |
| Tensile tester | Residual strain | 0.00 | 4.07 | 3.53 | 5.41 | 40.6 |

Unmeasurable: insufficient progression in polymerization, with low molecular weight, which means that the shape is not maintained as a film (solid).

Lamps other than LEDs contain various wavelengths, and the intensities thereof can also vary. Thus, it is

understood that different results were obtained even at the same illuminance depending on the light source used. If the relationship between each light source and resulting strains is derived, illuminance resulting in a desired strain can be determined.

It is understood that strain can be controlled by controlling the illuminance of exposed light. It is understood that an elastomer with a lower strain is obtained from exposed light with lower illuminance. It is understood that the molecular weight is greater and the loss tangent (tanδ) is smaller from exposed light with lower illuminance.

(Example 4B)

Urethane acrylate resin (2)

A monomer component was obtained by mixing 20.02 g of polycarbonate polyol Duranol T5651 [Asahi Kasei], 30.67 g of 2-methoxyethyl acrylate, 0.02 g of Neostann U-100 [Nitto Kasei Co., Ltd], and 0.0358 g of dibutylhydroxytoluene.

The resulting monomer component was heated to a temperature of 60°C. 6.90 g of isophorone diisocyanate was added and the mixture was incubated at 60°C for 30 minutes. The temperature was then raised to 70°C and the mixture was incubated for 3.5 hours. 3.48 g of 2-hydroxyethyl acrylate was then added and the mixture was incubated for 1.5 hours. The mixture was then cooled to room temperature to obtain a urethane acrylate solution.

A urethane acrylate solution comprising a polymerization initiator was obtained by mixing 6.22 g of the resulting urethane acrylate solution and 0.0624 g of 2,4,6-trimethylbenzoyl diphenylphosphine oxide [BASF, product name: Irgacure TPO] in a planetary centrifugal mixer. A polyurethane acrylate elastomer was obtained by applying the resulting urethane acrylate solution onto a release film with an applicator at room temperature until the thickness was about 600 μm, and irradiating an ultraviolet ray so that the amount of irradiated rays was 140 $mW/cm^2$ to subject the urethane acrylate solution to bulk polymerization. tanδ was 0.30 and residual strain was 0.49.

(Example 5)

A monomer component comprising a polymerization initiator was obtained by mixing 100.00 g of ethyl acrylate, 0.242 g of diethylene glycol dimethacrylate, and 0.125 g of 2,4,6-trimethylbenzoyl diphenylphosphine oxide [BASF, product name: Irgacure TPO] as the polymerization initiator.

A (meth)acrylic elastomer was obtained by injecting the resulting monomer component into a transparent glass mold (vertical: 100 mm, horizontal: 100 mm, depth: 2 mm), and then irradiating an ultraviolet ray on the monomer component so that the amount of irradiated rays was 0.56 $mW/cm^2$ to subject the monomer component to bulk polymerization.

Since the monomer component comprises a crosslinkable monomer diethylene glycol dimethacrylate, the resulting (meth)acrylic polymer swelled due to an organic solvent, but did not dissolve into the organic solvent. In this regard, a monomer component comprising a polymerization initiator was obtained as said monomer component by mixing 100.00 g of ethyl acrylate and 2,4,6-trimethylbenzoyl diphenylphosphine oxide [BASF, product name: Irgacure TPO] (0.125 g) as the polymerization initiator. A (meth)acrylic elastomer was prepared by polymerizing the monomer component in the same manner described above.

The weight average molecular weight of the resulting (meth)acrylic elastomer was 2.15 million.

The resulting (meth)acrylic elastomer was taken out from a mold to produce a film consisting of a (meth)acrylic elastomer with a vertical length of about 100 mm, a horizontal length of about 100 mm, and thickness of about 0.5 mm [(meth)acrylic dielectric material].

When the Young's modulus of the resulting film was measured using a tensile tester [A&D Company, Limited, model number: Tensilon RTG-1310], the Young's modulus was 0.33 MPa. This confirmed that the resulting film had a high hardness. Furthermore, the relative permittivity of the resulting film was measured in accordance with the method specified in JIS C2103.

Measuring instrument

*solartron IMPEDANCE/GAIN-PHASE ANALYZER SI 1260
*solartron DIELECTRIC ITERFACE 1296
*Cell holder SH2-Z

Calculation method

$$C = \varepsilon \times \varepsilon(0) \times (S/d)$$

C: capacitance (pF)
ε(0): vacuum permittivity = 8.854 (pF/m)

$$\varepsilon = (C \times d)/[\varepsilon(0) \times S]$$

S: sample area ($m^2$)
d: sample thickness (m)
ε: relative permittivity of sample (dimensionless)

The relative permittivity was 5.0.

The resulting film was biaxially oriented at a draw ratio of 4-fold in the longitudinal and transverse directions, and the film was fixed to a mold in an elongated state.

A conductive paste (carbon grease) was then applied to the center portion of both sides of the film to form an electrode (diameter: 9 mm, thickness: 100 μm) to obtain an actuator.

A voltage was applied to the electrodes of the resulting actuator. The amount of displacement of the actuator when the voltage was raised, and a rate of change thereof were studied based on the following method. As a result, the amount of displacement of the actuator when the applied voltage was 2.5 kV was 0.670 mm. Figure **4** shows the results of measuring the rate of change in the amount of displacement of the actuator when the voltage was increased.

[Amount of displacement and rate of change thereof]

A displacement measurement marker was attached to one of the electrodes of an actuator. The amount of displacement (mm) of the marker when a direct voltage was applied between the electrodes with a voltage amplifier [Matsusada Precision Inc., model number: HEOPS-10B2] was measured with a displacement gauge [Keyence Corporation, model number: LK-GD500], and then the rate of change in the amount of displacement was found based on the equation:

[Rate of change in the amount of displacement (%)]
= [(amount of displacement (mm)/radium of electrode prior to applying voltage (mm))] × 100.

(Example 6)

A (meth)acrylic elastomer was prepared in the same manner as Example 5, except for using 100 g of methoxyethyl acrylate instead of 100.00 g of ethyl acrylate in Example 5. A film consisting of a (meth)acrylic elastomer [(meth)acrylic dielectric material] with a vertical length of about 100 mm, horizontal length of about 100 mm, and thickness of about 0.5 mm was produced.

The weight average molecular weight of the resulting (meth)acrylic elastomer was 4.24 million.

When the Young's modulus of the resulting film was measured in the same manner as Example 5, the Young's modulus was 0.12 MPa. This confirmed that the resulting film had excellent flexibility. Furthermore, the relative permittivity of the resulting film, when measured in the same manner as Example 5, was 8.2.

Next, the resulting film was used to produce an actuator in the same manner as Example 5. A voltage was applied to the electrodes of the actuator. The amount of displacement of the actuator when the voltage was increased and the rate of change thereof were studied in the same manner as Example 5. As a result, the amount of displacement of the actuator when 1 kV of voltage was applied was 0.618 mm. Figure **4** shows the results of measuring the rate of change in the amount of displacement of the actuator when the voltage.was increased.

(Example 7)

A monomer component comprising a polymerization initiator was obtained by mixing 100 g of (2-methyl-2-ethyl-1,3-dioxolane-4-yl)methyl acrylate [Osaka Organic Chemical Industry Ltd., product name: MEDOL-10] and 0.03 g of 2,4,6-trimethylbenzoyl diphenylphosphine oxide [BASF, product name: Irgacure TPO] as the polymerization initiator.

A (meth)acrylic elastomer was obtained by injecting the resulting monomer component into a transparent glass mold (vertical: 100 mm, horizontal: 100 mm, depth: 0.5 mm), and then irradiating an ultraviolet ray on the monomer component so that the amount of irradiated rays was 0.56 mW/cm$^2$ to subject the monomer component to bulk polymerization.

The resulting (meth)acrylic elastomer was taken out from a mold to produce a film [(meth)acrylic dielectric material] consisting of a (meth)acrylic elastomer with a vertical length of about 100 mm, a horizontal width of about 100 mm, and thickness of about 0.5 mm.

When the Young's modulus of the resulting film was measured using a tensile tester [A&D Company, Limited, model number: Tensilon RTG-1310], the Young's modulus was 0.05 MPa. This confirmed that the resulting film had a high flexibility. Further, the relative permittivity of the resulting film was measured in the same manner as Example 5 in accordance with the method specified in JIS C2103. The relative permittivity of the film was 4.3.

The resulting film was biaxially oriented at a draw ratio of 4-fold in the longitudinal and transverse directions, and the film was fixed to a mold in an elongated state.

A conductive paste (carbon grease) was then applied to the center portion of both sides of the film to form an electrode (diameter: 9 mm, thickness: 100 μm) to obtain an actuator.

A voltage was applied to the electrodes of the resulting actuator. The amount of displacement of the actuator when the voltage was increased and a rate of change thereof were studied based on the following method. As a result, the amount of displacement of the actuator when the applied voltage was 3.5 kV, was 2.3 mm. Figure **4** shows the results of measuring the rate of change in the amount of displacement of the actuator when the voltage was increased.

[Amount of displacement and rate of change thereof]

A displacement measurement marker was attached to one of the electrodes of an actuator. The amount of displacement (mm) of the marker when a direct voltage was applied between the electrodes with a voltage amplifier [Matsusada Precision Inc., model number: HEOPS-10B2] was measured with a displacement gauge [Keyence Corporation, model number: LK-GD500], and then the rate of change in the amount of displacement was found based on the equation:

[Rate of change in the amount of displacement (%)]
= [(amount of displacement (mm)/radium of electrode prior to applying voltage (mm))] × 100.

Comparative Example 1

An actuator was produced in the same manner as Example 5 except for using acryl foam structure bonding tape conventionally used in actuators [3M Japan Limited, model number: VHB 4910, material thickness: 1 mm] instead of a film consisting of a (meth)acrylic elastomer in Example 5. A voltage was applied to electrodes of the actuator. The amount of displacement of the actuator when the voltage was increased was studied in the same manner as Example 5. As a result, the amount of displacement of the actuator when 1 kV of voltage was applied was 0.014 mm. The amount of displacement of the actuator when 2.5 kV of voltage was applied was 0.112 mm. The amount of displacement of the actuator when 3.5 kV of voltage was applied was 0.210 mm. Figure **4** shows the results of measuring the rate of change in the amount of displacement of the actuator when the voltage was increased.

The Young's modulus of the acryl foam structure bonding tap, when measured in the same manner as Example 5, was 0.13 MPa. This confirmed that the tape had the same flexibility as the film obtained in Example 5. Furthermore, the relative permittivity of the acryl foam structure bonding tape, when measured in the same manner as Example 5, was 3.7.

It can be understood by comparing Example 5 to Comparative Example 1 that the actuator obtained in Example 5 not only has a significantly greater amount of displacement, but also a higher rate of change in the amount of displacement even when a low voltage is applied as shown in Figure **4**, despite the hardness of the film used in the actuator being high.

It can be understood by comparing Example 6 to Comparative Example 1 that the actuator obtained in Example

6 not only has a significantly greater amount of displacement, but also a significantly higher rate of change in the amount of displacement even when a low voltage is applied as shown in Figure **4.**

It can be understood by comparing Example 7 to Comparative Example 1 that the actuator obtained in Example 7 not only has a significantly greater amount of displacement, but also a higher rate of change in the amount of displacement even when a low voltage is applied, as shown in Figure **4.**

In addition to the polymers of Examples 5 to 7, a film was produced for the IAA, AIB, and PhSEA described in Table 1 in the same manner as Example 5 in order to study the properties as an actuator.

The resulting film was biaxially oriented at a draw ratio of 4-fold in the longitudinal and transverse directions, and the film was fixed to a mold in an elongated state.

A conductive paste (carbon grease) was then applied to the center portion of both sides of the film to form an electrode (diameter: 9 mm, thickness: 100 μm) to obtain an actuator.

A voltage was applied to the electrodes of the resulting actuator. The amount of displacement of the actuator when the voltage was increased and a rate of change thereof were studied based on the method described above. The results are shown in Figure **4.** As shown in Figure **4**, the relationship between the amount of displacement and applied voltage was, in order from the left, Example 6, PhSEA, AIB, Example 5, Example 7, IAA, and Comparative Example 1. It can be understood that the monomers described in Table 1 besides Examples 5 to 7 are also driven at a lower voltage than Comparative Example 1 in the same manner as Examples 5 to 7.

The responsiveness was studied for Examples 5 to 7 and Comparative Example 1. The results are shown in Figure **5.** It can be understood that the methoxyethyl acrylate in Example 6 is characterized by good responsiveness (sharp rise in displacement).

(Example 8)

The (meth)acrylic polymer of Example 5 was produced under the following light exposure conditions to study the tensile strength.

[Table 3]

| | Light exposure conditions | | | | | | Tensile strength | | |
|---|---|---|---|---|---|---|---|---|---|
| Lot 1 | Light exposure distance (cm) | Light exposure intensity [mW/cm2] | Light exposure time (hr) | TPO (wt%) | Residual monomer% | Molecular weight | Modulus of elasticity [Mpa | Maximum point [Mpa | Percent elongation [%] |
| A | 15 | 2.15 | 1 | 0.125 | 0.18 | 1281000 | 0.251 | 0.235 | 6025< |
| B | 15 | 2.15 | 3 | 0.125 | 0.05 | 1267000 | 0.29 | 0.228 | 6025< |
| C | 15 | 2.15 | 2 | 0.125 | 0.15 | 1112000 | 0.323 | 0.243 | 6025< |
| D | 30 | 1 | 2 | 0.125 | 0.09 | 1399000 | 0.327 | 0.239 | 6025< |
| E | 45 | 0.56 | 2 | 0.125 | 0.19 | 1620000 | 0.332 | 0.28 | 6025< |
| F | 90 | 0.098 | 2 | 0.25 | - | 2049000 | 0.354 | 0.283 | 6025< |
| G | 90 | 0.098 | 3 | 0.125 | 0.04 | Unmeasured | 0.358 | 0.363 | 6025< |
| H | 90 | 0.098 | 1 | 0.125 | 0.31 | Unmeasured | 0.362 | 0.335 | 6025< |
| I | 120 | 0.028 | 2 | 0.125 | - | 2970000 | 0.389 | 0.377 | 6025< |
| J | 90 | 0.098 | 2 | 0.125 | 0.08 | 2728000 | 0.396 | 0.375 | 6025< |
| K | 90 | 0.098 | 2 | 0.0625 | - | 4250000 | 0.41 | 0.554 | 6025< |

It can be understood that the polymers produced by irradiation of exposed light with low illuminance are polymers with high percent elongation.

(Example 9A)

Experiments were also conducted for other monomers. A. monomer component comprising a polymerization initiator was obtained by mixing 12.00 g of each monomer and 2,4,6-trimethylbenzoyl diphenylphosphine oxide [BASF, product name: Irgacure TPO] as a polymerization initiator so that the amount thereof was 0.018 mol% to each monomer.

A (meth)acrylic elastomer was obtained by injecting the resulting monomer component into a transparent glass mold with a release film (vertical: 100 mm, horizontal: 100 mm, depth: 0.5 mm), and then irradiating an ultraviolet ray on the monomer components so that the illuminances were all 0.56 mW/$cm^2$ to subject the monomer component to bulk polymerization. The irradiation time was 2 hours. The following Table 4 shows the measurement results.

[Table 4]

| | EA | Nonanol | IAA | AIB |
|---|---|---|---|---|
| Structure | Straight alkyl | Branched alkyl | | |
| Maximum point (Mpa) | | 0.042 | 0.111 | 1.434 |
| Percent elongation (%) | 6002 | 392.6 | 5858.2 | 3703.8 |
| Young's modulus | 0.391 | 0.03 | 0.141 | 0.186 |

| | HEA | HPA | 4HBA | 6HHA | 4HBAGE | ALHA |
|---|---|---|---|---|---|---|
| Structure | Hydroxyl group | | | | | |
| Maximum point (Mpa) | 1.105 | 1.052 | 0.515 | 0.218 | 0.146 | 1.174 |
| Percent elongation (%) | 872.7 | 1568.9 | 382.2 | 95.9 | 99.9 | 12.1 |
| Young's modulus | 0.249 | 0.18 | 0.215 | 0.289 | 0.161 | 11.939 |

| | 2MTA | MTG | OXE10 | THFA | MEDOL10 | CHDOL | V#200 |
|---|---|---|---|---|---|---|---|
| Structure | Chain-like ether | | Cyclical ether | | | | |
| Maximum point (Mpa) | 0.824 | 0.117 | 1.7 | 1.122 | 1.308 | 1.844 | 2.714 |
| Percent elongation (%) | 4266.8 | 265.7 | 1868.1 | 2528.9 | 5027.2 | 1070.2 | 1183.9 |
| Young's modulus | 0.124 | 0.05 | 0.211 | 0.085 | 0.052 | 4.918 | 3.641 |

| | V#3F | V#8F | V#192 | M113 | PhSEA | BZA | V#315 | FA301 | SA |
|---|---|---|---|---|---|---|---|---|---|
| Structure | Fluorine | | Ether benzene based | | | | | | Carboxylic acid |
| Maximum point (Mpa) | 0.882 | 0.022 | 1.002 | 0.139 | 0.84 | 0.586 | 0.316 | 0.783 | 0.57 |
| Percent elongation (%) | 1605.6 | 259.7 | 1951.4 | 155.8 | 3975.5 | 1518.9 | 513.9 | 513.9 | 210.5 |
| Young's modulus | 0.157 | 0.012 | 0.108 | 0.096 | 0.093 | 0.212 | 0.065 | 2.303 | 0.383 |

The abbreviations are shown hereinafter.

EA = Ethyl acrylate
Nonanol = Nonyl acrylate
IAA = Isoamyl acrylate
AIB = Isobutyl acrylate

HEA = 2-hydroxyethyl acrylate
HPA = Hydroxypropyl acrylate
4HBA = 4-hydroxybutyl acrylate
6HHA = 6-hydroxyhexyl acrylate
4HBAGE = 4-hydroxybutyl acrylate glycidyl ether
ALHA = 3-allyloxy-1hydroxypropyl-2-acrylate
2MTA = Methoxyethyl acrylate
MTG = Methoxytriethylene glycol acrylate
OXE10 = (3-ethyloxetane-3-yl)methylacrylate
THFA = Tetrahydrofurfuryl acrylate
MEDOL10 = (2-methyl-2-ethyl-1,3-dioxolane-4-yl)methyl acrylate
CHDOL = 4-acryloyloxymethyl-2-cyclohexyl-1,3-dioxolane
V#200 = Cyclic trimethylolpropane formal acrylate
V#3F = 2,2,2-trifluoroethyl acrylate
V#8F = 1H,1H,5H-octafluoropentyl acrylate
V#192 = Phenoxyethyl acrylate
M113 = Nonylphenoxypolyethylene glycol acrylate
PhSEA = Phenylthioethyl acrylate
BZA = Benzyl acrylate
V#315 = Paracumyl phenoxyethylene glycol acrylate
FA301 = Biphenyloxy ethyl acrylate
SA = Mono(2-acryloyloxyethyl) succinate

When the relative permittivity of these polymers was measured, the relative permittivity was within the scope of the invention.

(Example 9B)

Polymers with the following width, length, and thickness were produced in the same manner as Example 9A by using 2MTA, V#174, V#MTG, and HABEI. The following Table 5 shows the results of measurement.

[Table 5]

| | 2MTA | V#174 | MTG | HABEI |
|---|---|---|---|---|
| **Width (mm)** | 2 | 2 | 2 | 2 |
| **Length (mm)** | 12 | 12 | 12 | 12 |
| **Thickness (mm)** | 0.50 | 0.47 | 0.41 | 0.47 |
| **Maximum point (Mpa)** | 0.82 | 0.24 | 0.12 | 3.52 |
| **Percent elongation (%)** | 4267 | 906 | 266 | 1107 |
| **Young's modulus** | 0.14 | 0.06 | 0.05 | 0.35 |

In this regard, the abbreviations are shown below.

2MTA = Methoxyethyl acrylate
V#174 = Methoxydiethylene glycol acrylate
MTG = Methoxytriethylene glycol acrylate
HABEI = 2-((butylamino)carbonyl)oxy)ethylacryalte.

When the relative permittivity of these polymers was measured, the relative permittivity was within the scope of the invention.

As disclosed above, the present invention is exemplified by the use of its preferred embodiments. However, it is understood that the scope of the present invention should be interpreted based solely on the Claims. The present application claims priority to Japanese Patent Application No. 2017-72422 (filed on March 31, 2017). The entire content thereof is incorporated herein by reference. It is also understood that any patent, any patent application, and any other references cited herein should be incorporated herein by reference in the same manner as the contents are specifically

described herein.

[Industrial Applicability]

Polymers manufactured by the present invention are polymers (e.g., elastomers) with a desired strain that can be used in an electronic material, a medical material, a healthcare material, a life science material, a robot material, or the like.

Since the (meth)acrylic polymer (e.g., elastomer) of the invention has a large amount of displacement with a low applied voltage, it is useful in (meth)acrylic dielectric materials. The (meth)acrylic dielectric materials are expected to be used in, for example, an actuator, sensor used in an industrial robot or the like, power generating element, speaker, microphone, noise canceller, transducer, artificial muscle, small pump, medical instrument, or the like.

[Reference Signs List]

| | |
|---|---|
| 1 | Actuator |
| 2 | Film consisting of (meth)acrylic dielectric material |
| **3a** | Electrode |
| **3b** | Electrode |
| **4a** | Terminal |
| **4b** | Terminal |
| **5a** | Conductive wire |
| **5b** | Conductive wire |
| **6** | Power source |
| **7** | Marker |
| **8** | Displacement gauge |

## Claims

**1.** A method of manufacturing a polymer with a desired strain, comprising:

irradiating an ultraviolet ray with an illuminance that results in the desired strain onto, and polymerizing, one or more starting material monomers; and
optionally measuring a strain of generated polymers and selecting a polymer with the desired strain.

**2.** The method of claim 1, wherein the starting material monomer is a (meth)acryl monomer.

**3.** The method of claim 1, wherein the starting material monomer is a urethane (meth)acryl monomer.

**4.** The method of claim 2, wherein the illuminance is 10 $mW/cm^2$ or less.

**5.** The method of claim 3, wherein the illuminance is 140 $mW/cm^2$ or less.

**6.** A method for determining an illuminance of an ultraviolet ray for manufacturing a polymer with a given strain, comprising:

1) providing a starting material monomer, which is a raw material of the polymer;
2) irradiating an ultraviolet ray with a specific illuminance onto, and polymerizing, the starting material monomer to generate the polymer;
3) measuring a strain of the generated polymer;
4) optionally repeating steps 1) to 3); and
5) calculating an illuminance resulting in the desired strain based on a measurement value obtained in 3) and 4).

**7.** The method of claim 6, comprising measuring a loss tangent ($\tan\delta$) of the polymer.

**8.** The method of claim 7, wherein an illuminance of the irradiated ultraviolet ray is determined by:

i) irradiating an ultraviolet ray with a certain illuminance onto the starting material and polymerizing the starting material to generate a polymer;
ii) measuring a loss tangent (tanδ) of the generated polymer;
iii) determining whether the measured loss tangent (tanδ) is within a desired range; and

if the loss tangent is not within the desired range, repeating steps i) to iii) with an ultraviolet ray having another illuminance.

**9.** The method of any one of claims 1 to 4, wherein an illuminance of an ultraviolet ray is determined by a relational expression representing a relationship between strains and illuminances, or by the method of any one of claims 6 to 8.

**10.** A (meth)acrylic polymer prepared by irradiating an ultraviolet ray to polymerize a monomer component comprising a (meth)acrylic monomer represented by formula (I) :

[Chemical Formula 1]

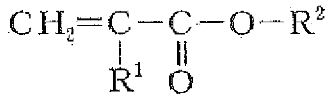

(I)

wherein

$R^1$ is a hydrogen atom or a methyl group, and
$R^2$ is an optionally substituted alkyl group with 1 to 10 carbons or an optionally substituted polyether group with 2 to 20 carbons.

**11.** The (meth)acrylic polymer of claim 10, wherein
$R^1$ is a hydrogen atom or a methyl group, and
$R^2$ represents an alkyl group with 1 to 10 carbons optionally substituted with a hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons, or $-[-(CH_2)_n-O-]_m-R^8$, wherein n is an integer from 1 to 4, m is an integer from 1 to 20, and $R^8$ represents an alkyl group with 1 to 12 carbons, a glycidyl group, an aryl group with 6 to 12 carbons optionally substituted with an alky group with 1 to 10 carbons (the alkyl group with 1 to 10 carbons is optionally substituted with an aryl group with 6 to 12 carbons) and/or an aryl group with 6 to 12 carbons, a monoalkylamino carbonyl group with 1 to 12 carbons of alkyl, a dialkylamino carbonyl group with 1 to 12 carbons of alkyl, or a residue of a divalent carboxylic acid with 2 to 10 carbons.

**12.** The (meth)acrylic polymer of claim 10 or 11, wherein $R^2$ is an alkyl group with 1 to 10 carbons having an alkoxy substituent with 1 to 10 carbons, or a polyether group with 2 to 16 carbons having an alkoxy substituent with 1 to 10 carbons.

**13.** The (meth)acrylic polymer of any one of claims 10 to 12, wherein $R^2$ is an alkoxyalkyl group with 1 to 10 carbons.

**14.** The (meth)acrylic polymer of any one of claims 10 to 13, wherein $R^2$ is $-[-(CH_2)_n-O-]_m-R^8$, and $R^8$ is an alkyl group with 1 to 12 carbons.

**15.** The (meth)acrylic polymer of any one of claims 10 to 14, wherein the illuminance of the ultraviolet ray is 10 $mW/cm^2$ or less when the (meth)acrylic monomer is alkyl acrylate.

**16.** The (meth)acrylic polymer of any one of claims 10 to 15, wherein a loss tangent (tanδ) is 0.15 or less.

**17.** The (meth)acrylic polymer of any one of claims 10 to 16, wherein a weight average molecular weight is 2 million or greater.

**18.** The (meth)acrylic polymer of any one of claims 10 to 17, wherein a Young's modulus is 0.5 Mpa or less.

**19.** The (meth)acrylic polymer of any one of claims 10 to 18, wherein the polymer is an elastomer.

**20.** A (meth)acrylic polymer prepared by irradiating an ultraviolet ray to polymerize a monomer component comprising a cyclic ether group-containing (meth)acrylic monomer represented by formula (II):

[Chemical Formula 2]

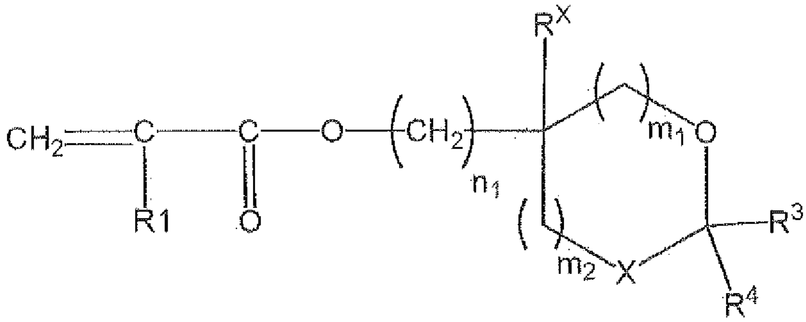

(II)

wherein

$R^1$ is a hydrogen atom or a methyl group,
$R^3$ and $R^4$ are each independently a hydrogen atom or an optionally substituted alkyl group with 1 to 4 carbons, or $R^3$ and $R^4$ form an optionally substituted carbon ring with 3 to 10 carbons together with a carbon atom to which $R^3$ and $R^4$ bind,
$R^x$ is hydrogen or an optionally substituted alkyl group with 1 to 10 carbons,
X is a carbon atom, an oxygen atom, or non-existent,
$n_1$ represents an integer from 1 to 4,
$m_1$ represents an integer from 0 to 1, and
$m_2$ represents an integer from 0 to 1.

**21.** The (meth)acrylic polymer of claim 20, wherein $R^3$ and $R^4$ are each independently a hydrogen atom or an alkyl group with 1 to 4 carbons optionally substituted with alkoxy with 1 to 10 carbons, or $R^3$ and $R^4$ form a carbon ring with 3 to 10 carbons optionally substituted with alkoxy with 1 to 10 carbons together with a carbon atom to which $R^3$ and $R^4$ bind.

**22.** The (meth)acrylic polymer of claim 20 or 21, wherein $R^x$ is hydrogen or an alkyl group with 1 to 10 carbons optionally substituted with alkoxy with 1 to 10 carbons.

**23.** The (meth)acrylic polymer of claim 20, prepared by irradiating an ultraviolet ray to polymerize a monomer component comprising a cyclic ether group-containing (meth)acrylic monomer represented by formula (IIA):

[Chemical Formula 3]

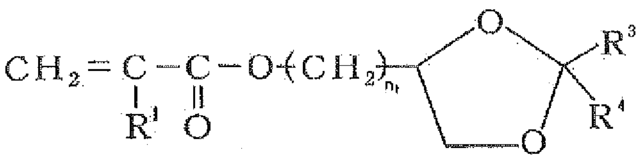

(IIA)

wherein
$R^1$ is a hydrogen atom or a methyl group, $R^3$ and $R^4$ are each independently a hydrogen atom or an alkyl group with 1 to 4 carbons, and $n_1$ represents an integer from 1 to 4.

**24.** The (meth)acrylic polymer of any one of claims 20 to 23, wherein a loss tangent (tanδ) is 0.4 or less.

**25.** The (meth)acrylic polymer of any one of claims 20 to 24, wherein a Young's modulus is 0.5 Mpa or less.

**26.** The (meth)acrylic polymer of any one of claims 20 to 25, wherein the polymer is an elastomer.

**27.** A (meth)acrylic polymer prepared by irradiating an ultraviolet ray to polymerize a monomer component comprising a urethane (meth)acryl monomer obtained by reacting an optionally substituted polyol with a diisocyanate monomer having formula (III):
[Chemical Formula 4]

$$OCN\text{-}H^6\text{-}NCO \qquad (III)$$

wherein $R^6$ represents an optionally substituted divalent aliphatic group, an optionally substituted divalent aromatic group, or an optionally substituted divalent alicyclic group, and then reacting a (meth)acrylate based monomer having a hydroxyl group having formula (IV)

[Chemical Formula 5]

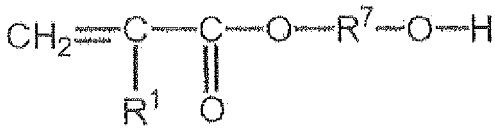

(IV)

wherein $R^1$ is a hydrogen atom or a methyl group, and $R^7$ is an optionally substituted alkylene group with 1 to 10 carbons.

**28.** The (meth)acrylic polymer of claim 27, wherein the polyol is selected from the group consisting of a polyether polyol, a polyester polyol, and a polycarbonate polyol.

**29.** A (meth)acrylic polymer prepared by irradiating an ultraviolet ray to polymerize a monomer component comprising a urethane (meth)acryl monomer represented by formula (V):

[Chemical Formula 6]

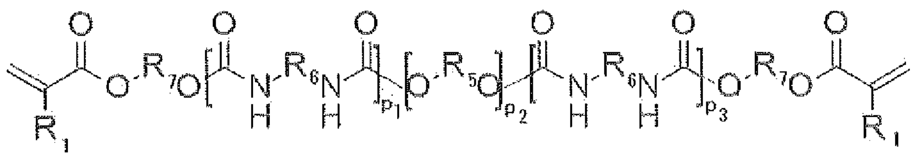

(V)

wherein $R^1$ is a hydrogen atom or a methyl group, $R^5$ is a residue generated by removing two hydroxyl groups from an optionally substituted polyol, $R^6$ represents an optionally substituted divalent aliphatic group, an optionally substituted divalent aromatic group, or an optionally substituted divalent alicyclic group, $R^7$ is an optionally substituted alkylene group with 1 to 10 carbons, and $p_1$, $p_2$, and $p_3$ are each independently an integer from 1 to 10.

**30.** The (meth)acrylic polymer of claim 29, wherein $R^5$ is a residue generated by removing two hydroxyl groups from a polyol selected from the group consisting of a polyether polyol, a polyester polyol, and a polycarbonate polyol.

**31.** The (meth)acrylic polymer of any one of claims 27 to 30, wherein the monomer component further comprises a (meth)acrylic monomer represented by formula (I):

[Chemical Formula 7]

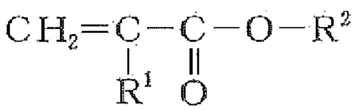

(I)

wherein

$R^1$ is a hydrogen atom or a methyl group, and
$R^2$ is an optionally substituted alkyl group with 1 to 10 carbons or an optionally substituted polyether group with 2 to 20 carbons.

**32.** The (meth)acrylic polymer of claim 31, wherein
$R^1$ is a hydrogen atom or a methyl group, and
$R^2$ represents an alkyl group with 1 to 10 carbons optionally substituted with a hydrogen atom, a silicone group, a hydroxyl group, an allyloxy group, an arylthio group with 6 to 12 carbons, a halogen atom (F, Cl, Br, I), an isocyanate group, a carboxylic acid group, a cyano group, and/or an aryl group with 6 to 12 carbons, or $-[-(CH_2)_n-O-]_m-R^8$, wherein n is an integer from 1 to 4, m is an integer from 1 to 20, and $R^8$ represents an alkyl group with 1 to 12 carbons, a glycidyl group, an aryl group with 6 to 12 carbons optionally substituted with an alky group with 1 to 10 carbons (the alkyl group with 1 to 10 carbons is optionally substituted with an aryl group with 6 to 12 carbons) and/or an aryl group with 6 to 12 carbons, a monoalkylamino carbonyl group with 1 to 12 carbons of alkyl, a dialkylamino carbonyl group with 1 to 12 carbons of alkyl, or a residue of a divalent carboxylic acid with 2 to 10 carbons.

**33.** The (meth)acrylic polymer of claim 31 or 32, wherein $R^2$ is an alkyl group with 1 to 10 carbons having an alkoxy substituent with 1 to 10 carbons, or a polyether group with 2 to 16 carbons having an alkoxy substituent with 1 to 10 carbons.

**34.** The (meth)acrylic polymer of any one of claims 31 to 33, wherein $R^2$ is an alkoxyalkyl group with 1 to 10 carbons.

**35.** The (meth)acrylic polymer of any one of claims 31 to 34, wherein $R^2$ is $-[-(CH_2)_n-O-]_m-R^8$, and $R^8$ is an alkyl group with 1 to 12 carbons.

**36.** The (meth)acrylic polymer of any one of claims 27 to 35, wherein a loss tangent ($\tan\delta$) is 0.2 or less.

**37.** The (meth)acrylic polymer of any one of claims 27 to 36, wherein a Young's modulus is 1.0 Mpa or less.

**38.** The (meth)acrylic polymer of any one of claims 27 to 37, wherein the polymer is an elastomer.

**39.** An electronic material, a medical material, a healthcare material, a life science material, or a robot material **characterized by** comprising the polymer of any one of claims 10 to 38.

FIG.1

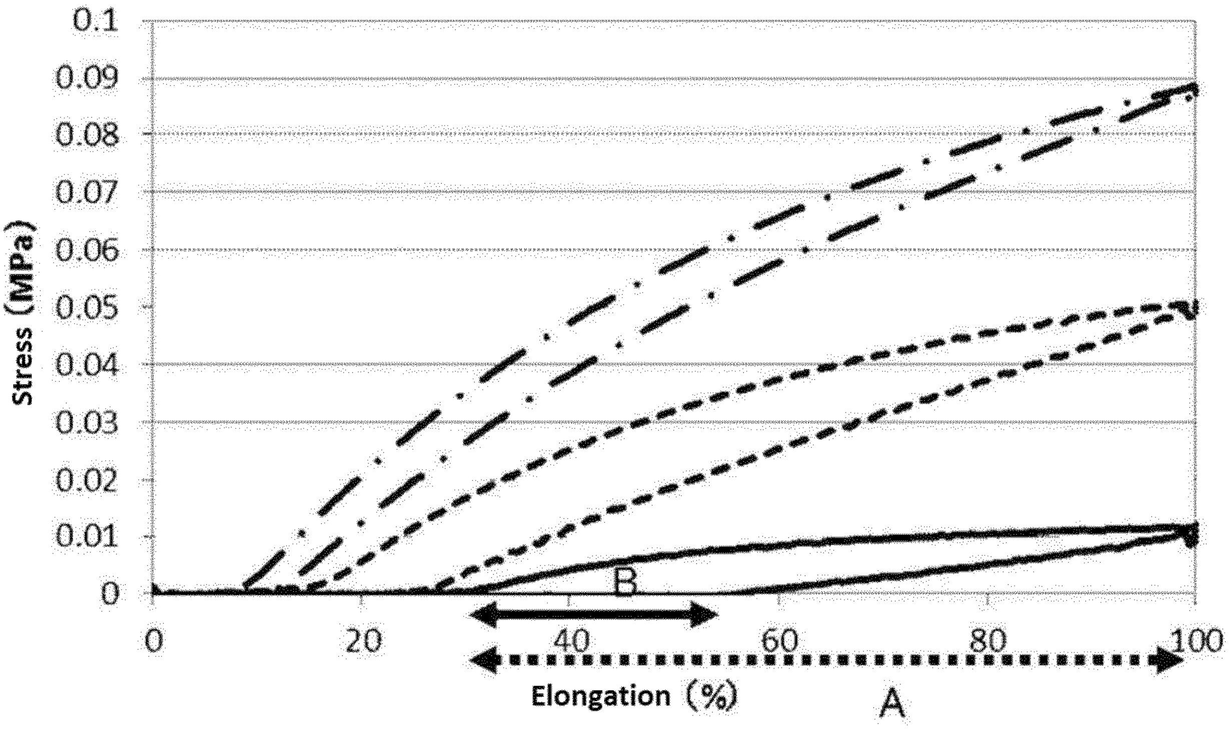
0.1
0.09
0.08
0.07
0.06
0.05
0.04
0.03
0.02
0.01
0
Stress (MPa)
B
0
20
40
60
80
100
Elongation (%)
A

FIG.2

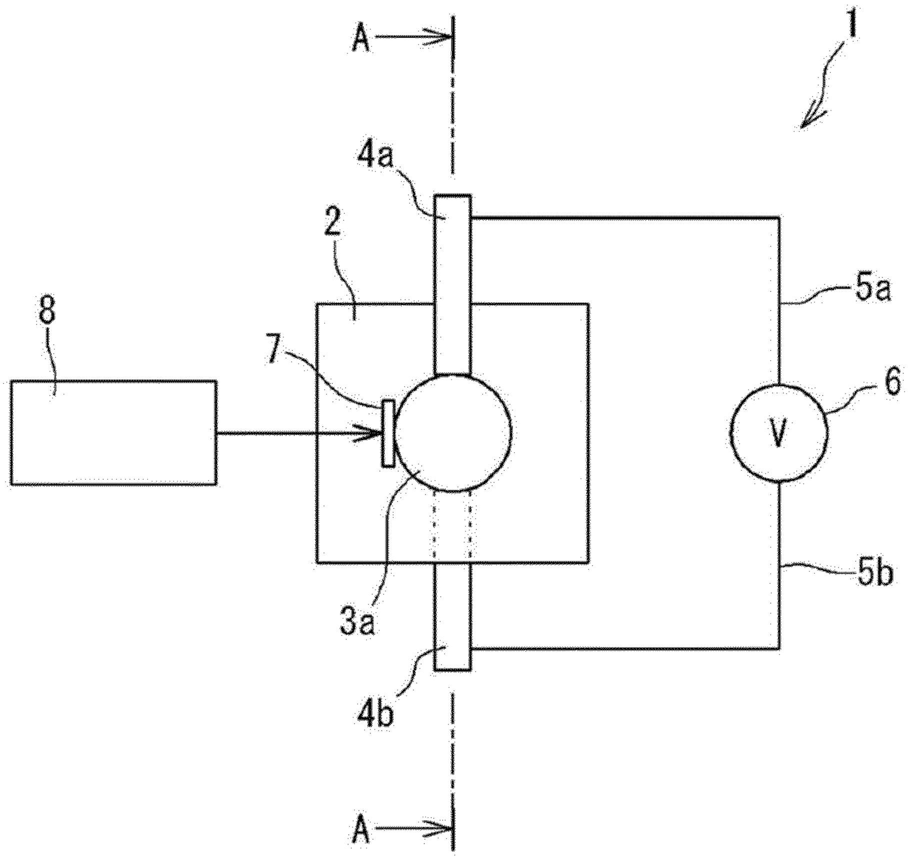
A
1
4a
2
5a
8
7
6
V
3a
5b
4b
A

FIG.3

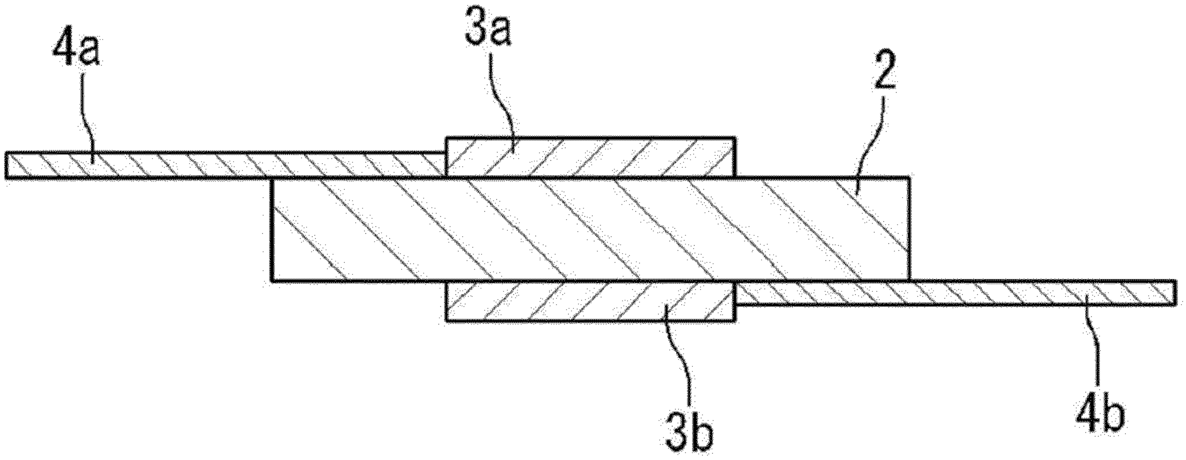
4a
3a
2
3b
4b

FIG.4

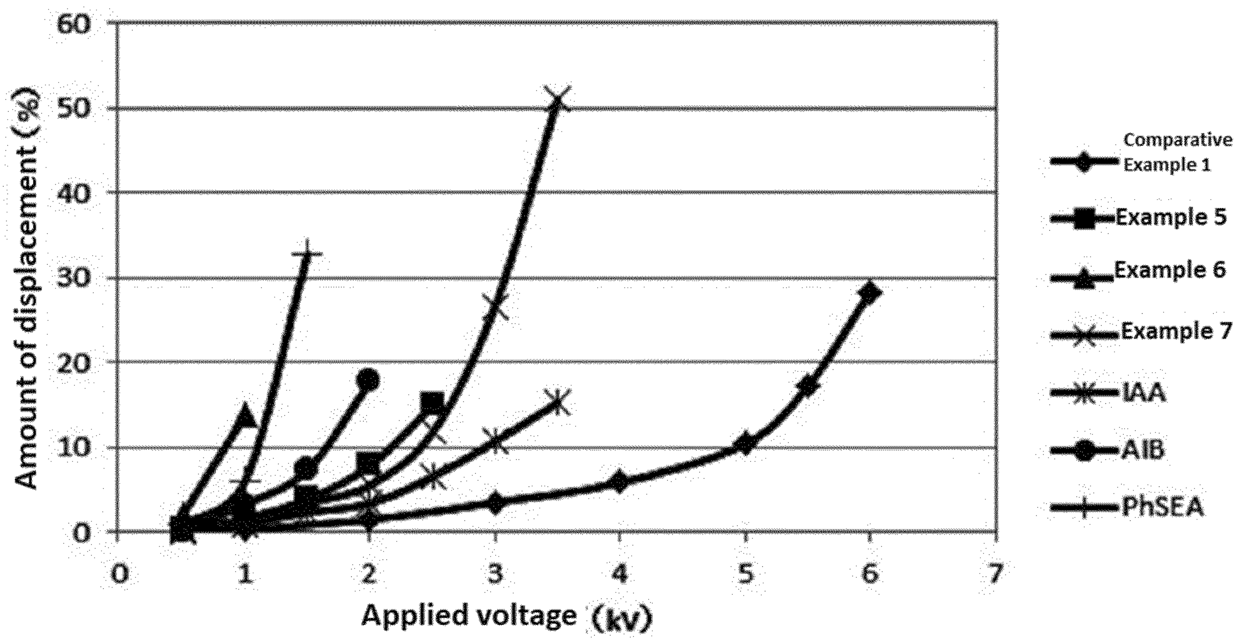
Amount of displacement (%)
60
50
40
30
20
10
0
0
1
2
3
4
5
6
7
Applied voltage (kv)
Comparative Example 1
Example 5
Example 6
Example 7
IAA
AIB
PhSEA

FIG.5

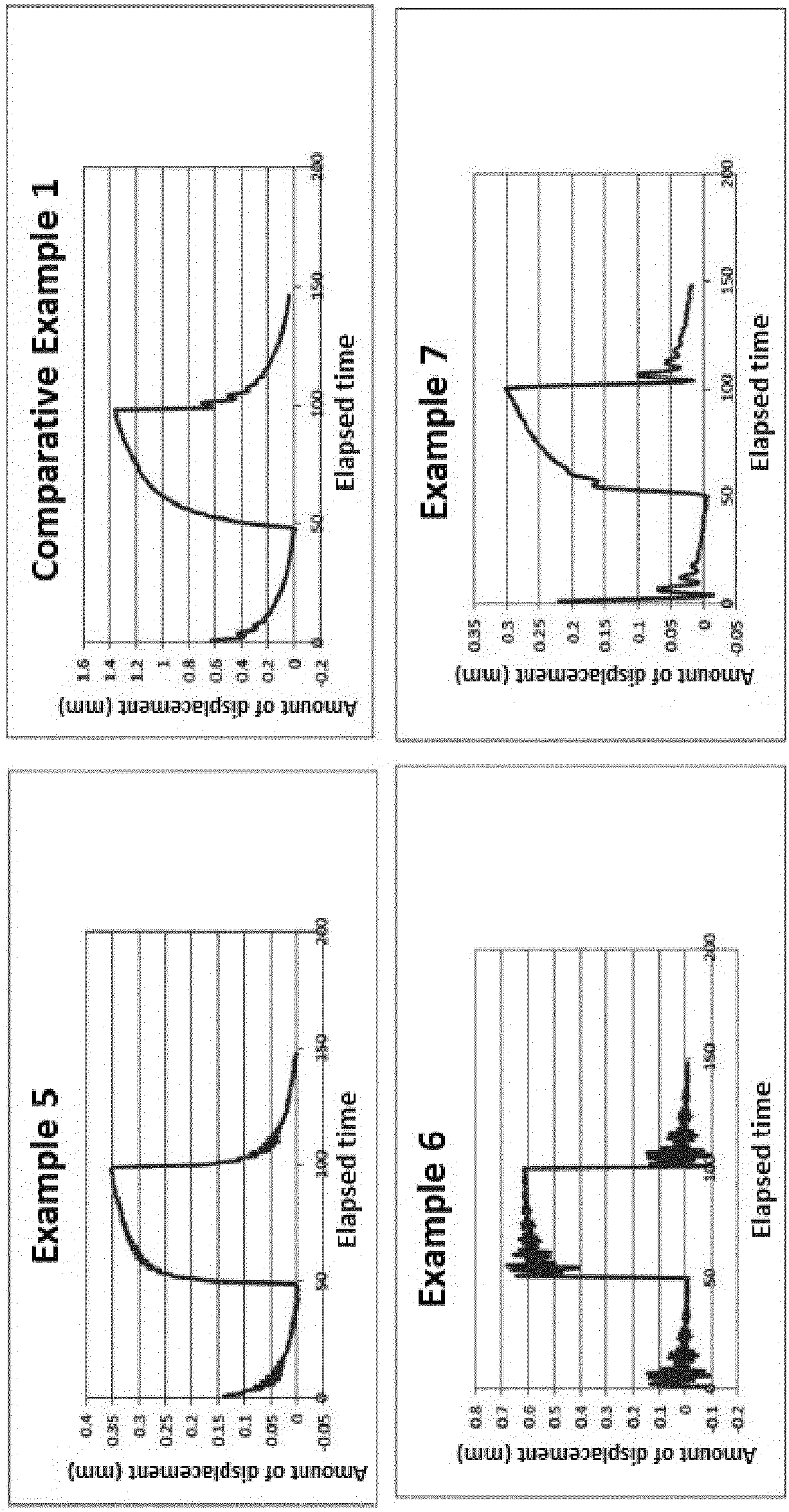
Comparative Example 1
Amount of displacement (mm)
Elapsed time
Example 7
Amount of displacement (mm)
Elapsed time
Example 5
Amount of displacement (mm)
Elapsed time
Example 6
Amount of displacement (mm)
Elapsed time

## INTERNATIONAL SEARCH REPORT

International application No.
PCT/JP2017/023605

A. CLASSIFICATION OF SUBJECT MATTER
*C08F20/00*(2006.01)i, *C08F290/06*(2006.01)i, *G01N19/00*(2006.01)i

According to International Patent Classification (IPC) or to both national classification and IPC

B. FIELDS SEARCHED

Minimum documentation searched (classification system followed by classification symbols)
C08F20/00, C08F290/06, G01N19/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 59-232826 A (Hitachi, Ltd.), 27 December 1984 (27.12.1984), claim 1; page 2, lower left column, line 5 to page 3, lower right column, line 19 (Family: none) | 1-19,27-39<br>20-26 |
| X<br>A | JP 2013-060547 A (Nitto Denko Corp.), 04 April 2013 (04.04.2013), claims 1 to 3; paragraphs [0016] to [0017], [0022], [0040], [0052] to [0068] (Family: none) | 10-22,24-39<br>1-9,23 |
| X<br>A | JP 2004-224841 A (Nippon Shokubai Co., Ltd.), 12 August 2004 (12.08.2004), claim 1; paragraphs [0022] to [0026], [0051] to [0057], [0073], [0079] to [0088] (Family: none) | 20-23<br>1-19,24-39 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 August 2017 (21.08.17) | 29 August 2017 (29.08.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/023605

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-037920 A (Victor Company of Japan, Ltd.), 12 February 1999 (12.02.1999), claims 1 to 7; paragraphs [0005], [0015] to [0019] (Family: none) | 1-39 |
| A | JP 2016-517367 A (3D Systems, Inc.), 16 June 2016 (16.06.2016), paragraph [0010] & US 2014/0275317 A1 paragraph [0009] | 1-39 |

Form PCT/ISA/210 (continuation of second sheet) (January 2015)

**INTERNATIONAL SEARCH REPORT**

International application No.
PCT/JP2017/023605

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

INTERNATIONAL SEARCH REPORT

International application No. PCT/JP2017/023605

Continuation of Box No.III of continuation of first sheet(2)

Document 1: JP 59-232826 A (Hitachi, Ltd.), 27 December 1984 (27.12.1984), claim 1; page 2, lower left column, line 5 to page 3, lower right column, line 19 (Family: none)

(Invention 1) claims 1-5 and 9

Document 1 discloses a method for manufacturing a polymer , said method comprising irradiating a specific starting monomer with ultraviolet light having a preset illumination intensity that is calculated by a specific method so as to generate a desired strain. Thus, claims 1-5 and 9 cannot be considered to be novel in the light of document 1 and, therefore, do not have a special technical feature.

Consequently, claims 1-5 and 9 are classified into Invention 1.

(Invention 2) claims 6-8

It is not considered that claims 6-8 have a technical feature same as or corresponding to claim 9 (the part referring to claim 4 which refers to claim 2) classified into Invention 1.

Further, claims 6-8 are not dependent on claim 1.

In addition, claims 6-8 have no relationship such that these claims are substantially same as or equivalent to any claim classified into Invention 1.

Consequently, claims 6-8 cannot be classified into Invention 1.

Accordingly, claims 6-8 are classified into Invention 2.

(Invention 3) Claims 10-19 and the part of claim 39 referring to claims 10-19

It is not considered that claims 10-19 and 39 (the part referring to claims 10-19) have a technical feature same as or corresponding to claim 9 (the part referring to claim 4 which refers to claim 2) classified into Invention 1.

Further, claims 10-19 and 39 (the part referring to claims 10-19) are not dependent on claim 1.

In addition, claims 10-19 and 39 (the part referring to claims 10-19) have no relationship such that these claims are substantially same as or equivalent to any claim classified into Invention 1.

Consequently, claims 10-19 and 39 (the part referring to claims 10-19) cannot be classified into Invention 1.

Accordingly, claims 10-19 and 39 (the part referring to claims 10-19) are classified into Invention 3.

(Invention 4) claims 20-26 and the part of claim 39 referring to claims 20-26

It is not considered that claims 20-26 and 39 (the part referring to claims 20-26) have a technical feature same as or corresponding to claim 9 (the part referring to claim 4 which refers to claim 2) classified into Invention 1.

Further, claims 20-26 and 39 (the part referring to claims 20-26) are not dependent on claim 1.

In addition, claims 20-26 and 39 (the part referring to claims 20-26) have no relationship such that these claims are substantially same as or equivalent to any claim classified into Invention 1.

Consequently, claims 20-26 and 39 (the part referring to claims 20-26) cannot be classified into Invention 1.

Accordingly, claims 20-26 and 39 (the part referring to claims 20-26) are classified into Invention 4.

(Invention 5) claims 27-38 and the part of claim 39 referring to claims 27-38

(Continued to next extra sheet)

INTERNATIONAL SEARCH REPORT

International application No.
PCT/JP2017/023605

It is not considered that claims 27-38 and 39 (the part referring to claims 27-38) have a technical feature same as or corresponding to claim 9 (the part referring to claim 4 which refers to claim 2) classified into Invention 1.

Further, claims 27-38 and 39 (the part referring to claims 27-38) are not dependent on claim 1.

In addition, claims 27-38 and 39 (the part referring to claims 27-38) have no relationship such that these claims are substantially same as or equivalent to any claim classified into Invention 1.

Consequently, claims 27-38 and 39 (the part referring to claims 27-38) cannot be classified into Invention 1.

Accordingly, claims 27-38 and 39 (the part referring to claims 27-38) are classified into Invention 5.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008239670 A
- JP 2007131812 A
- JP 2010209198 A
- JP 2017072422 A